# EUROPEAN PATENT APPLICATION

(11) **EP 4 797 636 A1**
(43) Date of publication of application: **26.08.2026**
(21) Application number: 24890815.4
(22) Date of filing: 15.11.2024
(51) Int. Cl.: H04L 27/26

(54) **COMMUNICATION METHOD AND RELATED APPARATUS**

(30) Priority: 17.11.2023 CN 202311549303; 30.11.2023 CN 202311637591
(71) Applicant: HUAWEI TECHNOLOGIES CO., LTD., Shenzhen 518129 (CN)
(72) Inventor: WU, Fangzhou, Shenzhen, Guangdong 518129 (CN); DONG, Pengpeng, Shenzhen, Guangdong 518129 (CN); ZHU, Huiying, Shenzhen, Guangdong 518129 (CN)
(74) Representative: Goddar, Heinz J.
(86) International application number: PCT/CN2024/132313
(87) International publication number: WO 2025/103463

(57) **Abstract**

A communication method and related apparatus are provided. In this method, after obtaining a first symbol sequence to be transmitted, a baseband chip performs modulation based on a third symbol sequence that includes an extended symbol and symbols to be transmitted in the first symbol sequence, thereby obtaining (N+M) modulation symbols. These (N+M) modulation symbols are then mapped to resource elements (REs) to generate a second symbol sequence. This second symbol sequence not only exhibits phase continuity but also has a phase difference between the first and last symbols that is an integer multiple of 2 π. The OFDM baseband signal generated from this second symbol sequence has a phase-continuous relationship between the cyclic prefix (CP) and the signal body, with no phase jumps. By further employing phase or frequency modulation methods, such as CPM or LFM, a waveform with continuous phase and constant amplitude can be obtained, thereby achieving a constant envelope waveform. Applying this method to communication devices, such as IoT devices, can simplify the transmitter structure, reduce transmission power consumption, and extend the standby time.

## Description

This application claims priority to Chinese Patent Application No. 202311549303.4, filed with the State Intellectual Property Office of China on November 17, 2023, and entitled "Communication Method and Related Apparatus," and to Chinese Patent Application No. 202311637591.9, filed with the State Intellectual Property Office of China on November 30, 2023, and entitled "Communication Method and Related Apparatus," which are incorporated herein by reference in their entirety.

### Technical Field

This application relates to the field of wireless communication, and in particular, to a communication method and a related apparatus.

### Background

With the development of wireless networks and evolution of service requirements, the form of terminal devices gradually becomes diversified. Some terminal devices, such as Internet of Things (IoT) nodes, have low costs and small sizes, and usually do not carry large-capacity batteries, and therefore face a problem of short standby life.

One possible solution to improve the standby life of these terminal devices is to reduce the transmit power consumption. There is already a solution proposed, where an upconversion (upconversion) is directly performed on a baseband signal to save power consumption caused by a frequency mixing operation, and a non-linear power amplifier (power amplifier, PA) is used to replace a linear PA to further reduce the transmit power consumption. However, this solution has strict requirements on a waveform, that is, a constant envelope waveform with a peak to average power ratio (PAPR) of 0 decibels (dB) needs to be used for data transmission.

Current cellular networks employ orthogonal frequency division multiplexing (OFDM) technology. To avoid interference between OFDM symbols, a guard period is typically inserted between OFDM symbols in the form of a cyclic prefix (CP). The CP is usually formed by copying the signal at the end of an OFDM symbol to the beginning, which cannot guarantee phase continuity between the CP and the subsequent signal, and thus cannot ensure a constant waveform envelope. Therefore, how to generate a phase-continuous waveform based on OFDM technology has become a technical problem that urgently needs to be solved.

### SUMMARY

This application provides a communication method and related apparatus, aiming to combine phase or frequency modulation technology with OFDM technology to obtain a phase-continuous waveform, thereby facilitating the acquisition of a constant envelope waveform, and subsequently applying it to communication devices to reduce transmission power consumption.

According to a first aspect, a communication method is provided, which may be applied to a first communication apparatus. The first communication apparatus may be a communication device (such as a terminal device or a network device), or may be a component (such as a baseband processor, a chip system, a processor, or the like) for the communication device, or may be a logical module or software that can implement all or some of the functions of the communication device, or the like. This application imposes no limitation thereto.

For example, the method includes: obtaining a first symbol sequence, where the first symbol sequence includes N to-be-transmitted symbols, and N is a positive integer; obtaining a second symbol sequence based on the first symbol sequence, where a symbol in the second symbol sequence is obtained by mapping (N+M) modulation symbols to resource elements (resource element, RE), the (N+M) modulation symbols are obtained by modulating a third symbol sequence, the third symbol sequence includes the N to-be-transmitted symbols from the first symbol sequence and M extension symbols, the M extension symbols ensure that the (N+M) modulation symbols obtained through the modulation have continuous phases, and the phase difference between the phase at the start position and the phase at the end position is an integer multiple of 2π, where M is an integer greater than or equal to zero; generating a first OFDM baseband signal based on the second symbol sequence, where a time domain resource of the first OFDM baseband signal is an OFDM symbol.

The first symbol sequence may be a sequence of N to-be-transmitted symbols obtained through modulation. Through modulation, a binary bit "0" or "1" may be mapped to a symbol. Modulation used in this application may include but is not limited to modulation manners such as pulse amplitude modulation (pulse amplitude modulation, PAM), π/2 binary phase shift keying (binary phase shift keying, BPSK), BPSK, quadrature phase shift keying (quadrature phase shift keying, QPSK), and the like that can implement one-dimensional modulation. One-dimensional modulation may be a modulation manner in which modulation is performed in one of three dimensions: amplitude, phase, or frequency. Through one-dimensional modulation, a value in a certain dimension on a complex plane may be obtained as a result output, or an output of a real number or a pure imaginary number may be obtained.

The third symbol sequence may include N to-be-transmitted symbols in the first symbol sequence and M extension symbols. It should be understood that the extension symbol is named for ease of distinguishing from the N to-be-transmitted symbols, and this should not constitute any limitation on this application.

By adding M extension symbols to the first symbol sequence, without changing the N to-be-transmitted symbols and their sequence, the phase of a modulated symbol sequence (which is denoted as a fourth symbol sequence for ease of differentiation and description) obtained after modulation on the third symbol sequence can be made continuous, and the difference between a phase at a start position and a phase at an end position is an integer multiple of 2π, by designing the M extension symbols. Due to the periodicity of the trigonometric function, when the fourth symbol sequence satisfies that a difference between a phase of a start position and a phase of an end position is an integer multiple of 2π, the values of a sine or cosine function of the fourth symbol sequence are equal, that is, the fourth symbol sequence is also phase continuous at the start position and the end position.

The phase continuity of the fourth symbol sequence may be implemented by using some known phase or frequency modulation manners. A difference between a phase at a start position and a phase at an end position of the fourth symbol sequence is an integer multiple of 2π, and this may be implemented by designing the M extension symbols based on these phase or frequency modulation manners.

It can be understood that the symbols in the fourth symbol sequence are (N+M) modulation symbols, the start position of the fourth symbol sequence is the start position of the first symbol of the (N+M) modulation symbols included in the fourth symbol sequence, and the end position of the fourth symbol sequence is the end position of the last symbol of the (N+M) modulation symbols included in the fourth symbol sequence. The difference between the phase of the start position and the phase of the end position of the fourth symbol sequence is the phase difference between the first and last symbols of the (N+M) modulation symbols, which is also the phase difference between the first and last symbols of the (N+M) modulation symbols, or it can be said that the (N+M) modulation symbols satisfy self-cyclic phase (phase recursion) between the first and last symbols, or in other words, the fourth symbol sequence satisfies self-cyclic phase between the first and last symbols.

By mapping the (N+M) modulation symbols in the fourth symbol sequence to REs, a second symbol sequence can be obtained. Therefore, the second symbol sequence is a sequence of modulation symbols mapped to REs (or, in other words, mapped to subcarriers), or the second symbol sequence is obtained by mapping the (N+M) modulation symbols in the fourth symbol sequence to REs. Since RE mapping specifically refers to frequency domain mapping, the (N+M) modulation symbols in the fourth symbol sequence can be converted to the frequency domain to complete the RE mapping. Therefore, the second symbol sequence can be considered as a representation of the (N+M) modulation symbols in the fourth symbol sequence in the frequency domain. Therefore, the fourth symbol sequence and the second symbol sequence are named merely to distinguish symbol sequences in the time domain and frequency domain. The (N+M) modulation symbols in the fourth symbol sequence have continuous phases, and the phase difference between the start position and the end position is an integer multiple of 2π. In other words, the second symbol sequence has continuous phases, and the phase difference between the start position and the end position is an integer multiple of 2π, or in other words, the second symbol sequence satisfies self-cyclic phase between the first and last symbols.

It may be understood that the OFDM baseband signal includes two parts: a body and a CP of the baseband signal, and generation of the OFDM baseband signal includes generation of the signal body and generation of the CP. The first OFDM baseband signal in this application is generated based on the second symbol sequence. The signal body of the first OFDM baseband signal may be generated based on the second symbol sequence, and the CP of the first OFDM baseband signal may be obtained by copying some symbols (for example, K₁ modulation symbols) at the end of the signal body to a header of the CP. The K₁ modulation symbols are corresponding to the K₁ modulation symbols at the end of the foregoing (N+M) modulation symbols. Therefore, the K₁ modulation symbols may also be referred to as: The CP of the first OFDM baseband signal is generated based on the K₁ modulation symbols at the end of the (N+M) modulation symbols. A person skilled in the art may know that the time domain resource of the CP is located before the OFDM symbol of the signal body and corresponding to the CP length, and the frequency domain resource of the CP is the same as the subcarrier to which the signal body is mapped. In other words, the K₁ modulation symbols corresponding to the CP in this application do not participate in RE mapping. In other words, the second symbol sequence does not include the K₁ symbols used to generate the CP.

Since the second symbol sequence satisfies the self-cyclic phase between the first and last symbols, the signal body of the first OFDM baseband signal generated based on the second symbol sequence also satisfies the self-cyclic phase between the first and last symbols. By copying some symbols from the end of the signal body to the beginning, a CP of the first OFDM baseband signal is obtained, where the CP and the signal body of the first OFDM baseband signal have continuous phases. Therefore, the difference between the phase at the start position and the phase at the end position of the (N+M) modulation symbols is an integer multiple of 2π, which can be considered as a constraint condition for determining the M extension symbols, that is, a constraint condition for determining the third symbol sequence.

On the contrary, if no extension symbol is added to the first symbol sequence, the object of modulation is the first symbol sequence. If the first symbol sequence is directly modulated, and then RE mapping and an OFDM baseband signal are generated based on the obtained modulated symbol sequence, the signal body of the obtained OFDM baseband signal may not satisfy the self-cyclic phase between the first and last symbols. Therefore, there may be a phase jump between the signal body and the CP, that is, the OFDM baseband signal may have discontinuous phases.

It should be noted that in some cases, the symbol sequence obtained after modulation of the first symbol sequence itself already satisfies phase continuity and self-cyclic phase between the first and last symbols. In this case, there is no need to additionally add symbols to the first symbol sequence, that is, M may be zero, and the third symbol sequence is the same as the first symbol sequence. Alternatively, symbols may be additionally added to the first symbol sequence, so that the second symbol sequence obtained after modulation of the third symbol sequence satisfies phase continuity and self-cyclic phase between the first and last symbols, that is, M is greater than zero, and the third symbol sequence is different from the first symbol sequence.

Based on the above technical solution, the third symbol sequence is obtained by extending the first symbol sequence, and then modulation and RE mapping are performed based on the third symbol sequence to obtain the second symbol sequence. The second symbol sequence obtained in this way can simultaneously satisfy the following conditions: phase continuity and self-cyclic phase between the first and last symbols. Therefore, the signal body of the first OFDM baseband signal generated based on this second symbol sequence and the CP between them also satisfy phase continuity. Based on this, if the modulation technology used is a modulation technology capable of maintaining a constant amplitude, a waveform with continuous phase and constant envelope can be obtained. In this way, a solution can be implemented where phase or frequency modulation technology is combined with OFDM technology to obtain a waveform with a constant envelope. Since the constant envelope waveform meets the requirements of direct frequency conversion and nonlinear power amplification for waveforms, this allows the communications device to use some more power-efficient methods for signal transmission. Moreover, this can further improve the standby life of the communications device (especially for small-sized IoT nodes without large-capacity batteries).

In the following, for ease of distinguishing from the CP of another OFDM baseband signal, the CP of the first OFDM baseband signal is denoted as a first CP, and a sequence of modulation symbols used to generate the first CP is denoted as a first CP sequence.

With reference to the first aspect, in some possible implementations of the first aspect, the modulation includes continuous phase modulation (continuous phase modulation, CPM) or linear frequency modulation (linear frequency modulation, LFM).

Among them, CPM is a type of phase modulation, and LFM is a type of frequency modulation. CPM and LFM are modulation schemes for transmitting information by changing the phase or frequency of a carrier, in other words, the amplitude of the carrier signal does not carry information. Therefore, both CPM and LFM are modulation schemes that can maintain constant amplitude and continuous phase.

In the solution provided in this application, the third symbol sequence is modulated by using CPM or LFM, so that a phase of the second symbol sequence is continuous, thereby making a phase of an signal body of the first OFDM baseband signal continuous. In addition, by designing the third symbol sequence, the second symbol sequence is made to meet a self-cyclic phase of a first and last symbol, thereby making a phase of the CP of the first OFDM baseband signal continuous with a phase of the signal body. In this way, a constant envelope waveform with a constant amplitude and a continuous phase can be obtained.

It should be noted that various modulation technologies such as minimum shift keying (minimum shift keying, MSK), Gaussian minimum shift keying (Gaussian minimum shift keying, GMSK), and continuous phase frequency shift keying (continuous phase frequency shift keying, CP-FSK) all originate from CPM. Therefore, these modulation technologies may all be considered as a type of CPM, and should fall within the protection scope of this application.

It should be understood that CPM and LFM are two possible modulation manners, and should not constitute any limitation on this application. A person skilled in the art of this application may also modulate the third symbol sequence based on another phase or frequency modulation manner based on the same concept, to obtain a waveform with a continuous phase and a constant amplitude.

With reference to the first aspect, in some possible implementations of the first aspect, M is a positive integer, and the positions of the M extension symbols in the third symbol sequence are: before the N to-be-transmitted symbols, or after the N to-be-transmitted symbols, or the M extension symbols are continuously or discretely distributed in the N to-be-transmitted symbols.

That the M extension symbols are located before the N to-be-transmitted symbols or are located after the N to-be-transmitted symbols means that the entire N to-be-transmitted symbols remain unchanged, and the M extension symbols are inserted before a start location or after an end location of the N to-be-transmitted symbols. For example, it is assumed that the N to-be-transmitted symbols are sequentially *a_{1,}*......, *a*_{N}, and the M extension symbols include *a*_{N+1,}.......*a*_{N+M}. If the M extension symbols are located before the N to-be-transmitted symbols, a corresponding third symbol sequence is, {*a*_{N+1,}......., *a*_{N+M,} *a_{1,}*..., *a*_{N}}; If the M extension symbols are located after the N to-be-transmitted symbols, a corresponding third symbol sequence is {*a₁, a₂,* ......, *a*_{N}, *a*_{N+1}, ......, *a*_{N+M}}.

The M extension symbols are discretely or continuously distributed in the N to-be-transmitted symbols, which means that the M extension symbols are inserted into the N to-be-transmitted symbols. In this case, the N to-be-transmitted symbols are discontinuous, but are padded into one or more extension symbols. For example, it is assumed that the N to-be-transmitted symbols are sequentially *a_{1,}......, a*_{N}, and the M extension symbols include *a*_{N+1,}......*a*_{N+M}. An example of the third symbol sequence in which the M extension symbols are continuously distributed in the N to-be-transmitted symbols is {*a₁, a*_{N+1}*,* ...... , *a*_{N*+*M}, *a_{2,}..., a*_{N}}. An example of the third symbol sequence in which the M extension symbols are discretely distributed in the N to-be-transmitted symbols is {*a₁, a*_{N+1}*, a₂,*. . . . . ., *a*_{N+2},...*a*_{N+M}, *a*_{N}}.

In conclusion, this application may have a plurality of manners for the positions of the M extension symbols in the third symbol sequence.

With reference to the first aspect, in some possible implementations of the first aspect, the obtaining a second symbol sequence based on the first symbol sequence includes: determining a third symbol sequence based on the first symbol sequence; generating (N+M) modulation symbols based on the third symbol sequence; and mapping the (N+M) modulation symbols to REs to obtain the second symbol sequence.

The third symbol sequence may be obtained through calculation based on the N to-be-transmitted symbols in the first symbol sequence and the foregoing constraint condition.

The (N+M) modulation symbols may be obtained through modulation based on the third symbol sequence. The following provides several possible implementations for generating the (N+M) modulation symbols based on the third symbol sequence by way of example.

A first possible implementation of generating the (N+M) modulation symbols based on the third symbol sequence is to modulate the third symbol sequence to obtain the (N+M) modulation symbols. That is, the (N+M) modulation symbols obtained through direct modulation of the third symbol sequence are phase-continuous.

A second possible implementation of generating the second symbol sequence based on the third symbol sequence is to modulate the N to-be-transmitted symbols and the M extension symbols in the third symbol sequence separately to obtain N modulated symbols and M modulated symbols; and insert the M modulated symbols into the N modulated symbols according to the positions of the M extension symbols in the third symbol sequence, and perform phase adjustment on at least some of the N modulated symbols to obtain (M+N) modulated symbols with continuous phases. The difference between the foregoing two possible implementations lies in that in the first implementation, the third symbol sequence is modulated as a whole, while in the second implementation, the N to-be-transmitted symbols and the M modulated symbols are modulated separately and then concatenated. These two implementations are equivalent, but the implementation processes are different.

It should be understood that the implementation of generating (N+M) modulated symbols based on the third symbol sequence is not limited to the foregoing two implementations. For example, the third symbol sequence may be further divided into more sub-sequences, modulation symbol sequences may be obtained by modulating each sub-sequence separately, and then each modulation symbol sequence corresponding to each sub-sequence may be concatenated into an integrated sequence according to the position of each sub-sequence in the third symbol sequence, and phase adjustment may be performed, thereby obtaining (N+M) modulated symbols with continuous phases. These (N+M) modulated symbols may then be mapped onto REs, thereby determining the value mapped to each RE.

A possible implementation of mapping the (N+M) modulation symbols onto the REs is as follows: sampling (N+M) modulation symbols in the fourth symbol sequence at a sampling rate of S (where S is a positive integer) to obtain (N+M)×S time domain samples, and then converting these (N+M)×S time domain samples to the frequency domain to obtain (N+M)×S frequency domain samples. By performing RE mapping on these (N+M)×S frequency domain samples, frequency domain samples mapped to each RE can be determined. Each frequency domain sample may be mapped to one RE, that is, each frequency domain sample may be mapped to one subcarrier. Therefore, the value mapped to each RE is the value of the frequency domain sample corresponding to the RE. In this way, frequency domain samples mapped to (N+M)×S REs can be obtained. In other words, one representation of the second symbol sequence is (N+M)×S frequency domain samples, where every S frequency domain samples correspond to one of the (N+M) modulation symbols in the fourth symbol sequence.

Another possible implementation of mapping the (N+M) modulation symbols onto the REs is as follows: sampling the (N+M) modulation symbols in the fourth symbol sequence at a sampling rate of S (where S is a positive integer) to obtain (N+M)×S time domain samples; performing time domain periodic extension on the (N+M)×S time domain samples to obtain (N+M)×S×Zₚ time domain samples, where Zₚ is a positive integer, indicating the number of times the (N+M)×S time domain samples are repeated after time domain periodic extension, or in other words, the number of times the (N+M)×S time domain samples are repeated, where (N+M)×S time domain samples are counted as one period. Then, the (N+M)×S×Zₚ time domain samples are converted to the frequency domain to obtain (N+M)×S×Zₚ frequency domain samples. By performing RE mapping on the (N+M)×S×Zₚ frequency domain samples, frequency domain samples mapped to each RE can be determined. Each frequency domain sample may be mapped to one RE, that is, each frequency domain sample may be mapped to one subcarrier. Therefore, the value mapped to each RE is the value of the frequency domain sample corresponding to the RE. In this way, frequency domain samples mapped to (N+M)×S×Zₚ REs can be obtained. In other words, an expression of the second symbol sequence is (N+M)×S×Zₚ frequency domain samples, where every S frequency domain samples within each period correspond to one of the (N+M) modulation symbols in the fourth symbol sequence.

According to a second aspect, a communication method is provided, which may be applied to a communication apparatus. The communication apparatus may be a communication device (such as a terminal device or a network device), or may be a component (such as a baseband processor, a chip system, a processor, or the like) for the communication device, or may be a logical module or software that can implement all or some of the functions of the communication device, or the like. This is not limited in this application.

For example, the method includes: obtaining a first symbol sequence, where the first symbol sequence includes N to-be-transmitted symbols, and N is a positive integer; generating a fourth symbol sequence and a first CP sequence located before the fourth symbol sequence based on the first symbol sequence, where the first CP sequence is the last K₁ symbols of the fourth symbol sequence, the symbols in the fourth symbol sequence are (N+M) modulation symbols obtained by modulating a third symbol sequence, the third symbol sequence includes the N to-be-transmitted symbols and M extension symbols in the first symbol sequence, the M extension symbols ensure phase continuity of the fourth symbol sequence obtained through the modulation, and the difference between the phase at the start position and the phase at the end position is an integer multiple of 2π, where M is an integer greater than or equal to zero; generating a first OFDM baseband signal based on the fourth symbol sequence and the first CP sequence, where a time domain resource of the first OFDM baseband signal is an OFDM symbol.

For content such as the first symbol sequence, the third symbol sequence, the fourth symbol sequence, modulation, phase continuity, and the fact that the difference between the phase at the start position and the phase at the end position is an integer multiple of 2π, refer to the related descriptions in the first aspect, and details are not repeated herein.

Different from the first aspect, in the method provided in the second aspect, the first CP sequence used to generate the first CP may be generated in advance, and the fourth symbol sequence and the first CP sequence may be jointly used to generate the first OFDM baseband signal. In this case, after the signal body of the first OFDM baseband signal is generated, there is no need to copy some symbols at the end of the signal body to the front of the signal body to generate the first CP. In other words, the second aspect provides an OFDM baseband signal generation manner that is different from that provided in the first aspect.

The first CP sequence is the K₁ symbols at the end of the fourth symbol sequence, and the fourth symbol sequence is phase continuous and satisfies self-cyclic phase at the beginning and end. Therefore, when the first CP sequence is placed before the fourth symbol sequence, the end position of the first CP sequence can achieve phase continuity with the start position of the fourth symbol sequence. Consequently, the first OFDM baseband signal generated based on the fourth symbol sequence and the first CP sequence is also phase continuous.

Based on the aforementioned technical solution, by extending the first symbol sequence to obtain the third symbol sequence, and then modulating based on the third symbol sequence to obtain the fourth symbol sequence, the fourth symbol sequence can simultaneously satisfy the following conditions: phase continuity, self-cyclic phase at the beginning and end, and phase continuity between the end position of the first CP sequence and the start position of the fourth symbol sequence. Consequently, the first OFDM baseband signal generated based on the fourth symbol sequence and the first CP sequence also satisfies phase continuity. Based on this, if the modulation technology used is a modulation technology capable of maintaining a constant amplitude, a waveform with continuous phase and constant envelope can be obtained. In this way, a solution can be achieved where phase or frequency modulation technology is combined with OFDM technology to obtain a constant envelope waveform. Since the constant envelope waveform meets the requirements of waveform for direct frequency conversion and nonlinear power amplification, this allows the communication device to use some more power-efficient methods for signal transmission. Moreover, for communication devices (especially small-sized IoT nodes without large-capacity batteries), this can further improve the standby life of the device.

With reference to the second aspect, in some possible implementations of the second aspect, the modulation includes CPM or LFM.

For details about CPM and LFM, refer to the related descriptions of CPM or LFM in the first aspect above, and details are not described again.

With reference to the second aspect, in some possible implementations of the second aspect, M is a positive integer, and the positions of the M extension symbols in the third symbol sequence are: before the N to-be-transmitted symbols, or after the N to-be-transmitted symbols, or the M extension symbols are continuously or discretely distributed in the N to-be-transmitted symbols.

For details about the positions of the M extension symbols in the third symbol sequence, refer to the related descriptions of the positions of the M extension symbols in the third symbol sequence in the first aspect above, and details are not described again.

With reference to the second aspect, in some possible implementations of the second aspect, the generating a fourth symbol sequence and a first CP sequence located before the fourth symbol sequence based on the first symbol sequence includes: determining a third symbol sequence based on the first symbol sequence; and generating the fourth symbol sequence and the first CP sequence located before the fourth symbol sequence based on the third symbol sequence.

The third symbol sequence may be obtained through calculation based on the N to-be-transmitted symbols in the first symbol sequence and the foregoing constraint condition.

Further, the following exemplarily shows a plurality of possible implementations of generating, based on the third symbol sequence, the fourth symbol sequence and the first CP sequence located before the fourth symbol sequence.

A first possible implementation manner of generating, based on the third symbol sequence, the fourth symbol sequence and the first CP sequence located before the fourth symbol sequence is: modulating the third symbol sequence to obtain the fourth symbol sequence; and; adding the K₁ modulation symbols at the end of the fourth symbol sequence before the fourth symbol sequence, to obtain the fourth symbol sequence and the first CP sequence that is located before the fourth symbol sequence.

In other words, after the third symbol sequence is modulated to obtain the fourth symbol sequence, K₁ modulation symbols at the end of the fourth symbol sequence are used as the first CP sequence and are added before the fourth symbol sequence.

A second possible implementation manner of generating, based on the third symbol sequence, the fourth symbol sequence and the first CP sequence located before the fourth symbol sequence is: adding K₁ symbols at the end of the third symbol sequence before the third symbol sequence to obtain the fifth symbol sequence; and; modulate the fifth symbol sequence to obtain the fourth symbol sequence and the first CP sequence located before the fourth symbol sequence. The K₁ symbols at the end of the third symbol sequence are symbols used to generate the first CP sequence.

In other words, after adding symbols that can be used to generate the first CP sequence to the third symbol sequence, modulation is performed. It should be noted that, in this implementation, the fourth symbol sequence and the first CP sequence are generated through modulation of the fifth symbol sequence as a whole, thereby ensuring phase continuity between the fifth symbol sequence obtained through modulation and the first CP sequence. Here, the fourth symbol sequence is the modulated symbol corresponding to the third symbol sequence after modulation, and the first CP sequence is the modulated symbol corresponding to the last K₁ symbols of the third symbol sequence after modulation. Therefore, the fourth symbol sequence may also be referred to as being obtained through modulation of the third symbol sequence.

A third possible implementation of generating the fourth symbol sequence and the first CP sequence located before the fourth symbol sequence based on the third symbol sequence is as follows: modulating the N to-be-transmitted symbols and the M extension symbols in the third symbol sequence separately to obtain N modulated symbols and M modulated symbols; inserting the M modulated symbols into the N modulated symbols according to the positions of the M extension symbols in the third symbol sequence, and performing phase adjustment on at least some of the N modulated symbols, so that the (M+N) modulated symbols obtained after inserting the M modulated symbols have continuous phases; and adding the last K₁ modulated symbols of the (M+N) modulated symbols to the front of the (M+N) modulated symbols to obtain the fourth symbol sequence and the first CP sequence located before the fourth symbol sequence.

The (M+N) modulation symbols are the fourth symbol sequence. In this implementation, the N to-be-transmitted symbols and the M modulation symbols are modulated separately, and then the first CP sequence is added after obtaining the fourth symbol sequence. Since the third symbol sequence includes the N to-be-transmitted symbols and the M modulation symbols, separately modulating the N to-be-transmitted symbols and the M modulation symbols and then concatenating them is equivalent to modulating the third symbol sequence as a whole, although the implementation processes are different.

The OFDM baseband signal with phase continuity on an OFDM symbol can be obtained through the foregoing method. Since the first communications apparatus may also perform data transmission on a plurality of consecutive OFDM symbols, the first OFDM baseband signal may be further designed to achieve phase continuity between OFDM symbols. For ease of understanding, the second OFDM baseband signal is introduced in the following for description.

With reference to the second aspect, in some possible implementations of the second aspect, a difference between a phase of a start position of the first OFDM baseband signal and a phase of an end position of the second OFDM baseband signal is an integer multiple of 2π, a time domain resource of the second OFDM baseband signal is adjacent to a time domain resource of the first OFDM baseband signal, and the time domain resource of the second OFDM baseband signal is located before the time domain resource of the first OFDM baseband signal, where the time domain resource of the second OFDM baseband signal is an OFDM symbol.

In other words, the second OFDM baseband signal is a signal transmitted at an OFDM symbol one OFDM symbol before the OFDM symbol at which the first OFDM baseband signal is scheduled. Alternatively, a time domain resource of the first OFDM baseband signal is the first OFDM symbol, a time domain resource of the second OFDM baseband signal is the second OFDM symbol, the second OFDM symbol is adjacent to the first OFDM symbol, and the second OFDM symbol is located before the first OFDM symbol.

The second OFDM baseband signal may be a signal generated based on the method provided in this application, or may be a signal generated based on an existing OFDM technology. This is not limited in this application.

To ensure phase continuity between the first OFDM baseband signal and the second OFDM baseband signal, in a possible design, phase compensation is performed on the first OFDM baseband signal, so that a difference between a phase of a start position of the first OFDM baseband signal and a phase of an end position of the second OFDM baseband signal is an integer multiple of 2π. Alternatively, phase compensation is performed on an OFDM baseband signal on an OFDM symbol that is subsequent to the first OFDM symbol, so that a difference between a phase of a start position of the OFDM baseband signal on the subsequent OFDM symbol and a phase of an end position of the OFDM baseband signal on the first OFDM symbol is an integer multiple of 2π.

For example, it is assumed that a phase at an end position of the second OFDM baseband signal is denoted as *φ*_{II,f}, and a phase at a start position of the first OFDM baseband signal before phase compensation is *φ*_{I,s}, then the phase compensation amount meets: Δ*φ = φ*_{II,f} *- φ*_{I,s} *+* 2*k*₁*π, k*₁ is an integer.

Based on the second implementation manner of generating the fourth symbol sequence and the first CP sequence located before the fourth symbol sequence based on the third symbol sequence, a possible implementation manner of performing phase compensation on the first OFDM baseband signal is: adjusting the initial phase of the modulation, so that the adjusted initial phase *φ*₀ ' satisfies the following relationship with the initial phase *φ*₀ before the adjustment: *φ*₀ ' = *φ*₀ + Δ*φ.*

Based on the foregoing implementations of generating the fourth symbol sequence and the first CP sequence located before the fourth symbol sequence based on the third symbol sequence, a possible implementation manner of performing phase compensation on the first OFDM baseband signal is: performing phase compensation on each modulation symbol in the generated fourth symbol sequence and the first CP sequence based on the foregoing phase compensation amount, where the fourth symbol sequence and the first CP sequence used to generate the first OFDM baseband signal are the fourth symbol sequence and the first CP sequence after the phase compensation is performed. Δ*φ*

To ensure phase continuity of signals on different OFDM symbols, another possible design is as follows: after adding an extension symbol and a symbol used to generate each CP sequence to symbol sequences scheduled to be transmitted on a plurality of consecutive OFDM symbols, respectively, the symbol sequences are combined into one symbol sequence in a time sequence of the OFDM symbols, and the combined symbol sequence is modulated to obtain a modulated symbol sequence and a CP sequence corresponding to each OFDM symbol. In this way, phase continuity is achieved between OFDM baseband signals on the obtained OFDM symbols.

With reference to the first aspect or the second aspect, in some possible implementations, the modulation is CPM, where M meets 1≤M≤max{U+2, U+V-1}; where V meets h=W/V, where W/V is a fraction in the simplest form, h is a modulation index of the CPM, U is a predefined value, and W, U, and V are positive integers.

With reference to the first aspect or the second aspect, in some possible implementations, the modulation is LFM, and M meets 1≤M≤3.

Different quantities M of extension symbols may cause different spectral efficiency and different spectral leakages to different degrees. If the value of M is too large, the frequency efficiency may be too low, but the spectrum leakage is small. If the value of M is too small, the spectral efficiency may be high, but the spectral leakage may be large. Therefore, by limiting the value range of M, a compromise between spectral efficiency and spectral leakage can be obtained.

It should be noted that the frequency modulation signal obtained by the LFM is a chirp (chirp) signal, and therefore, it may be considered as a case in which U=1 and V=1. In other words, when the modulation scheme is LFM, it may also be considered that M meets: 1≤M≤max{U+2, U+V-1} and is an integer.

With reference to the first aspect or the second aspect, in some possible implementations, the time domain resource of the first OFDM baseband signal is close to the time domain resource of the second OFDM baseband signal; and the time domain resource of the second OFDM baseband signal is located before the time domain resource of the first OFDM baseband signal, and the time domain resource of the second OFDM baseband signal is one OFDM symbol; and; the second OFDM baseband signal is generated based on a fifth symbol sequence, the fifth symbol sequence is obtained through modulation based on a sixth symbol sequence, and the sixth symbol sequence comprises P to-be-transmitted symbols and Q extension symbols; and Q₁ extension symbols of the Q extension symbols are located in first (P+Q-K₂) symbols in the sixth symbol sequence, and Q₂ extension symbols of the Q extension symbols are located in last K₂ symbols in the sixth symbol sequence, and if the modulation is performed on the first (P+Q-K₂) symbols, a difference between a phase at an end position and a phase at a start position of an obtained modulation symbol sequence is an integer multiple of 2π, and if the modulation is performed on the last K₂ symbols, A difference between a phase at an end position and a phase at a start position of the obtained modulation symbol sequence is also an integer multiple of 2π. P is a positive integer, Q, Q₁, and Q₂ are all integers greater than or equal to 0, and K₂ is an integer greater than 1; and; M is an integer greater than or equal to 0, and M₁ extension symbols in the M extension symbols are in first (N+M-K₁) symbols in the third symbol sequence; and M₂ extension symbols in the M extension symbols are located in the last K₁ symbols in the third symbol sequence, and if the first (N+M-K₁) symbols are modulated, a difference between a phase at an end position and a phase at a start position of the obtained modulation symbol sequence is an integer multiple of 2π, and a difference between an initial phase of modulation of the first OFDM baseband signal and an initial phase of modulation of the second OFDM baseband signal is an integer multiple of 2π; and; M = M₁ + M₂, where both M₁ and M₂ are integers greater than or equal to 0, and K₁ is an integer greater than 1.

In other words, the second OFDM baseband signal and the first OFDM baseband signal simultaneously satisfy their respective constraint conditions, and phase continuity between OFDM symbols may be obtained by controlling the initial phase.

The second OFDM baseband signal may also be generated based on the method for generating the first OFDM baseband signal according to the first aspect or the second aspect. The fifth symbol sequence may be corresponding to the fourth symbol sequence in the first aspect or the second aspect.

Using the first OFDM baseband signal as an example, the M extension symbols are discretely distributed in the third symbol sequence. If the third symbol sequence is divided into two parts, one part includes a symbol used to generate the first CP, and the remaining symbols are the other part. Each part of the M extension symbols includes at least one extension symbol. Because of the existence of one or more extension symbols in each part, after the third symbol sequence is modulated, each part can meet the self-cycle of a start phase and a tail phase.

It may be understood that, in the third symbol sequence, the last K₁ symbols are symbols used to generate the first CP, are a part of the foregoing two parts, and the first (N+M-K₁) symbols are the other part. Because the first (N+M-K₁) symbols are modulated, a difference between a phase at an end position and a phase at a start position of an obtained modulation symbol sequence (that is, including (N+M-K₁) modulation symbols) is an integer multiple of 2π. In addition, because the CPM has a characteristic of phase accumulation, each modulation symbol obtained by LFM returns to an initial phase. Therefore, in the fourth symbol sequence obtained by performing CPM or LFM on the third symbol sequence, End positions of the first part of (N+M-K₁) modulation symbols are phase continuous with start positions of the last part of K₁ modulation symbols. Therefore, it can be obtained that: A difference between the phases of the start positions of the K₁ modulation symbols in the latter part and the phases of the start positions of the (N+M-K₁) modulation symbols in the previous part is also an integer multiple of 2π. In other words, after the third symbol sequence is divided into two parts, each part satisfies the head-to-tail phase self-cycling (phase recursion). This characteristic may be referred to as dual head-to-tail phase self-cycling.

Similar to the first OFDM baseband signal, the Q extension symbols are discretely distributed in the sixth symbol sequence. If the sixth symbol sequence is divided into two parts, one part includes symbols used to generate the second CP, and the remaining symbols form the other part. Here, the second CP is the CP of the second OFDM baseband signal. In the sixth symbol sequence, the symbols used to generate the second CP are the last K₂ symbols of the sixth symbol sequence, and the last K₂ symbols of the sixth symbol sequence, after modulation, can be obtained as the last K₂ modulation symbols of the fifth symbol sequence. Each of the Q extension symbols includes at least one extended symbol in each part. Due to the presence of one or more extension symbols in each part, each part can satisfy the self-cyclic phase between the first and last symbols after the sixth symbol sequence is modulated.

The time domain resource of the first OFDM baseband signal is located after the time domain resource of the second OFDM baseband signal. Assuming that the second OFDM baseband signal is generated based on the fifth symbol sequence, it is necessary to ensure that the phase difference between the start position of the K₁ modulation symbols at the end of the fourth symbol sequence and the end position of the modulation symbols of the CP (hereinafter referred to as the second CP) used to generate the second OFDM baseband signal is an integer multiple of 2π, and the phase difference between the end position of the K₂ modulation symbols used to generate the second CP and the start position of the fifth symbol sequence is an integer multiple of 2π. Therefore, as long as the phase difference between the start position of the K₁ modulation symbols and the start position of the fifth symbol sequence is an integer multiple of 2π, or equivalently, as long as the phase difference between the start position of the fourth symbol sequence and the start position of the fifth symbol sequence is an integer multiple of 2π, the condition can be satisfied.

Because the initial phase of modulation can control both the phase of the start position of the fourth symbol sequence and the phase of the start position of the fifth symbol sequence, the phase difference between the two may be controlled to be an integer multiple of 2π, thereby achieving phase continuity between the first OFDM baseband signal and the second OFDM baseband signal.

Further, the following possible implementations may be used to further achieve a tradeoff between spectrum efficiency and spectrum leakage while satisfying the dual head-to-tail phase self-cycling.

Optionally, the modulation is CPM, where M₁ meets the following condition: 1≤M₁ ≤max{U+2, U+V-1} and is an integer, M₂ meets the following condition: 1≤M₂ ≤max{U+2, U+V-1} and is an integer, M meets the following condition: 2≤M≤2 × max{U+2, U+V-1}, and is an integer; Q₁ meets the following condition: 1≤Q₁ ≤max{U+2, U+V-1} and is an integer, Q₂ meets the following condition: 1≤Q₂ ≤max{U+2, U+V-1} and is an integer, and Q meets the following condition: 2≤Q≤2 × max{U+2, U+V-1}, and is an integer.

Optionally, the modulation scheme is LFM, M₁ meets 1≤M₁ ≤3 and M₁ is an integer, M₂ meets 1≤M₂ ≤3 and M₂ is an integer, and M meets 2≤M≤6; Q₁ meets 1≤Q₁ ≤3 and Q₁ is an integer, Q₂ meets 1≤Q₂ ≤3 and Q₂ is an integer, and Q meets 2≤Q≤6.

It can be learned that the value range of M is obtained by superposing the value ranges of M₁ and M₂, the value range of Q is obtained by superposing the value ranges of Q₁ and Q₂, and the value ranges of M₁, M₂, Q₁ and Q₂ are respectively determined based on the value ranges [1, max{U+2, U+V-1}] and [1, 3] provided in the foregoing.

In another design, the value ranges of M and Q may alternatively be directly defined as: 1≤M≤max{U+2, U+V-1}, and M is an integer; 1≤Q≤max{U+2, U+V-1}, and Q is an integer.

With reference to the first aspect or the second aspect, in some possible implementations, the method further includes: sending a first OFDM baseband signal.

As mentioned above, in the method provided in the first or second aspect, the first communication apparatus may be a communication device such as a terminal device or a network device, or may be a component configured in a communication device, such as a baseband processor, a chip system, a processor, or the like.

For a baseband chip used to implement the method according to the first or second aspect, or a chip system or a processor used to implement a baseband processing function, the sending the first OFDM baseband signal includes: outputting the first OFDM baseband signal.

Outputting the first OFDM baseband signal may specifically refer to the communication of the first OFDM baseband signal through interfaces within the communication device, for example, outputting the signal from the baseband chip and inputting it into the radio frequency chip, so that the communication device can perform radio frequency processing and signal transmission.

For a communication device configured to implement the method according to the first or second aspect, or a chip system configured for the communication device, the sending the first OFDM baseband signal includes: outputting a bandpass signal based on the first OFDM baseband signal; performing power amplification on the bandpass signal to obtain a power-amplified bandpass signal; and transmitting the power-amplified bandpass signal.

That is, the first OFDM baseband signal may be processed through up-conversion, power amplification, and the like to obtain a power-amplified bandpass signal, and then the power-amplified bandpass signal is sent out through an antenna. In other words, the first OFDM baseband signal is sent out by being carried on the power-amplified bandpass signal.

With reference to the first aspect or the second aspect, in some possible implementations, the method further includes: sending a reference signal, where a time domain resource of the reference signal is one or more OFDM symbols, and the time domain resource of the reference signal is different from the time domain resource of the first OFDM baseband signal.

To ensure that the (N+M) modulation symbols can be normally demodulated to obtain the first symbol sequence, and considering a channel measurement requirement, the first communications apparatus further needs to send a reference signal. To avoid breaking the feature of phase continuity, the first communications apparatus cannot insert a reference signal at a specific frequency domain location. Therefore, a time domain reference signal is used, and the reference signal is carried on one or more OFDM symbols for transmission.

The time domain resource of the reference signal is different from the time domain resource of the first OFDM baseband signal, in other words, the time domain resource of the reference signal is different from the time domain resource of the data signal. For example, the time domain resource of the first OFDM baseband signal is an OFDM symbol, and the time domain resource of the reference signal may be one or more OFDM symbols adjacent to the OFDM symbol.

Optionally, a bandwidth covered by the frequency domain resource of the reference signal overlaps at least a part of a bandwidth covered by the frequency domain resource of the first OFDM baseband signal.

It should be understood that the signal body of the first OFDM baseband signal and the CP occupy a same frequency domain resource. Therefore, the frequency domain resource of the first OFDM baseband signal is a frequency domain resource of the second symbol sequence in the first aspect, that is, subcarriers corresponding to the frequency domain resource of the first OFDM baseband signal and corresponding to the RE mapping.

There may be several possible cases when the frequency band covered by the frequency domain resource of the reference signal overlaps the target frequency band: The frequency domain resource of the reference signal overlaps the frequency domain resource of the first OFDM baseband signal, or the frequency domain resource of the reference signal does not overlap the frequency domain resource of the first OFDM baseband signal, but frequency bands covered by the frequency domain resource of the reference signal and the frequency domain resource of the first OFDM baseband signal overlap.

The frequency band covered by the frequency domain resource may be understood as follows: If the frequency domain resource is continuous, the frequency band covered by the frequency domain resource is a frequency band occupied by the frequency domain resource; or if the frequency domain resource is discontinuous, for example, comb (comb) shaped, the frequency band covered by the frequency domain resource may be a frequency band occupied by a first subcarrier to a last subcarrier of the frequency domain resource.

A bandwidth covered by the frequency domain resource of the reference signal at least partially overlaps a bandwidth covered by the frequency domain resource of the first OFDM baseband signal, so that channel estimation and measurement based on the reference signal can be more accurate, and correct demodulation of the first OFDM baseband signal is more facilitated.

In a possible design, the frequency domain resource of the reference signal is the same as the frequency domain resource of the first OFDM baseband signal.

That is, the frequency domain resource of the reference signal and the frequency domain resource of the first OFDM baseband signal are at the same location and have the same size, and the two resources completely overlap each other. In this way, an all-channel measurement on the frequency domain resource used to transmit the first OFDM baseband signal can be obtained, which is more conducive to correct demodulation of the second symbol sequence.

For example, the first communication device is a terminal device, and the reference signal is an uplink reference signal.

For example, the first communication device is a network device, and the reference signal is a downlink reference signal.

According to a third aspect, a communication method is provided. The method may be applied to a second communication apparatus, where the second communication apparatus may be a communication device (such as a terminal device or a network device), or may be a component (such as a baseband processor, a chip system, a processor, or the like) configured in the communication device, or may be a logical module or software that can implement all or some of the functions of the communication device, or the like. This is not limited in this application.

The second communication apparatus may be an apparatus that communicates with the first communication apparatus according to the first aspect or the second aspect. For example, the first communication apparatus is a terminal device, and the second communication apparatus is also a terminal device; or for example, the first communication apparatus is a terminal device, and the second communication apparatus is a network device.

For example, the method includes: obtaining a first OFDM baseband signal, where a time domain resource of the first OFDM baseband signal is an OFDM symbol; obtaining a fourth symbol sequence based on the first OFDM baseband signal, where the fourth symbol sequence includes L modulation symbols, and L is a positive integer; demodulating the fourth symbol sequence to obtain a third symbol sequence, where the third symbol sequence includes N first symbols and M extension symbols, where L=M+N, N is a positive integer less than or equal to L, and M is an integer greater than or equal to zero; determining the positions of the M extension symbols in the third symbol sequence and the value of M; and obtaining the N first symbols from the third symbol sequence.

It should be understood that the N first symbols in the third aspect may correspond to the N to-be-transmitted symbols in the first aspect or the second aspect. The to-be-transmitted symbols are relative to the device serving as the transmit end, while the received symbols are symbols that have already been transmitted for the device serving as the receive end. Therefore, these symbols are differentiated and named as first symbols.

Corresponding to the processing process in the first aspect or the second aspect, the first OFDM baseband signal may be a baseband signal obtained after the second communication apparatus performs processing such as down-conversion on a bandpass signal received from the first communication apparatus. A fourth symbol sequence may be obtained based on the first OFDM baseband signal. The fourth symbol sequence may include L (that is, (M+N)) modulation symbols. The L modulation symbols may be demodulated to obtain a third symbol sequence that includes N first symbols and M extension symbols. The second communication apparatus may remove the M extension symbols from the third symbol sequence based on M and the positions of the M extension symbols in the third symbol sequence, thereby obtaining the N first symbols. The symbol sequence formed by the N first symbols may correspond to the first symbol sequence in the first aspect.

Based on the foregoing technical solution, although the first communications apparatus performs extension on the first symbol sequence after obtaining the first symbol sequence to be transmitted, and modulates the first symbol sequence after adding M extension symbols to obtain the third symbol sequence, the second communications apparatus may still obtain the N first symbols from the third symbol sequence after obtaining the fourth symbol sequence from the first OFDM baseband signal, based on the positions of the M extension symbols in the third symbol sequence and the value of M. Therefore, the addition of the M extension symbols does not affect correct demodulation of the first OFDM baseband signal. In addition, from the perspective of the first communications apparatus, because the M extension symbols are added, the fourth symbol sequence has a phase continuity and the phase of the fourth symbol sequence satisfies a self-cyclic phase of a first symbol and a last symbol, thereby making the first OFDM baseband signal have a phase continuity, which is beneficial for the first communications apparatus to obtain a waveform with a phase continuity and an envelope constant, and therefore provides strong support for the first communications apparatus to transmit a signal in a more power-saving manner, thereby helping improve the standby life of the first communications apparatus.

With reference to the third aspect, in some possible implementations of the third aspect, the demodulation includes CPM demodulation or LFM demodulation.

A manner in which the second communications apparatus demodulates the fourth symbol sequence corresponds to a manner in which the first communications apparatus modulates the third symbol sequence. The first communications apparatus and the second communications apparatus may pre-negotiate the modulation and demodulation manners, or the modulation and demodulation manners may be predefined in a protocol.

It should also be understood that the demodulation of the fourth symbol sequence may be CPM demodulation or LFM demodulation corresponding to the first aspect or the second aspect, but is not limited to CPM demodulation or LFM demodulation. A person skilled in the art may make a simple change based on the same concept to achieve an effect the same as that of the CPM demodulation or the LFM demodulation. For example, with CPM demodulation as an example, demodulation in the phase domain is converted to another domain for execution, and then is converted back to the phase domain after the demodulation is completed, where an essence of the demodulation is still completing the CPM demodulation. There are other such examples, and details are not further described.

One possible case is that M is zero; another possible case is that M is a positive integer.

When M is zero, the second communication apparatus may directly obtain the N first symbols from the third symbol sequence, and in this case, a position of the M extension symbols in the third symbol sequence may not need to be considered, or it may be determined that the M extension symbols do not exist in the third symbol sequence. When M is a positive integer, the second communication apparatus may obtain the N first symbols from the third symbol sequence in combination with the positions of the M extension symbols in the third symbol sequence.

With reference to the third aspect, in some possible implementations of the third aspect, the positions of the M extension symbols in the third symbol sequence are: before the N first symbols, or after the N first symbols, or the M extension symbols are continuously or discretely distributed among the N first symbols.

For detailed descriptions of the positions of the M extension symbols in the third symbol sequence, refer to the related descriptions of the positions of the M extension symbols in the third symbol sequence in the first aspect, and details are not described again.

With reference to the third aspect, in some possible implementations, the demodulation is CPM demodulation, and M meets the condition: 1≤M≤max{U+2, U+V-1}, or 2≤M≤2×max{U+2, U+V-1}, where V meets the condition: h=W/V, and W/V is a reduced fraction, h is a modulation index of the CPM, U is a predefined value, and W, U, and V are positive integers.

With reference to the third aspect, in some possible implementations, the demodulation is LFM demodulation, and M meets the condition: 1≤M≤3, or 2≤M≤6.

For the description of the range of values for M, reference may be made to the description with reference to the first or second aspect, and details will not be repeated herein.

In the method provided in the third aspect, the second communications apparatus may be a communications device such as a terminal device or a network device, and the method in the third aspect may be performed by the second communications apparatus, or may be performed by a component in the second communications apparatus, such as a baseband processor, a chip system, a processor, or the like.

For a baseband processor or a chip system, processor, or the like used to implement the method in the third aspect or to perform baseband processing functions, optionally, the obtaining a first OFDM baseband signal includes: a second communications apparatus receiving the first OFDM baseband signal. For example, the first OFDM baseband signal is received from another chip system or processor in the communications device to which the second communications apparatus belongs. For instance, the another chip system may include a radio frequency chip in the communications device to which the second communications apparatus belongs.

For the second communications apparatus, the obtaining a first OFDM baseband signal includes: receiving a bandpass signal from the first communications apparatus; and obtaining the first OFDM baseband signal based on the bandpass signal.

The bandpass signal received by the second communications apparatus may be the bandpass signal after power amplification that is sent by the first communications apparatus according to the first or second aspect. Corresponding to the processing performed by the first communications apparatus in the first or second aspect, after receiving the bandpass signal, the first communications apparatus may perform processing such as down-conversion to obtain the first OFDM baseband signal.

With reference to the third aspect, in some possible implementations of the third aspect, the method further includes: receiving a reference signal, where a time domain resource of the reference signal is one or more OFDM symbols, and the time domain resource of the reference signal is different from the time domain resource of the first OFDM baseband signal.

In this application, to avoid destroying the feature of phase continuity, the first communications apparatus may transmit the reference signal by carrying the reference signal on one or more OFDM symbols. The second communications apparatus may receive the reference signal on the one or more OFDM symbols, to perform signal demodulation or channel measurement. For detailed content of the time domain resource of the reference signal, refer to the foregoing descriptions of the time domain resource of the reference signal in the first aspect or the second aspect. Details are not described again.

Optionally, a bandwidth covered by the frequency domain resource of the reference signal overlaps at least partially with a bandwidth covered by the frequency domain resource of the first OFDM baseband signal.

In a possible design, the frequency domain resource of the reference signal is the same as the frequency domain resource of the first OFDM baseband signal.

For details about the frequency domain resource of the reference signal, refer to the related descriptions of the frequency domain resource of the reference signal in the first aspect or the second aspect, and details are not described again.

With reference to the first aspect to the third aspect, in some possible implementations, the M and the positions of the M extension symbols in the third symbol sequence are predefined in a protocol, or are indicated by the first communications apparatus to the second communications apparatus, or are indicated by the second communications apparatus to the first communications apparatus. Therefore, signaling interaction may exist between the first communications apparatus and the second communications apparatus, where the signaling may be used to carry the fifth information and/or the sixth information described below.

If the M and the positions of the M extension symbols in the third symbol sequence are predefined in the protocol, the second communications apparatus may determine the positions of the M symbols and the M extension symbols in the third symbol sequence according to the protocol.

If the positions of the M extension symbols in the third symbol sequence are indicated by the first communications apparatus to the second communications apparatus by using the fifth information, the second communications apparatus may determine the positions of the M extension symbols in the third symbol sequence according to the fifth information.

Correspondingly, the method further includes: sending, by the first communications apparatus, fifth information to the second communications apparatus, or receiving, by the second communications apparatus, fifth information from the first communications apparatus, where the fifth information is used to indicate the positions of the M extension symbols in the third symbol sequence.

For example, the second communications apparatus is a terminal device, the first communications apparatus is a network device, and the positions of the M extension symbols in the third symbol sequence are indicated to the second communications apparatus by the first communications apparatus by using the fifth information. In other words, the positions of the M extension symbols in the third symbol sequence are configured by the network device.

For another example, both the first communications apparatus and the second communications apparatus are terminal devices, the positions of the M extension symbols in the third symbol sequence are determined by the first communications apparatus, and the positions are indicated to the second communications apparatus by using the fifth information. In other words, the positions of the M extension symbols in the third symbol sequence are determined by the terminal device. The second communications apparatus may determine the positions of the M extension symbols in the third symbol sequence based on the fifth information.

If the positions of the M extension symbols in the third symbol sequence are indicated to the first communications apparatus by the second communications apparatus by using the fifth information, the second communications apparatus may determine the positions of the M extension symbols in the third symbol sequence by itself.

Correspondingly, the method further includes: receiving, by the first communications apparatus, fifth information from the second communications apparatus, or sending, by the second communications apparatus, fifth information to the first communications apparatus, where the fifth information is used to indicate the positions of the M extension symbols in the third symbol sequence.

For example, the second communications apparatus is a network device, the first communications apparatus is a terminal device, and the positions of the M extension symbols in the third symbol sequence are configured by the second communications apparatus for the first communications apparatus by using the fifth information, in other words, the positions of the M extension symbols in the third symbol sequence are configured by the network device. Alternatively, both the first communications apparatus and the second communications apparatus are terminal devices, and the positions of the M extension symbols in the third symbol sequence are determined by the second communications apparatus and indicated to the first communications apparatus by using the fifth information, in other words, the positions of the M extension symbols in the third symbol sequence are determined by the terminal device.

Similarly, if the value of M is indicated to the second communications apparatus by the first communications apparatus by using the sixth information, the second communications apparatus may determine M based on the sixth information.

Correspondingly, the method further includes: sending, by the first communications apparatus, sixth information to the second communications apparatus, or receiving, by the second communications apparatus, sixth information from the first communications apparatus, where the sixth information is used to indicate M.

If the value of M is indicated to the first communications apparatus by the second communications apparatus by using the sixth information, the second communications apparatus may determine M by itself.

Correspondingly, the method further includes: receiving, by the first communications apparatus, sixth information from the second communications apparatus, or sending, by the second communications apparatus, sixth information to the first communications apparatus, where the sixth information is used to indicate M.

For an example of interaction between the first communications apparatus and the second communications apparatus for exchanging the sixth information, refer to the foregoing example description of interaction between the first communications apparatus and the second communications apparatus for exchanging the fifth information. Details are not described again.

It may be understood that any one of the positions of M and the M extension symbols in the third symbol sequence may be predefined by a protocol, and the other one may be indicated by the fifth information or the sixth information. Alternatively, the positions of M and the M extension symbols in the third symbol sequence may be determined by different devices, or may be determined by a same device. In other words, the fifth information and the sixth information may be indicated by different devices, or may be indicated by a same device. If the positions of M and the M extension symbols in the third symbol sequence are indicated by one device to another device, the fifth information and the sixth information may be carried in the same signaling, and the sending and receiving of the fifth information and the sixth information may be combined into one step. Further, the fifth information and the sixth information may be generated by means of joint coding. For example, the fifth information and the sixth information may be the same information element in the same signaling; or the fifth information and the sixth information may be generated by means of independent coding, for example, the fifth information and the sixth information may be different information elements in the same signaling.

In an example, M is predefined, and locations of the M extension symbols in the third symbol sequence are determined by the first communications apparatus. Correspondingly, the fifth information may be information sent by the first communications apparatus to the second communications apparatus, and the fifth information is used to indicate the locations of the M extension symbols in the third symbol sequence. The second communications apparatus may determine M according to the protocol, and determine the locations of the M extension symbols in the third symbol sequence according to the fifth information from the first communications apparatus.

Optionally, a length of an OFDM symbol is determined by a subcarrier spacing, where the subcarrier spacing may be predefined, or may be configured by the network device. Therefore, signaling interaction may exist between the first communications apparatus and the second communications apparatus, where the signaling may be used to carry the seventh information described below.

Correspondingly, optionally, the method further includes: receiving, by the first communications apparatus, seventh information from the second communications apparatus, or in other words, sending, by the second communications apparatus, the seventh information to the first communications apparatus, where the seventh information is used to indicate a subcarrier spacing, and the subcarrier spacing is used to determine a duration of an OFDM symbol.

For example, the first communications apparatus is a terminal device, the second communications apparatus is a network device or a terminal device, and the second communications apparatus indicates the subcarrier spacing to the first communications apparatus by sending seventh information.

Optionally, the method further includes: The first communications apparatus sends seventh information to the second communications apparatus, or the second communications apparatus receives the seventh information from the first communications apparatus, where the seventh information is used to indicate a subcarrier spacing, and the subcarrier spacing is used to determine duration of an OFDM symbol.

For example, the first communications apparatus is a network device or a terminal device, the second communications apparatus is a terminal device, and the first communications apparatus may indicate the subcarrier spacing to the second communications apparatus by sending seventh information.

Optionally, the method further includes: The first communications apparatus and the second communications apparatus receive the seventh information from the network device, where the seventh information is used to indicate a subcarrier spacing.

For another example, both the first communications apparatus and the second communications apparatus are terminal devices, and both the first communications apparatus and the second communications apparatus may receive the seventh information from the network device.

With reference to the first aspect to the third aspect, in some possible implementations, the frequency domain resource of the first OFDM baseband signal is (N+M)×S subcarriers. That is, the first OFDM baseband signal is transmitted on (N+M)×S subcarriers.

Each of the (N+M)×S subcarriers may be used to transmit one frequency domain sample, where the (N+M)×S frequency domain samples transmitted on the (N+M)×S subcarriers are obtained by performing Fourier transform on (N+M)×S time domain samples, the (N+M)×S time domain samples are obtained by sampling the (N+M) modulation symbols, and S is a positive integer.

If (N+M) modulation symbols are sampled at a sampling rate of S (where S is a positive integer), (N+M)×S time domain samples may be obtained. Then, the (N+M)×S time domain samples are converted into the frequency domain, so as to obtain (N+M)×S frequency domain samples, where the (N+M)×S frequency domain samples may be mapped to (N+M)×S subcarriers.

Based on the foregoing time domain resources and frequency domain resources, it can be understood that the first OFDM baseband signal is transmitted on (N+M)×S subcarriers of an OFDM symbol. This is similar to dividing (N+M) signals on an OFDM symbol into (N+M)×S sub-symbols, and modulating each sub-symbol on (N+M)×S mutually orthogonal subcarriers, thereby achieving OFDM.

One possible scenario is that the (N+M)×S subcarriers are consecutive subcarriers. In other words, the subcarriers are numbered consecutively. The (N+M)×S frequency domain samples mentioned above are mapped to and transmitted on consecutive (N+M)×S subcarriers.

Another possible scenario is that the (N+M)×S subcarriers are arranged in a comb-like pattern, where the subcarrier offset between every two adjacent comb teeth is equal. In other words, the (N+M)×S subcarriers are numbered non-consecutively, but they are equally spaced. The subcarrier spacing between every two adjacent comb teeth is equal, meaning that the spacing between every two adjacent subcarriers in the (N+M)×S subcarriers is equal, or the number of offset subcarriers is the same. For example, the subcarrier spacing may be denoted as Z_{P}, where Z_{P} is a positive integer.

It should be noted that if the (N+M) × S frequency domain samples mapped to the (N+M) × S subcarriers are converted to the time domain, it is equivalent to performing periodic extension in the time domain with these (N+M) × S time domain samples as a period, and repeating these (N+M) × S time domain samples for (Z_{P} -1) times through periodic extension. In other words, the (N+M) × S time domain samples are repeated in the time domain for Z_{P} times, and therefore, the number of time domain samples obtained is Z_{P} × (N+M) × S. Therefore, from the perspective of the time domain, Z_{P} may also be referred to as the repetition count of the (N+M) × S time domain samples, or the number of periods. By mapping the (N+M) × S frequency domain samples to the (N+M) × S subcarriers at equal intervals, phase continuity of the (N+M) modulation symbols is ensured, thereby generating a waveform with a constant envelope.

Optionally, the subcarrier spacing Z_{P} is predefined in a protocol, or is configured by the network device, or is determined by the terminal device. Therefore, there may be signaling interaction between the first communication apparatus and the second communication apparatus, where the signaling may be used to carry the first information described below.

Optionally, the method further includes: The first communications apparatus receives first information from the second communications apparatus, or the second communications apparatus sends the first information to the first communications apparatus, where the first information is used to indicate the subcarrier spacing Z_{P}.

For example, the first communications apparatus is a terminal device, the second communications apparatus is a network device or a terminal device, and the second communications apparatus indicates the subcarrier spacing Z_{P} to the first communications apparatus by sending the first information.

Optionally, the first communications apparatus sends the first information to the second communications apparatus, or the second communications apparatus receives the first information from the first communications apparatus, where the first information is used to indicate the subcarrier spacing Z_{P}. For example, the first communications apparatus is a network device or a terminal device, the second communications apparatus is a terminal device, and the first communications apparatus may indicate the subcarrier spacing Z_{P} to the second communications apparatus by sending the seventh information.

Optionally, the first communications apparatus and the second communications apparatus receive the first information from the network device, where the first information is used to indicate the subcarrier spacing Z_{P}.

For example, both the first communications apparatus and the second communications apparatus are terminal devices, and both the first communications apparatus and the second communications apparatus may receive the first information from the network device.

With reference to the first aspect or the second aspect, in some possible implementations, the sampling rate S is predefined in a protocol, or is configured by the network device, or is determined by the terminal device. Therefore, signaling interaction may exist between the first communications apparatus and the second communications apparatus, where the signaling may be used to carry the second information described below.

Optionally, the method further includes: the first communications apparatus receives second information from the second communications apparatus, or the second communications apparatus sends second information to the first communications apparatus, where the second information is used to indicate the sampling rate S.

For example, the first communications apparatus is a terminal device, and the second communications apparatus is a network device or a terminal device. The second communications apparatus may determine the sampling rate S, and indicate the sampling rate S to the first communications apparatus by sending second information. In other words, the sampling rate S may be configured by the network device, or may be determined by the terminal device. Optionally, the first communications apparatus sends second information to the second communications apparatus, or the second communications apparatus receives second information from the first communications apparatus, where the second information is used to indicate the sampling rate S.

Optionally, the method further includes: sending, by the first communications apparatus, second information to a second communications apparatus, or receiving, by the second communications apparatus, second information from the first communications apparatus, where the second information is used to indicate the sampling rate S.

For example, the first communications apparatus is a network device or a terminal device, and the second communications apparatus is a terminal device. The first communications apparatus may determine the sampling rate S, and indicate the sampling rate S to the second communications apparatus by sending the second information. In other words, the sampling rate S may be configured by the network device, or may be determined by the terminal device.

Optionally, the first communications apparatus and the second communications apparatus receive second information from the network device, where the second information is used to indicate the sampling rate S.

For example, both the first communications apparatus and the second communications apparatus are terminal devices, the sampling rate S may be configured by the network device, and both the first communications apparatus and the second communications apparatus may receive the second information from the network device.

The sampling rate S may be used to determine the quantity of subcarriers included in the frequency domain resource of the first OFDM baseband signal. Therefore, the sampling rate may be predefined in a protocol, or the sampling rate may be configured by the network device, or the sampling rate may be determined by the terminal device and indicated to a device communicating with the terminal device, so that the first communications apparatus and the second communications apparatus can conveniently determine, based on the sampling rate, the quantity of subcarriers included in the frequency domain resource of the first OFDM baseband signal.

Furthermore, the frequency domain resource of the first OFDM baseband signal is configured by the network device. Therefore, there may be signaling interaction between the first communications apparatus and the second communications apparatus, where the signaling may be used to carry the eighth information described below.

Optionally, the method further includes: receiving, by the first communications apparatus, eighth information from the second communications apparatus, or sending, by the second communications apparatus, eighth information to the first communications apparatus, where the eighth information is used to indicate a location of a frequency band allocated to the first communications apparatus, and the location of the frequency band is used to determine the frequency domain resource of the first OFDM baseband signal.

For example, the first communications apparatus is a terminal device, and the second communications apparatus is a network device. The second communications apparatus may configure, by using the eighth information, a location of the frequency band allocated to the first communications apparatus for the first communications apparatus.

Optionally, the method further includes: receiving, by the first communications apparatus and the second communications apparatus, eighth information from the network device, where the eighth information is used to indicate a location of a frequency band allocated to the second communications apparatus, and the location of the frequency band is used to determine the frequency domain resource of the first OFDM baseband signal.

For example, both the first communications apparatus and the second communications apparatus are terminal devices. The network device may indicate, to the first communications apparatus and the second communications apparatus by using the eighth information, a location of the frequency band allocated to the first communications apparatus.

The frequency band may be, for example, a frequency band allocated by the network device to the first communications apparatus (or the terminal device) for performing data transmission. When the eighth information is used to indicate the location of the frequency band, the eighth information may specifically indicate a center frequency and a bandwidth of the frequency band, or may indicate at least two of a start position, an end position, and a bandwidth of the frequency band. This is not limited in this application.

Based on the location of the frequency band allocated to the terminal device and the foregoing subcarrier offset, an absolute location of the (N+M)×S subcarriers may be determined, thereby determining subcarriers on which modulation symbols in the second symbol sequence are located.

With reference to the first aspect to the third aspect, in some possible implementations, a length of the CP (namely, the first CP) of the first OFDM baseband signal is predefined in a protocol, or is configured by the network device, or is configured by the terminal device. Therefore, signaling interaction may exist between the first communications apparatus and the second communications apparatus, where the signaling may be used to carry the third information described below.

The length of the first CP may be represented by a quantity of modulation symbols corresponding to the first CP. For example, in the first aspect, the modulation symbols corresponding to the first CP are K₁ modulation symbols at an end of the second symbol sequence; and in the second aspect, the first CP corresponds to a first CP sequence, where the first CP sequence includes K₁ modulation symbols at an end of the fourth symbol sequence. Therefore, K₁ is the length of the first CP. In addition, in the second aspect, the length of the first CP is equal to the length of the first CP sequence, and both are K₁.

In a possible case, the first communications apparatus is a terminal device, and the terminal device may use all allocated frequency domain resources to transmit the first OFDM baseband signal. In this case, the (N+M)×S subcarriers may occupy all frequency bands allocated to the terminal device, which may be contiguous or comb-shaped. For example, if the terminal device is allocated a 10 megahertz (mega hertz, MHz) frequency band, the (N+M)×S subcarriers may contiguously occupy the 10 MHz frequency band, or may be comb-shaped distributed on the 10 MHz frequency band.

In this case, the length of the first CP may correspond to the bandwidth of the frequency band allocated to the terminal device. The terminal device may determine the length of the first CP based on the system bandwidth and the corresponding CP length, and the bandwidth of the allocated frequency band. In other words, the length of the first CP is determined by the terminal device. The bandwidth of the frequency band allocated to the terminal device may be configured by the network device or predefined, and one or more of the system bandwidth and the corresponding CP length may also be configured by the network device or predefined.

Alternatively, the length of the first CP may be configured by the network device, for example, the network device directly indicates the bandwidth of the frequency band allocated to the first communications apparatus and the corresponding CP length to the first communications apparatus.

Another possible case is that the first communications apparatus is a terminal device, and the terminal device may use a part (for ease of differentiation and description, referred to as a target frequency band) of the allocated frequency domain resource to transmit the first OFDM baseband signal. In this case, the (N+M)×S subcarriers may be consecutive. For example, if the terminal device is allocated a 10 MHz frequency band, the (N+M)×S subcarriers may consecutively occupy 5 MHz of the frequency band.

In this case, the length of the first CP may correspond to a frequency band bandwidth actually used by the terminal device to transmit the first OFDM baseband signal. The terminal device may determine the length of the first CP based on the system bandwidth and the corresponding CP length, and the bandwidth of the target frequency band actually used by the terminal device. One or more of the system bandwidth and the corresponding CP length may be configured or predefined by the network device. The bandwidth of the target frequency band actually used by the terminal device may be determined by the terminal device.

In another possible case, the first communications apparatus is a network device, and the network device may determine the length of the first CP based on the system bandwidth and the corresponding CP length, and the bandwidth of the actually used target frequency band. One or more of the system bandwidth and the corresponding CP length may be determined by the network device.

It should be understood that the bandwidth of the target frequency band may be less than or equal to the bandwidth allocated by the network device.

Optionally, the method further includes: the first communications apparatus receives third information from the second communications apparatus, or the second communications apparatus sends third information to the first communications apparatus, where the third information is used to indicate the length of the first CP.

For example, the first communications apparatus is a terminal device, and the second communications apparatus is a network device. A length of the first CP may be configured by the network device. Therefore, the second communications apparatus may configure the length of the CP for the first communications apparatus by using the third information.

When the third information is used to indicate the length of the first CP, the third information may include, for example, the length information of the first CP, or include the bandwidth of the frequency band allocated to the first communications apparatus.

The length information of the first CP may be the quantity of modulation symbols included in the first CP, or information that may be used to identify the quantity of modulation symbols included in the first CP. In other words, the third information is used to indicate K₁.

A ratio of the system bandwidth to the bandwidth of the frequency band allocated to the terminal device is equal to a ratio of the CP length corresponding to the system bandwidth to the CP length corresponding to the bandwidth of the frequency band allocated to the terminal device, or a ratio of the bandwidth of the frequency band allocated to the terminal device to the CP length corresponding to the bandwidth is equal to a ratio of the system bandwidth to the CP length corresponding to the system bandwidth. Therefore, the length of the first CP may also be determined according to the system bandwidth, the CP length corresponding to the system bandwidth, and the bandwidth of the frequency band allocated to the terminal device.

For another example, the first communications apparatus is a terminal device, and the second communications apparatus is a network device. A length of the first CP may be determined by the terminal device. Therefore, the terminal device may indicate the length of the first CP to the network device by using the third information.

When being used to indicate the length of the first CP, the third information may include, for example, the length information of the first CP, or include the bandwidth of the target frequency band actually used by the first communications apparatus.

The length information of the first CP may be the quantity of modulation symbols included in the first CP, or information that may be used to identify the quantity of modulation symbols included in the first CP.

A ratio of the bandwidth of the target frequency band to the system bandwidth is equal to a ratio of the length of the first CP to a length of a CP corresponding to the system bandwidth, or a ratio of the length of the target frequency band to the length of the first CP corresponding to the target frequency band is equal to a ratio of the system bandwidth to the length of the CP corresponding to the system bandwidth. Therefore, the length of the first CP may also be determined according to the system bandwidth, the length of the CP corresponding to the system bandwidth, and the bandwidth of the target frequency band.

Optionally, the method further includes: The first communications apparatus sends third information to the second communications apparatus, or the second communications apparatus receives third information from the first communications apparatus, where the third information is used to indicate a length of the first CP.

For example, the first communications apparatus is a network device, the second communications apparatus is a terminal device, and the length of the first CP may be configured by the network device. Therefore, the first communications apparatus may configure the length of the first CP for the second communications apparatus by using the third information.

For another example, the first communications apparatus is a terminal device, the second communications apparatus is a network device, and the length of the first CP may be determined by the terminal device. Therefore, the terminal device may indicate the length of the first CP to the network device by using the third information.

For content included in the third information, refer to the foregoing examples, and details are not described again.

Optionally, the method further includes: The first communications apparatus and the second communications apparatus receive third information from the network device, where the third information is used to indicate a length of the first CP.

For example, both the first communications apparatus and the second communications apparatus are terminal devices, and a length of the first CP may be configured by the network device. Therefore, both the first communications apparatus and the second communications apparatus may receive the third information from the network device.

For content included in the third information, refer to the foregoing examples, and details are not described again.

With reference to the first aspect to the third aspect, the modulation parameter is predefined in a protocol, or is determined by the first communications apparatus, or is determined by the second communications apparatus. Therefore, signaling interaction may exist between the first communications apparatus and the second communications apparatus, where the signaling may be used to carry the fourth information described below, where the fourth information may be used to indicate one or more of the modulation parameters.

In an example, the modulation is CPM, and the parameters of the CPM include a frequency pulse shaping function of the CPM, a phase pulse shaping function of the CPM, a modulation index of the CPM, or an initial phase of the CPM.

Among the frequency pulse shaping function of the CPM, the phase pulse shaping function of the CPM, the modulation index of the CPM, and the initial phase of the CPM, all of them may be determined by the first communications apparatus or the second communications apparatus, or some may be determined by the first communications apparatus and some by the second communications apparatus, or some may be determined by the first communications apparatus and/or the second communications apparatus and some may be predefined in a protocol, or all of them may be predefined in the protocol. This is not limited in this application.

Optionally, the method further includes: receiving, by the first communications apparatus, fourth information from the second communications apparatus, or sending, by the second communications apparatus, fourth information to the first communications apparatus, where the fourth information is used to indicate one or more of the following: a frequency pulse shaping function of CPM, a phase pulse shaping function of CPM, a modulation index of CPM, or an initial phase of CPM.

For example, the first communications apparatus is a terminal device, and the second communications apparatus is a network device, where the one or more of the foregoing parameters may be configured by the network device. Therefore, the first communications apparatus may receive the fourth information from the second communications apparatus.

Optionally, the method further includes: sending, by the first communications apparatus, fourth information to the second communications apparatus, or receiving, by the second communications apparatus, fourth information from the first communications apparatus, where the fourth information is used to indicate one or more of the following: a frequency pulse shaping function of CPM, a phase pulse shaping function of CPM, a modulation index of CPM, or an initial phase of CPM.

For example, the first communications apparatus is a network device, and the second communications apparatus is a terminal device, where the modulation parameter may be configured by the network device. Therefore, the first communications apparatus may send the fourth information to the second communications apparatus.

For another example, the first communications apparatus is a terminal device, and the second communications apparatus is a network device or a terminal device, where one or more of the foregoing parameters may be determined by the terminal device. Therefore, the first communications apparatus may send the fourth information to the second communications apparatus.

In another example, the modulation is LFM, and the parameter of the LFM includes a frequency modulation slope (chirp rate) of the LFM.

Optionally, the method further includes: receiving, by the first communications apparatus, fourth information from the second communications apparatus, or sending, by the second communications apparatus, fourth information to the first communications apparatus, where the fourth information is used to indicate the frequency modulation slope of the LFM.

Optionally, the method further includes: sending, by the first communications apparatus, fourth information to the second communications apparatus, or receiving, by the second communications apparatus, fourth information from the first communications apparatus, where the fourth information is used to indicate the frequency modulation slope of the LFM.

For an example of the first communication apparatus receiving the fourth information from the second communication apparatus and the first communication apparatus sending the fourth information to the second communication apparatus, refer to the foregoing description, and details are not repeated herein.

According to a fourth aspect, a baseband processor is provided. The baseband processor may be applied to the first communication apparatus in the first aspect, and may be configured to implement the functions of the first communication apparatus in the baseband in the first aspect. Since the content in the first aspect has been described in detail above, details will not be repeated below.

For example, the baseband chip includes: a processing circuit, where the processing circuit is configured to obtain a first symbol sequence, where the first symbol sequence includes N to-be-transmitted symbols, and N is a positive integer; and the processing circuit is further configured to obtain a second symbol sequence based on the first symbol sequence, where a symbol in the second symbol sequence is obtained by mapping (N+M) modulation symbols to resource elements REs, the (N+M) modulation symbols are obtained by modulating a third symbol sequence, the third symbol sequence includes the N to-be-transmitted symbols in the first symbol sequence and M extension symbols, the M extension symbols ensure that the (N+M) modulation symbols obtained through the modulation have continuous phases, and a phase difference between a phase at a start position and a phase at an end position is an integer multiple of 2π, where M is an integer greater than or equal to zero; and the processing circuit is further configured to generate a first OFDM baseband signal based on the second symbol sequence, where a time domain resource of the first OFDM baseband signal is an OFDM symbol.

Optionally, the baseband processor further includes an interface circuit, which may be configured to output the first OFDM baseband signal.

According to a fifth aspect, a baseband processor is provided. The baseband processor may be applied to the first communication apparatus in the second aspect, and may be configured to implement the functions of the first communication apparatus in the second aspect at the baseband level. Since the content in the second aspect has been described in detail above, details will not be repeated below.

For example, the baseband chip includes: a processing circuit, where the processing circuit is configured to obtain a first symbol sequence, where the first symbol sequence includes N to-be-transmitted symbols, and N is a positive integer; the processing circuit is further configured to: generate a fourth symbol sequence and a first CP sequence located before the fourth symbol sequence based on the first symbol sequence, where the first CP sequence is the last K₁ symbols of the fourth symbol sequence, the symbols in the fourth symbol sequence are (N+M) modulation symbols obtained by modulating a third symbol sequence, the third symbol sequence includes the N to-be-transmitted symbols and M extension symbols from the first symbol sequence, the M extension symbols ensure phase continuity of the fourth symbol sequence obtained through the modulation, and the difference between the phase at the start position and the phase at the end position is an integer multiple of 2π, where M is an integer greater than or equal to zero; the processing circuit is further configured to: generate a first OFDM baseband signal based on the fourth symbol sequence and the first CP sequence, where a time domain resource of the first OFDM baseband signal is an OFDM symbol.

Optionally, the baseband processor further includes an interface circuit, which may be configured to output the first OFDM baseband signal.

According to a sixth aspect, a chip system is provided, comprising a radio frequency chip and the baseband processor according to the fourth or fifth aspect. The baseband processor is configured to generate a first OFDM baseband signal; the radio frequency chip is configured to obtain a bandpass signal based on the first OFDM baseband signal from the baseband processor; and is configured to perform power amplification on the bandpass signal to obtain a power-amplified bandpass signal.

Furthermore, a transmitter is provided, comprising the aforementioned chip system.

Optionally, the transmitter further includes an antenna, configured to transmit the power-amplified bandpass signal.

With reference to the sixth aspect, in some possible implementations of the sixth aspect, the radio frequency chip includes an upconversion module and a power amplifier, where the upconversion module is configured to obtain a bandpass signal based on a first OFDM baseband signal from the baseband chip and output the bandpass signal; and the power amplifier is configured to perform power amplification on the bandpass signal to obtain a power-amplified bandpass signal.

With reference to the sixth aspect, in some possible implementations of the sixth aspect, the bandpass signal is a frequency modulated signal, and the upconversion module is specifically configured to perform direct frequency modulation on a carrier based on the first OFDM baseband signal, to obtain the frequency modulated signal.

Direct frequency modulation on the carrier based on the first OFDM baseband signal means that the upconversion module is controlled by the first OFDM baseband signal to generate a frequency modulated waveform that changes over time, thereby eliminating a need for a frequency mixing operation performed by a frequency mixer. In comparison, this simplifies a structure of the transmitter and an upconversion operation, and reduces power consumption, thereby achieving a lower cost and transmit power consumption.

As an example instead of a limitation, the upconversion module includes a phase-locked loop (PLL), a voltage controlled oscillator (VCO), or a digitally controlled oscillator (DCO). It should be understood that this application does not limit specific components included in the upconversion module, and any component that can generate a frequency-tunable sine wave may be used to replace the PLL, VCO, or DCO to implement direct frequency modulation.

It should also be understood that direct frequency modulation is merely one possible implementation, and should not be construed as imposing any limitation on the scope of protection of this application. The upconversion module may also be configured to perform a frequency mixing operation on the first OFDM baseband signal to output a bandpass signal. In this case, the upconversion module may include one of a PLL, a VCO, or a DCO, and a frequency mixer.

With reference to the sixth aspect, in some possible implementations of the sixth aspect, the power amplifier is a nonlinear power amplifier, where the nonlinear power amplifier may be configured to perform nonlinear power amplification on a bandpass signal.

Based on the aforementioned technical solution, the baseband chip can output a signal with a constant envelope waveform. Therefore, during the radio frequency processing stage, direct frequency conversion can be used to replace the frequency mixing operation, and nonlinear power amplification can be employed to replace linear power amplification. This approach not only enables signal transmission using a method with lower transmit power consumption, thereby significantly saving power and extending the standby time, but also simplifies the transmitter structure-such as by removing the frequency mixer and replacing the linear power amplifier with a nonlinear power amplifier-thus achieving a lower cost.

It should be understood that nonlinear amplification is merely one possible implementation, and should not be construed as imposing any limitation on the scope of protection of this application. The power amplifier may also be a linear power amplifier, configured to perform linear amplification on the bandpass signal. This application does not impose any limitation thereto.

According to a seventh aspect, a communication device is provided, which may be configured to implement the functions of the first communication apparatus in the first aspect or the second aspect. For example, the communication device may include the baseband chip according to the fourth aspect or the fifth aspect, or include the transmitter according to the sixth aspect.

Optionally, the communication device is a terminal device.

According to an eighth aspect, a baseband chip is provided. The baseband chip may be applied to the second communications apparatus in the third aspect, and may be configured to implement the functions of the second communications apparatus in the third aspect at the baseband. Since the content in the third aspect has been described in detail above, details will not be repeated below.

For example, the baseband chip includes an interface circuit and a processing circuit. The interface circuit may be configured to obtain a first OFDM baseband signal; the processing circuit may be configured to: obtain a fourth symbol sequence based on the first OFDM baseband signal, where the fourth symbol sequence includes L modulation symbols, and L is a positive integer; demodulate the fourth symbol sequence to obtain a third symbol sequence, where the third symbol sequence includes N first symbols and M extension symbols, L=M+N, N is a positive integer less than or equal to L, and M is an integer greater than or equal to zero; determine the positions of the M extension symbols in the third symbol sequence and the value of M; and obtain the N first symbols from the third symbol sequence.

According to a ninth aspect, a chip system is provided, comprising a radio frequency chip and the baseband processor according to the eighth aspect. The radio frequency chip is configured to output a first OFDM baseband signal based on a bandpass signal; and the baseband processor is configured to obtain N first symbols based on the first OFDM baseband signal.

Furthermore, this aspect also provides a receiver, comprising the chip system as described above.

Optionally, the receiver further includes an antenna configured to receive a bandpass signal.

According to a tenth aspect, a communication device is provided, which may be configured to implement the functions of the second communication apparatus in the third aspect. For example, the communication device may include the baseband processor according to the eighth aspect, or include the receiver according to the ninth aspect.

Optionally, the communication device is a network device.

According to an eleventh aspect, a communication apparatus is provided, which can implement the communication method described in any one of the first to third aspects. The apparatus includes corresponding units or modules configured to perform the aforementioned method. The units or modules included in the apparatus may be implemented through software and/or hardware. The communication apparatus may be a baseband processor according to the fourth or fifth aspect, or a chip system or transmitter according to the sixth aspect, or a communication device according to the seventh aspect, or a baseband processor according to the eighth aspect, or a chip system or receiver according to the ninth aspect, or a communication device according to the tenth aspect.

According to a twelfth aspect, a computer-readable storage medium is provided, comprising a computer program, wherein when the computer program is run on a computer, the method according to any one of the first to third aspects is performed.

According to a thirteenth aspect, a computer program product is provided, wherein the computer program product comprises a computer program (which may also be referred to as code or instructions), and when the computer program is run, the method according to any one of the first to third aspects is performed.

According to a fourteenth aspect, an embodiment provides a communications system, including the first communications apparatus and the second communications apparatus mentioned above.

With reference to the foregoing aspects, in some possible implementations, the first communications apparatus is a terminal device, and the second communications apparatus is a network device; or the first communications apparatus is a terminal device, and the second communications apparatus is a terminal device; or the first communications apparatus is a network device, and the second communications apparatus is a terminal device.

It should be understood that the fourth aspect to the fourteenth aspect of this application correspond to the technical solutions of the first aspect to the third aspect of this application, and beneficial effects achieved by the aspects and the corresponding feasible implementations are similar, and details are not described again.

### Brief Description of the Drawings

FIG. 1 is a schematic diagram of a communications system suitable for a communication method according to an embodiment of this application;
FIG. 2 is a schematic diagram of several different communication scenarios applicable to the communication method provided in the embodiments of this application;
FIG. 3 is a schematic diagram of a structure of a transmitter currently applied to a terminal device;
FIG. 4 is a schematic diagram of a structure of a transmitter applicable to the communication method provided in the embodiments of this application;
FIG. 5 is a schematic diagram of a signal processing process according to an embodiment of this application;
FIG. 6 is a schematic flowchart of a communication method according to an embodiment of this application;
FIG. 7 is a schematic diagram of a third symbol sequence according to an embodiment of this application;
FIG. 8 is a schematic diagram of generating a fourth symbol sequence based on a third symbol sequence according to an embodiment of this application;
FIG. 9 is another schematic diagram of generating a fourth symbol sequence based on a third symbol sequence according to an embodiment of this application;
FIG. 10 is a schematic diagram of (N+M) xS subcarriers according to an embodiment of this application;
FIG. 11 is a schematic diagram of mapping a fourth symbol sequence to an RE to obtain a second symbol sequence according to an embodiment of this application;
FIG. 12A is a schematic diagram of a processing process performed by a terminal device from obtaining a first symbol sequence to sending a bandpass signal according to an embodiment of this application;
FIG. 12B is another schematic diagram of a processing process performed by a terminal device from obtaining a first symbol sequence to sending a bandpass signal according to an embodiment of this application;
FIG. 13A is still another schematic diagram of a processing process performed by a terminal device from obtaining a first symbol sequence to sending a bandpass signal according to an embodiment of this application;
FIG. 13B is still another schematic diagram of a processing process performed by a terminal device from obtaining a first symbol sequence to sending a bandpass signal according to an embodiment of this application;
FIG. 14 is a schematic diagram of a processing process performed by a network device from receiving a bandpass signal to obtaining a first symbol sequence according to an embodiment of this application;
FIG. 15 is a schematic flowchart of a communication method according to another embodiment of this application;
FIG. 16 is a schematic diagram of generating a fourth symbol sequence and a first CP sequence based on a third symbol sequence according to another embodiment of this application;
FIG. 17 is a schematic diagram of an eighth symbol sequence according to another embodiment of this application;
FIG. 18 is a schematic diagram of a processing process of a terminal device from obtaining a first symbol sequence to sending a bandpass signal according to another embodiment of this application;
FIG. 19 is another schematic diagram of a processing process of a terminal device from obtaining a first symbol sequence to sending a bandpass signal according to another embodiment of this application;
FIG. 20 is a simulation diagram according to an embodiment of this application;
FIG. 21 is a schematic diagram of time domain resources of a reference signal and a data signal according to an embodiment of this application;
FIG. 22 is a schematic diagram of frequency domain resources of a reference signal and a data signal according to an embodiment of this application;
FIG. 23 is a schematic diagram of symbol sequences on a first OFDM symbol and a second OFDM symbol according to an embodiment of this application;
FIG. 24 is a schematic diagram of phase compensation according to an embodiment of this application;
FIG. 25 is another schematic diagram of phase compensation according to an embodiment of this application;
FIG. 26 is a schematic diagram of a processing process of a plurality of symbol sequences according to an embodiment of this application;
FIG. 27 is a schematic flowchart of a communication method according to still another embodiment of this application;
FIG. 28 is a schematic block diagram of a communication apparatus according to an embodiment of this application;
FIG. 29 is a schematic block diagram of a baseband processor according to an embodiment of this application;
FIG. 30 is a schematic block diagram of a communications device according to an embodiment of this application.

### Specific Implementation

The technical solutions in this application are described below with reference to the accompanying drawings.

For ease of understanding embodiments of this application, the following provides several descriptions first.

First, a plurality of letters are used in this application to represent different parameters. For ease of understanding, the letters used herein are briefly described below.
N: a quantity of to-be-transmitted symbols in the first symbol sequence, where N is a positive integer;
M: a quantity of extension symbols in the third symbol sequence, where M is an integer greater than or equal to zero;
K₁: a length of the first CP, where K₁ is a positive integer;
K₂: a length of the second CP, where K₂ is a positive integer;
S: a sampling rate, where S is a positive integer;
Zₚ: a subcarrier spacing between every two adjacent subcarriers in the frequency domain resource of the second symbol sequence, where Zₚ is a positive integer;
**a**: a first symbol sequence, which may include N to-be-transmitted symbols: *a₁, a₂, a₃,..., a*_{N};
**a̅** : a third symbol sequence, which may include N to-be-transmitted symbols and M extension symbols.

Second, in this application, a symbol sequence includes one or more symbols arranged in a specific order, and may also be referred to as a symbol block. The symbol sequence may be used to define symbols and an order between symbols. The symbol sequence in this specification may be a sequence formed by one or more symbols (for example, to-be-transmitted symbols, or to-be-transmitted symbols and extension symbols) before modulation in a specific order, or may be a sequence formed by one or more modulation symbols after modulation in a specific order.

Third, in this application, two modulation operations are performed at a transmit end of a signal (for example, the first communications apparatus mentioned above), which are modulation and CPM or LFM respectively. The modulation is one-dimensional modulation, and is used to modulate bits into modulation symbols (for example, the N to-be-transmitted symbols in the first symbol sequence in this application). CPM or LFM is used to modulate the modulation symbols obtained through modulation onto a phase or a frequency of a carrier.

Correspondingly, at the receive end of the signal (for example, the second communications apparatus mentioned above), two demodulation operations may also be performed: demodulation corresponding to modulation and demodulation corresponding to CPM or LFM. The demodulation corresponding to CPM or LFM may be referred to as CPM demodulation or LFM demodulation for short, and is used to demodulate a modulation symbol sequence from a carrier. The demodulation corresponding to modulation is performed to demodulate the modulation symbol sequence obtained through CPM demodulation or LFM demodulation, to obtain a bit sequence.

In this application, for ease of differentiation and understanding, symbols obtained through CPM or LFM are collectively referred to as modulation symbols, symbols before CPM or LFM are referred to as to-be-transmitted symbols or extension symbols, or are collectively referred to as symbols, and symbols obtained through CPM demodulation or LFM demodulation are referred to as first symbols or extension symbols, or are collectively referred to as symbols.

Fourth, in this application, the offset may be used to indicate an offset degree between two objects or a distance between two objects. For example, the subcarrier offset may be obtained by subtracting the number of two subcarriers from each other.

Fifth, in this application, the indication includes a direct indication (also referred to as an explicit indication) and an implicit indication (also referred to as an indirect indication). The direct indication information A means that the information A is included. The implicit indication information A indicates the information A by using the correspondence between the information A and the information B and the direct indication information B. The correspondence between the information A and the information B may be predefined, prestored, preburned, or preconfigured.

Sixth, in this application, the information C is used to determine the information D, including: the information D is determined based only on the information C, and the information D is determined based on the information C and other information. In addition, the information C is used for determining the information D, and may also be indirectly determined. For example, the information D is determined based on the information E, and the information E is determined based on the information C.

Seventh, for ease of understanding, a signal processing process is described in this application by using a plurality of accompanying drawings. These accompanying drawings are merely examples, and should not constitute any limitation on this application. For example, the order between the steps shown in the drawings can be simply changed according to their functions and internal logic; For another example, all or some of the steps in the accompanying drawings may be performed, provided that a same function as that in the embodiments of this application can be implemented. Eighth, in this application, "at least one" refers to one or more, and "a plurality of" refers to two or more. "and/or" describes an association relationship between associated objects, and indicates that three relationships may exist. For example, A and/or B may indicate a case in which A exists alone, A and B exist simultaneously, and B exists alone, where A and B may be a singular number or a plural number. The character "/" generally indicates that the associated objects are in an "or" relationship, but a case in which the associated objects are in an "and" relationship is not excluded. A specific meaning of the representation may be understood with reference to a context. "At least one of the following" or a similar expression thereof refers to any combination of these items, including any combination of a single item or a plural item. For example, at least one (one) of a, b, or c may represent a, b, and c. a and b; a and c; b and c; Or a and b and c. where a, b, and c may be one or more.

9th, in this application, the use of prefixes such as "first" and "second" is merely intended to facilitate distinguishing and describing different things that belong to the same name category, and does not impose any limitation on an order, size, or quantity of the things. For example, "a first communication apparatus" and "a second communication apparatus" are merely different devices, and do not limit the quantity or priority relationship of the devices; or, for example, "first information" and "second information" are merely different information, and there is no time sequence relationship, size relationship, or priority relationship between the two.

10th, "sending" and "receiving" in this application indicate a direction of signal transmission. For example, "sending information to a network device" may be understood as that an intended destination of the information is the network device, and may include directly sending the information through an air interface, or may include indirectly sending the information through an air interface by another unit or module. "Receiving information from a network device" may be understood as that a source of the information is the network device, and may include directly receiving the information from the network device through an air interface, or may include indirectly receiving the information from the network device through an air interface from another unit or module. "Sending" may also be understood as "output" of a chip interface, and "receiving" may also be understood as "input" of a chip interface.

In other words, sending and receiving may be performed between devices, for example, between a network device and a terminal device; or may be performed within a device, for example, sending or receiving between components, between modules, between chips, or between software or hardware modules within the device by using a bus, a wire, or an interface.

Eleventh, in the embodiments of this application, "when", "if", and "when" mean that an apparatus performs corresponding processing under an objective condition, and do not limit time, and do not require that an apparatus necessarily perform a determining action when implementing these, nor does it mean that there are other limitations.

Twelveth, terms such as "example", "exemplarily", "for example", or "for instance" used in this application are intended to provide an example, an illustration, or a description. Any embodiment or design scheme described as "an example", "exemplarily", "for example", or "for instance" in this application should not be construed as being more preferred or having more advantages than another embodiment or design scheme. To be precise, the use of terms such as "example", "exemplarily", "for example", or "for instance" is intended to present a related concept in a specific manner.

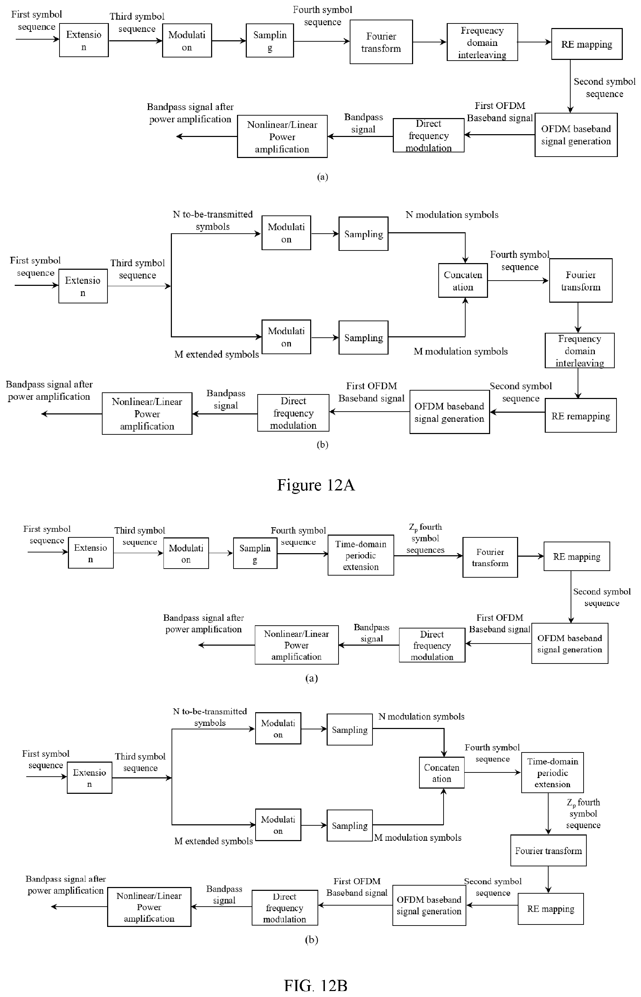

Thirteenth, For ease of understanding, the processing processes of the devices are illustrated through multiple accompanying drawings in the following, such as the processing processes of devices shown in FIG. 12A to FIG. 14A, FIG. 16, FIG. 18, FIG. 19, FIG. 24 to FIG. 26, and the like. Each operation in the processing processes shown in the figures may be implemented by corresponding modules. For example, modulation may be implemented by a modulation module, sampling may be implemented by a sampling module, or modulation and sampling may be implemented by a modulation module. For another example, Fourier transform and frequency domain mapping may be implemented by an RE mapping module; or time domain periodic extension may be implemented by an RE mapping module. For another example, an OFDM baseband signal may be generated by an OFDM baseband generation module. For another example, demodulation may be implemented by a demodulation module. And so on. Such examples are not further listed. Specific implementation manners of the modules for performing the corresponding operations have been described in the foregoing steps 601 to 606. For more detailed descriptions, refer to the foregoing descriptions, and details are not described again. In addition, the division into the modules is merely a division into logical functions, and there may be another division manner in actual implementation. For example, some modules may be combined into one module, or some modules may be split into more modules, and so on. This is not limited in this application.

Fourteenth: The first information to the ninth information in this application are defined only for facilitating differentiation of respective functions, and should not constitute any limitation on a quantity of information, a quantity of times of sending the information, or signaling that carries the information. In some implementations, some information (for example, at least two of the first information to the ninth information) It may be carried in the same signaling, and is implemented by using a sending step (for the sender) or a receiving step (for the receiver). In other implementations, some information (for example, one of the first information to the ninth information) It may also be carried by an IE carried in multiple signaling messages, and implemented by multiple sending steps (for the sender) or multiple receiving steps (for the receiver).

Fifteenth: In this embodiment of this application, a cellular system related to the 3rd generation partnership project (3rd generation partnership project, 3GPP) is used as an example to describe the method provided in the embodiments of this application. However, this shall not constitute any limitation on this application. Based on a same concept, the method provided in this application may also be applied to Zigbee (zigbee), long range radio (long range radio, Lora), Bluetooth (bluetooth, BT), and wireless fidelity (wireless fidelity). Wi-Fi) and other communication networks. For example, the method provided in this application may be applied to a ZigBee network to replace a linear spread spectrum (chirp spread spectrum) in section 14 of the Institute of Electrical and Electronics Engineers (institute of electrical and electronics engineers, IEEE) 802.15.4. CSS) modulation, Gaussian frequency shift keying (GFSK) in Chapter 16, minimum shift keying (minimum shift keying) in Chapter 17, MSK), or the OFDM waveform generated by the scheme instead of the OFDM in Chapter 25 of IEEE 802.15.4, or the like; For another example, the method provided in this application may be applied to Bluetooth communication, so as to replace the GFSK in chapter 3 of the Bluetooth Core Specification (Bluetooth Core Specification). For another example, the method provided in this application may be applied to Lora communication, so as to replace the CSS. For another example, the method provided in this application may be applied to a Wi-Fi system, and an OFDM waveform generated by using this solution is used to replace the OFDM waveform defined in IEEE 802.11.

It may be understood that by applying the solutions provided in this application to different communication networks, a wideband signal may be transmitted by using a CP to reduce interference from a multipath channel.

To better understand embodiments of this application, the following first briefly describes terms used in this application.
1. Constant envelope waveform: refers to a waveform in which the envelope amplitude remains constant. This requires that not only the amplitude remains unchanged, but also the phase is continuous without any jump during the modulation process. The maximum power and average power of the constant envelope waveform are equal everywhere, and the PAPR of the envelope is 1. If the PAPR is expressed in logarithmic form, then the logarithm of 1 is obtained, and the PAPR is 0 dB.
2. Phase modulation (phase modulation, PM) is a modulation manner in which information is transmitted by changing a frequency of a modulated signal by changing a phase of a carrier, and information to be transmitted is superimposed on a carrier signal for transmission by changing the phase of the carrier signal. In other words, an amplitude of the carrier signal is not used to carry information.
3. Frequency modulation (FM) is a modulation method that represents the information to be transmitted by the instantaneous frequency of the carrier wave. It transmits the information to be transmitted by superimposing the information on the carrier signal through frequency changes. In other words, the amplitude of the carrier signal is not used to carry the information.
4. Direct frequency modulation: This method directly controls the oscillation frequency of an oscillator using the modulating signal, so that the oscillation frequency faithfully reflects the variation pattern of the modulating signal without distortion.
5. Linear PA and nonlinear PA: A linear PA is used to linearly amplify signals, where the increase in output signal strength is in a 1:1 relationship with the increase in input signal strength. Signals amplified by a linear PA have minimal distortion, but linear amplification consumes more power.

A nonlinear PA is used to nonlinearly amplify signals, where the input-output function does not maintain a 1:1 proportional increase in amplitude, but instead exhibits an unlimited amplification. Nonlinear methods cause amplitude distortion in the signal, but nonlinear amplification consumes less power.

6. Baseband signal: An original signal sent from the transmitting end without modulation (such as spectrum shifting and transformation). The baseband signal is characterized by a relatively low frequency, near the zero frequency.

The OFDM baseband signal in this application is a CP-based OFDM baseband signal. For ease of understanding and description, the OFDM baseband signal is divided into two parts in this specification: a signal body and a CP. The CP is obtained by copying some symbols at the end of the signal body to the front of the signal body, that is, the CP forms a header of the OFDM baseband signal.

7. Passband signal: Because the baseband signal has a low frequency and a large transmission loss, the signal needs to be modulated to a high frequency. The passband signal is a signal obtained after the baseband signal is modulated by a carrier. By shifting the frequency range of the signal to a higher frequency band, the signal can pass through a channel within a certain frequency range, thereby being transmitted in the channel.

8. OFDM technology: An orthogonal frequency division multiplexing technology, which divides a channel into several orthogonal sub-channels, converts a high-speed data signal into parallel low-speed sub-data streams, and modulates the sub-data streams for transmission on each sub-channel. By using the OFDM technology, multi-carrier transmission can be implemented, thereby fully utilizing the bandwidth of the channel.

7. Target frequency band: In this embodiment of this application, for ease of differentiation and description, a frequency band corresponding to a frequency domain resource actually used to transmit the first OFDM baseband signal is denoted as a target frequency band. A bandwidth of the target frequency band may be less than or equal to a bandwidth of a frequency band allocated by the network device. Because the first OFDM baseband signal is generated based on the second symbol sequence, and the second symbol sequence is generated based on the first symbol sequence, where the first symbol sequence includes N to-be-transmitted symbols, and the first OFDM baseband signal may be obtained through up-conversion to obtain a passband signal, therefore, the frequency domain resource used to transmit the first OFDM baseband signal may also be referred to as a frequency domain resource used to transmit the second symbol sequence, or a frequency domain resource used to transmit the first symbol sequence, or a frequency domain resource used to transmit the N to-be-transmitted symbols, or a frequency domain resource used to transmit the passband signal.

The technical solutions provided in this application may be applied to various communications systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communications system, a future communications system, such as a 6th generation (6th generation, 6G) mobile communications system, or a converged system of a plurality of systems. The technical solutions provided in this application may also be applied to device-to-device (device to device, D2D) communication, vehicle-to-everything (vehicle-to-everything, V2X) communication, machine-to-machine (machine to machine, M2M) communication, machine type communication (machine type communication, MTC), an Internet of Things (internet of things, IoT) communications system, or another communications system.

A device in a communication system may send a signal to another device or receive a signal from another device. The signal may include information, signaling, or data, among others. The term "device" may also be replaced with entity, network entity, communication device, communication module, node, communication node, or the like, and the term "device" is used as an example for description in this disclosure. For instance, a communication system may include at least one terminal device and at least one network device. The network device may send a downlink signal to the terminal device, and/or the terminal device may send an uplink signal to the network device. It can be understood that the terminal device in this disclosure may be replaced with a first communication apparatus, and the network device may be replaced with a second communication apparatus, where both perform the corresponding communication methods described in this disclosure.

The radio access network (RAN) device in this application is a device that has wireless transceiver capabilities. The radio access network device can provide wireless communication function services and can connect terminal devices to a wireless network. The radio access network may also be referred to as an access network device or a network device. The network device in the embodiments of this application may refer to a radio access network (RAN) node (or device) that is applied in a cellular network (or a mobile network) to connect a terminal device to a wireless network, or may be a Zigbee base station, a Bluetooth master (BT master), a Bluetooth low energy (BLE) master (BLE master), a LoRa base station, or a Wi-Fi access point.

For example, the network device may be a base station. The base station may cover various names in the following broad sense, or replace with the following names, for example, a node B (NodeB), an evolved NodeB (evolved NodeB, eNB), and a next generation NodeB (next generation NodeB), gNB), a relay station, an access point, a transmission and receiving point (transmitting and receiving point, TRP), a transmission point (transmitting point, TP), a master station, a secondary station, a multi-standard wireless (MSR) node, a home base station, a network controller, an access node, a radio node, an access point (AP), a transmission node, a transceiver node, a baseband unit (BBU), a remote radio unit, RRU), an active antenna unit (active antenna unit, AAU), a remote radio head (RRH), a central unit (CU), a distributed unit (DU), a radio unit (radio unit, RU), a positioning node, and the like. The base station may be a macro base station, a micro base station, a relay node, a donor node, or the like, or a combination thereof. The base station may also refer to a communications module, a modem, or a chip that is configured to be disposed in the foregoing device or apparatus. Alternatively, the base station may be a mobile switching center, a device that undertakes a base station function in D2D, V2X, or M2M communication, a network side device in a 6G network, a device that undertakes a base station function in a future communications system, or the like. The base station may support networks with the same or different access technologies. Optionally, the RAN node may alternatively be a server, a wearable device, a vehicle, an in-vehicle device, or the like. For example, an access network device in a vehicle external connection (vehicle to everything, V2X) technology may be a roadside unit (road side unit, RSU). A specific technology and a specific device form used by the network device are not limited in this embodiment of this application. In some deployments, the network device mentioned in the embodiments of this application may be a CU, a DU, a device including a CU and a DU, or a control plane CU node (central unit-control plane (CU-CP))) and user plane CU node (central unit-user plane (CU-UP)) and the devices of the DU node. For example, the network device may include a gNB-CU-CP, a gNB-CU-UP, and a gNB-DU.

In some deployments, multiple RAN nodes collaborate to assist terminals in achieving wireless access, with different RAN nodes each implementing a portion of the base station's functions. For example, a RAN node may be a CU, DU, CU-CP, CU-UP, or RU, among others. The CU and DU may be separately deployed, or they may be included within the same network element, such as a BBU. The RU may be included in a radio frequency device or radio frequency unit, for example, an RRU, an AAU, or an RRH.

A RAN node may support one or more types of fronthaul interfaces, where different fronthaul interfaces correspond to DUs and RUs with different functions, respectively. If the fronthaul interface between the DU and the RU is a Common Public Radio Interface (CPRI), the DU is configured to implement one or more baseband functions, and the RU is configured to implement one or more radio frequency functions. If the fronthaul interface between the DU and the RU is another type of interface, compared to CPRI, some baseband functions for downlink and/or uplink would be moved from the DU to the RU for implementation. Specifically, for downlink, some functions such as precoding (precoding), digital beamforming (beamforming, BF), or inverse fast Fourier transform (IFFT) / adding one or more CP components would be implemented in the RU instead of the DU. For uplink, some functions such as digital beamforming (beamforming, BF) or fast Fourier transform (FFT) / removing one or more CP components would be implemented in the RU instead of the DU. In a possible implementation, this interface may be an Enhanced Common Public Radio Interface (eCPRI). Under the eCPRI architecture, the split between the DU and the RU varies according to the eCPRI category (Cat), such as eCPRI Cat A, B, C, D, E, or F.

Using eCPRI Cat A as an example, for downlink transmission, the layer mapping is used as a split point, where the DU is configured to implement the layer mapping and one or more functions (i.e., one or more of encoding, rate matching, scrambling, modulation, and layer mapping) before the layer mapping, while other functions (e.g., one or more of resource element (RE) mapping, digital beamforming (BF), or IFFT/adding a CP) after the layer mapping are moved to the RU for implementation. For uplink transmission, the RE demapping is used as a split point, where the DU is configured to implement demapping and one or more functions (i.e., one or more of decoding, rate matching, scrambling, demodulation, inverse discrete Fourier transform (IDFT), channel equalization, and RE demapping) before the demapping, while other functions (e.g., one or more of digital beamforming (BF) or FFT/removing a CP) after the demapping are moved to the RU for implementation. It can be understood that for function descriptions of the DU and RU corresponding to various types of eCPRI, reference may be made to the eCPRI protocol, and details are not described herein again.

In a possible design, a processing unit used to implement a baseband function in the BBU is referred to as a baseband high layer (base band high, BBH) unit, and a processing unit used to implement a baseband function in the RRU/AAU/RRH is referred to as a baseband low layer (base band low, BBL) unit.

In different systems, the CU (or the CU-CP and the CU-UP), the DU, or the RU may also have different names, but a person skilled in the art may understand the meaning of these names. For example, in an open radio access network (open-RAN, O-RAN, or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP, the CU-UP), the DU, and the RU in this application may be implemented by using a software module, a hardware module, or a combination of a software module and a hardware module. The network device in this application may be a virtualized device, for example, implemented by using general-purpose hardware and instantiated virtualization functions, or by using dedicated hardware and instantiated virtualization functions. The general-purpose hardware may be a server, for example, a cloud server.

In this embodiment of this application, the apparatus used to implement a function of the network device may be a network device. or may be an apparatus that can support the network device in implementing the function, for example, a chip system, a hardware circuit, a software module, or a hardware circuit plus a software module. The apparatus may be installed in the network device or used in matching with the network device. In this embodiment of this application, only an example in which the apparatus used to implement a function of the network device is the network device is used for description, and the solution in this embodiment of this application is not limited.

The terminal device in this application may also be referred to as user equipment (user equipment, UE), an access terminal, a subscriber unit, a subscriber station, a mobile station, a mobile station, a remote station, a remote terminal, a mobile device, a user terminal, a terminal, a wireless communications device, a user agent, or a user apparatus.

The terminal device may be a device for providing voice/data, for example, a handheld device with a wireless connection function or a vehicle-mounted device. Currently, examples of some terminals are: a mobile phone (mobile phone), a tablet computer, a notebook computer, a palmtop computer, a mobile Internet device (mobile internet device, MID), a wearable device, a virtual reality (virtual reality, VR) device, and an augmented reality (augmented reality). AR) device, a wireless terminal in industrial control, a wireless terminal in self driving, a wireless terminal in remote medical surgery, a wireless terminal in smart grid, and transportation safety a wireless terminal in, a wireless terminal in a smart city (smart city), a wireless terminal in a smart home (smart home), a cellular phone, a cordless phone, a session initiation protocol (session initiation protocol, SIP) phone, and a wireless local loop (wireless local loop), a WLL) station, a personal digital assistant (PDA), a handheld device with a wireless communication function, a computing device or other processing device connected to a wireless modem, a wearable device, a terminal device in a 5G network, a terminal device in a future evolved public land mobile network (public land mobile network, PLMN), or the like, a device (device) in a ZigBee network, a device in a Lora network, a Bluetooth slave (BT slave), a BLE slave, a Wi-Fi station (station, STA), and the like. This is not limited in this embodiment of this application.

The terminal device may also be a terminal device in an IoT system, which may also be referred to as an IoT node. IoT is an important component of future information technology development. Its main technical feature is to connect objects through communication technology and Internet connection, thereby achieving an intelligent network that enables human-machine interconnection and machine-to-machine interconnection. The connection can be established through broadband technology or narrowband technology. IoT technology can achieve massive connectivity, deep coverage, and energy saving for terminals through technologies such as narrowband (NB) technology. IoT technologies also include reflective communication technology, spread spectrum technology, ultra-wideband (UWB), and others, which will not be elaborated further here.

In addition, the terminal device may also include sensors such as smart printers, train detectors, and gas stations. Their main functions include collecting data (for some terminal devices), receiving control information and downlink data from network devices, and transmitting electromagnetic waves to send uplink data to the network device.

As an example but not a limitation, in the embodiments of this application, the terminal device may alternatively be a wearable device. The wearable device may also be referred to as a wearable intelligent device, and is a general term for devices that are developed through intelligent design of daily wear by applying wearable technologies, and that can be worn, such as glasses, gloves, watches, clothes, and shoes. The wearable device is a portable device that is directly worn on a body or integrated into user's clothes or accessories. The wearable device is not merely a hardware device, but also implements powerful functions through software support, data exchange, and cloud interaction. In a broad sense, wearable intelligent devices include fully functional devices with large sizes that can implement complete or partial functions without depending on a smartphone, for example, smart watches or smart glasses, and devices that focus on only one type of application function and need to work in conjunction with another device such as a smartphone, for example, various smart bands or smart jewelry for monitoring physical signs.

In the embodiments of this application, an apparatus configured to implement a function of the terminal device may be the terminal device, or may be an apparatus that can support the terminal device in implementing the function, for example, a chip system. The apparatus may be installed in the terminal device or used in conjunction with the terminal device. In the embodiments of this application, the chip system may include a chip, or may include a chip and another discrete component. In the embodiments of this application, an apparatus used to implement a function of the terminal device is merely described as an example, and does not constitute a limitation on the solutions in the embodiments of this application.

The terminal device in this application may be a hardware device, may be a software function running on dedicated hardware or a software function running on general-purpose hardware, or may be a virtualized device, for example, implemented by using general-purpose hardware and instantiated virtualization functions, or by using dedicated hardware and instantiated virtualization functions. The general-purpose hardware may be a server, for example, a cloud server.

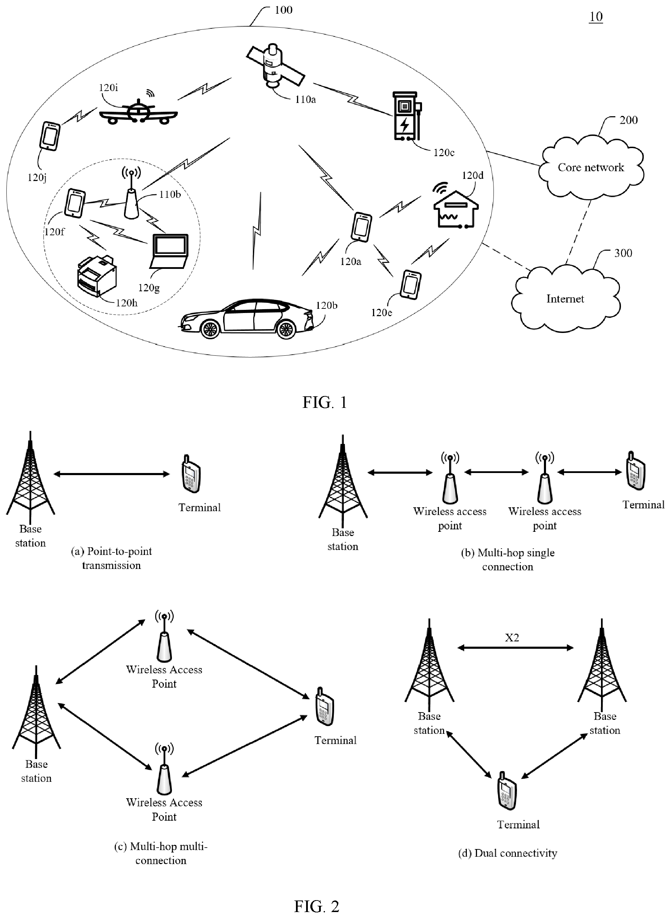

The network device and/or the terminal device may be deployed on land, including an indoor or outdoor device, a handheld device, or an in-vehicle device; or may be deployed on a water surface; or may be deployed on an airplane, a balloon, or a satellite in the air. A scenario in which the network device and the terminal device are located is not limited in embodiments of this application. FIG. 1 is a schematic architectural diagram of a communications system 10 to which an embodiment of this application is applied. FIG. 1 shows a schematic diagram of a possible and non-limitative system architecture. As shown in FIG. 1, the communications system 10 includes a radio access network (RAN) 100 and a core network 200. Optionally, the communications system 10 further includes an Internet 300. The RAN 100 may include at least one RAN node (for example, 110a and 110b in FIG. 1), and may further include at least one terminal device (for example, 120a-120j in FIG. 1). The terminal device may be connected to the radio access network device in a wireless manner. The terminal devices may be connected to each other, and the radio access network devices may be connected to each other through wired or wireless connections. The RAN node 110 is connected to the core network 200 in a wireless or wired manner. The core network device in the core network 200 and the RAN node 110 in the RAN 100 may be different physical devices, or may be a same physical device integrating logical functions of the core network and logical functions of the radio access network.

Figure 1 is merely a schematic diagram, and the communication system 10 may further include other network devices, such as wireless relay devices and wireless backhaul devices, which are not illustrated in Figure 1.

The RAN 100 may be a cellular system related to the 3rd Generation Partnership Project (3GPP), for example, a 4G or 5G mobile communication system, or a future-oriented evolved system (e.g., a 6G mobile communication system). The RAN 100 may also be an ORAN, a cloud radio access network (CRAN), a Zigbee network system, or a wireless fidelity (Wi-Fi) system. Alternatively, the RAN 100 may be a communication system formed by the convergence of two or more of the above systems.

Among them, the RAN node may be a base station deployed in the air, for example, a satellite base station 110a; or may be a base station deployed indoors, for example, a micro base station or an indoor base station 110b. It should be understood that this application does not limit the specific technologies or the specific device forms used by the radio access network device. For ease of description, the following uses an example of a base station as the radio access network device for description.

The terminal device may be a terminal device deployed in the air, for example, the helicopter or the unmanned aerial vehicle 120i in FIG. 1, or may be a terminal device deployed on the ground, for example, the mobile phone 120a, 120e, 120f, and 120j, the vehicle 120b, the computer 110b, or the printer 120h in FIG. 1.

Optionally, the terminal device may be configured to function as a RAN node. For example, the UE may function as a scheduling entity, and provide a sidelink signal between terminal devices in vehicle-to-everything (vehicle-to-everything, V2X), device-to-device (device-to-device, D2D), or peer-to-peer (peer to peer, P2P) communication.

The RAN node and the terminal device may be fixed in position, or may be movable. The RAN node and the terminal device may be deployed on land, including indoor or outdoor, handheld, or vehicle-mounted; or may be deployed on a surface of water; or may be deployed on an airplane, a balloon, or a satellite in the air. An application scenario of the RAN node and the terminal device is not limited in embodiments of this application.

The roles of the RAN node and the terminal device may be relative. For example, the helicopter or the unmanned aerial vehicle 120i in FIG. 1 may be configured as a RAN node, where the terminal device 120i is a RAN node for the terminal devices 120j that access the RAN 100 through the 120i; however, for the RAN node 110a, the 120i is a terminal device, that is, 110a and 120i communicate with each other through a wireless air interface protocol. Certainly, 110a and 120i may also communicate with each other through an interface protocol between RAN nodes. In this case, 120i is a RAN node relative to 110a. Therefore, both the RAN node and the terminal device may be collectively referred to as communication devices. 110a, 110b, and 120a-120j in FIG. 1 may be referred to as communication apparatuses having respective corresponding functions, for example, communication devices having a RAN node function or communication devices having a terminal function.

In the embodiments of this application, the functions of the RAN node may also be performed by a module (such as a chip) in the RAN node, or may be performed by a control subsystem that includes the functions of the RAN node. The control subsystem that includes the functions of the RAN node herein may be a control center in an application scenario (such as smart grid, industrial control, intelligent transportation, or smart city) of the terminal mentioned above. The functions of the terminal device may also be performed by a module (such as a chip) in the terminal device, or may be performed by an apparatus that includes the functions of the terminal device. This is not limited in this application.

Furthermore, this application may be applied to a plurality of specific communication scenarios. For example, this application may be applied to a point-to-point transmission scenario between a RAN node and a terminal or between terminals (for example, point-to-point transmission between a RAN node and a terminal in (a) in FIG. 2), a multi-hop transmission scenario (for example, (b) in FIG. 2 and (c) in FIG. 2) between a RAN node and a terminal, a dual connectivity (dual connectivity, DC) scenario (for example, (d) in FIG. 2) or a multi-connectivity scenario between a plurality of RAN nodes and a terminal. It should be noted that the foregoing specific communication application scenarios are merely examples and do not constitute any limitation. In particular, from the perspective of services, the embodiments of this application are applicable to many service scenarios, such as a data encoding scenario in an extended reality (extended reality, XR) service or an uplink large-capacity scenario. In addition, FIG. 2 does not impose any limitation on the network architecture applicable to this application, and this application does not limit transmissions such as uplink, downlink, access link, backhaul link, or sidelink (sidelink, SL).

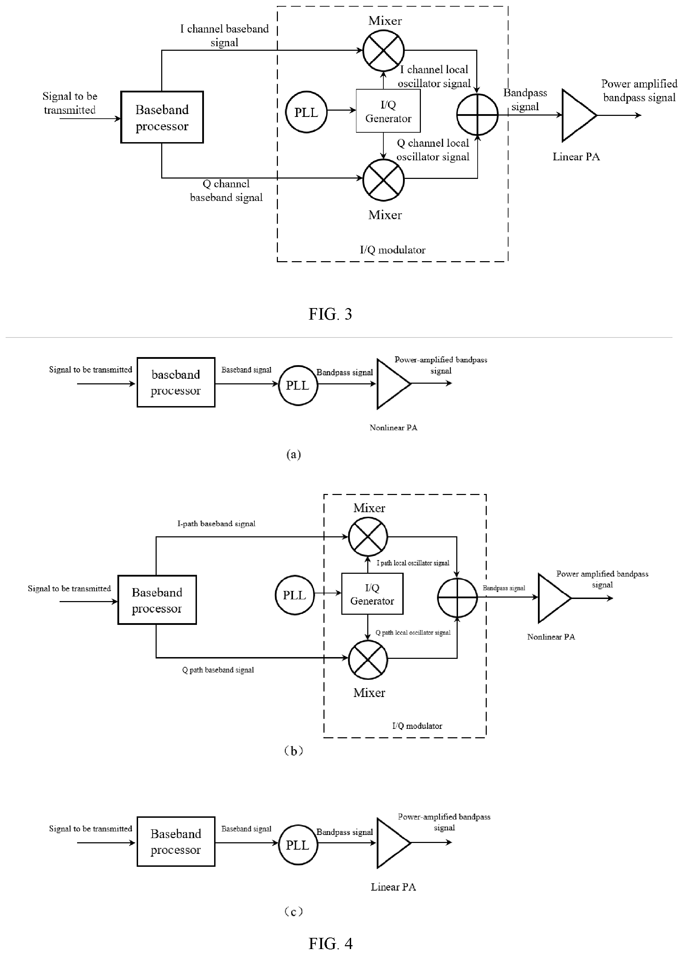

Currently, some terminal devices, such as an IoT node, have low costs and a small size, and usually do not carry a large-capacity battery, and face a problem of short standby life. A possible solution for increasing the standby life of such terminal devices is reducing transmit power. For example, a supported frequency band is reduced, an operating rate is reduced, and a bandwidth of a system is reduced. But the benefits of these programmes are relatively small. To further reduce costs and power consumption, a transmitter architecture of a terminal device is improved in an existing solution. For ease of understanding, the following describes a transmitter architecture with reference to FIG. 3 and FIG. 4.

FIG. 3 is a schematic diagram of a structure of a transmitter currently applied to a terminal device; As shown in FIG. 3, the transmitter includes a baseband chip, an inphase/quadrature (inphase/quadrature, I/Q) modulator, and a linear PA. After receiving the to-be-transmitted signal, the baseband chip may perform baseband processing on the signal, for example, channel coding and modulation. The signals output by the baseband chip include I-channel baseband signals and Q-channel baseband signals. The I/Q modulator may be configured to perform I/Q modulation on the baseband signal. For example, the I/Q modulator includes an I/Q generator, a mixer located in an I path, and a mixer located in a Q path. The I/Q generator (I/Q generator) separately generates an I local oscillator signal and a Q local oscillator signal. The I local oscillator signal may be input to the mixer on the I, and the Q local oscillator signal may be input to the mixer on the Q. On the other hand, the I baseband signal and the Q baseband signal output from the baseband chip may be respectively input to the mixers on the I/Q tributaries. The I-channel mixer may perform a frequency mixing operation (in other words, up-conversion) on the I baseband signal based on the input I-channel local oscillator signal. The Q-channel mixer may perform a frequency mixing operation (in other words, up-conversion) based on the input Q-channel local oscillator signal and the input Q-channel baseband signal. In this way, the I baseband signal and the Q baseband signal are moved to the radio frequency band, and a bandpass signal may be obtained after superimposition. The linear PA may perform linear power amplification on the band-pass signal, and then output a band-pass signal obtained after power amplification. Optionally, the transmitter further includes a PLL, where the PLL may be configured to output, to the I/Q generator, a frequency signal used for frequency conversion processing, and lock the frequency signal to a local oscillator frequency with relatively high precision. In other words, the PLL provides a local oscillator signal.

In the architecture shown in Figure 3, the I/Q modulator needs to generate I-channel and Q-channel local oscillator signals through an I/Q generator, and then upconvert the I-channel and Q-channel baseband signals separately through a mixer. This circuit structure is complex, and the frequency band shifting of the signals requires the use of a mixer, which results in additional power consumption. Moreover, linear power amplification also leads to significant power consumption. Therefore, the transmitter structure illustrated in Figure 3 incurs considerable transmission power consumption.

Therefore, improvements can be made to the transmitter structure shown in Figure 3 to reduce the transmit power consumption from at least one of the two dimensions of upconversion and power amplification.

FIG. 4 is a schematic diagram of a transmitter structure applicable to the communication method provided in the embodiments of this application. FIG. 4 shows three different transmitter structures (a), (b), and (c).

The transmitter shown in (a) of Figure 4 includes a baseband processor, an upconversion module, and a nonlinear PA. After receiving the signal to be transmitted, the baseband processor can perform baseband processing on the signal, such as channel coding, modulation, etc., and then output a baseband signal. The upconversion module can directly perform frequency modulation on the carrier based on the baseband signal to shift the baseband signal to the radio frequency band, thereby obtaining a bandpass signal. The nonlinear PA can perform nonlinear power amplification on the bandpass signal, and then output the power-amplified bandpass signal. As an example rather than a limitation, the upconversion module may include a PLL (as shown in the figure), a VCO, or a DCO. It can be seen that (a) in Figure 4 avoids the frequency band shifting of the signal achieved through a mixer in I/Q modulation by directly performing frequency modulation on the carrier, thereby saving power consumption; and the nonlinear PA can also save significantly more power compared to a linear PA. Therefore, the transmit power consumption is reduced from the two dimensions of upconversion and power amplification.

The transmitter shown in (b) in FIG. 4 includes a baseband chip, an I/Q modulator, and a non-linear PA. After receiving the to-be-transmitted signal, the baseband chip may perform baseband processing on the signal, such as channel coding and modulation, and further output I baseband signals and Q baseband signals. The I baseband signal and the Q baseband signal may be input to the mixer on the I and the mixer on the Q, respectively. The I/Q generator may generate an I local oscillator signal and a Q local oscillator signal, and input the I local oscillator signal to the mixer on the I and the mixer on the Q respectively. The I/Q mixer may perform a mixing operation based on the input I baseband signal, the input I local oscillator signal, the input Q baseband signal, and the input Q local oscillator signal respectively. In this way, the I/Q baseband signals are moved to the radio frequency band, and a bandpass signal is obtained after the I/Q baseband signals are superimposed. The non-linear PA may perform non-linear power amplification on the band-pass signal, and then output the band-pass signal obtained after the power amplification. It can be learned that, in (b) in FIG. 4, non-linear power amplification is performed on the bandpass signal, so that transmit power consumption can be reduced from a dimension of power amplification.

The transmitter shown in (c) in FIG. 4 includes a baseband chip, an up-conversion module (a PLL shown in the figure), and a linear PA. After receiving the to-be-transmitted signal, the baseband chip may perform baseband processing on the signal, for example, channel coding and modulation, and then output the baseband signal. The up-conversion module may directly perform frequency modulation on a carrier based on the baseband signal, so as to migrate the baseband signal to a radio frequency band, to obtain a bandpass signal. The linear PA may perform non-linear power amplification on the band-pass signal, and then output a band-pass signal obtained after power amplification. It can be learned that, in (c) in FIG. 4, a carrier is directly frequency adjusted, so that frequency band shift of a signal is avoided in I/Q modulation by using a mixer, and transmit power consumption is reduced from a dimension of up-conversion.

As those skilled in the art know, both direct frequency modulation and nonlinear PAs impose stringent requirements on waveforms: specifically, a constant envelope waveform with a PAPR of 0 dB is required for data transmission. However, current cellular networks employ OFDM technology. To avoid inter-OFDM-symbol interference, a guard period in the form of a CP is typically inserted between OFDM symbols. The CP is usually formed by copying the signal from the end of an OFDM symbol to its beginning. Even if some continuous phase modulation techniques are used to ensure the phase continuity of the signal itself, it is still not possible to guarantee phase continuity between the CP and the subsequent signal, thus failing to ensure a constant waveform envelope.

In view of this, this application provides a method for performing extension based on a modulated symbol sequence, where several additional symbols are added to make a difference between the phases of the first and last symbols in the modulated symbol sequence an integer multiple of 2π, that is, the phases of the first and last symbols are continuous. Therefore, the baseband signal generated based on the modulated symbol sequence can also meet the requirement of continuous phases at the beginning and end, thereby facilitating the obtaining of a waveform with continuous phases.

On this basis, if some modulation schemes that can ensure phase continuity, such as CPM or LFM, are used, a modulated symbol sequence with continuous phases can be obtained. By combining these modulation technologies that can ensure phase continuity with the method provided in this application, the obtained modulated symbol sequence can meet the requirements of phase continuity and continuous phases at the beginning and end, thereby enabling the generated baseband signal to meet the requirement of phase continuity. CPM and LFM are themselves modulation schemes that modulate the information to be transmitted onto the phase or frequency, while the amplitude remains unchanged during the modulation process. Therefore, a constant envelope waveform with continuous phases and constant amplitude can be obtained.

Not only that, this application further considers a case where data is transmitted on a plurality of consecutive OFDM symbols. By extending the to-be-transmitted symbol sequence, the obtained modulated symbol sequence after modulation of the extended symbol sequence satisfies dual head-to-tail phase self-cycling. That is, if the modulated symbol sequence is divided into two parts, and the length of the latter part is not less than the length of the CP, that is, the number of modulated symbols is K₁, or in other words, the number of modulated symbols included in the latter part is not less than K₁, the two parts respectively satisfy phase continuity at the beginning and end, where K₁ is a positive integer. In this way, the phase continuity at the beginning and end of the modulated symbol sequence obtained after extension and modulation of each OFDM symbol is also continuous with the initial phase of the OFDM symbol, that is, the phase difference satisfies an integer multiple of 2π. In this way, the initial phase of the signal transmitted on each OFDM symbol can be controlled by controlling the initial phase, so that the signal on each OFDM symbol not only has phase continuity on the OFDM symbol itself, but also has phase continuity with the signals on the previous and next OFDM symbols. In this way, a constant envelope waveform can be obtained on a plurality of consecutive OFDM symbols. Therefore, the constant envelope waveform can be applied to the transmitter structure shown in FIG. 4 above, or in other words, the communications device may use a processing manner with lower transmit power consumption to transmit signals, thereby achieving the effect of saving power consumption and improving the standby time.

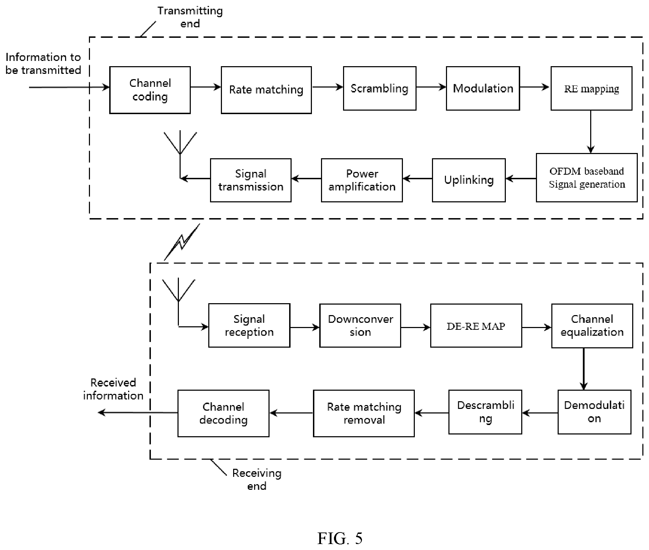

To better understand embodiments of this application, the following briefly describes a processing process after a signal arrives at the physical layer with reference to FIG. 5.

The signal processing process shown in FIG. 5 may be performed by using one of the terminal device or the network device as a transmit end, or may be performed by using one of the terminal device or the network device as a receive end. This is not limited in this application.

As shown in FIG. 5, the physical layer at the transmit end divides an information sequence from an upper layer (for example, a medium access control (medium access control, MAC) layer) into multiple transport blocks (transport block, TB), and adds a cyclic redundancy check (cyclic redundance check, CRC) to each transport block. If a size of a transport block after the check is added exceeds a maximum code block length, the transport block needs to be further divided into several code blocks (code block, CB).

The transmit end may perform channel coding, for example, polar code (polar code) coding, on each code block, to obtain a corresponding encoded code block. Rate matching is performed on the encoded code block, and code blocks obtained after rate matching are concatenated to form a codeword (codeword, CW).

The transmit end may scramble the codeword to generate scrambled bits. The scrambled bits are modulated to obtain modulation symbols. The modulation symbols are mapped to multiple REs after RE mapping, thereby obtaining values carried on each RE. Based on the values carried on these REs, the transmit end may generate an OFDM baseband signal. The OFDM baseband signal may be up-converted to obtain a passband signal, and the passband signal is then transmitted through a transmit antenna after operations such as power amplification.

The receive end may receive a signal through a receive antenna. After receiving the passband signal from the transmit end, the receive end may perform down-conversion on the passband signal to obtain a first OFDM baseband signal. Thereafter, the physical layer of the receive end may sequentially perform processing such as RE demapping, demodulation, descrambling, rate de-matching, and channel decoding on the signal, thereby obtaining an information sequence.

Optionally, after completing RE demapping and before performing demodulation, the receive end may further perform channel equalization. Channel equalization is performed based on a channel obtained through channel estimation, where an equalization algorithm is used to remove the impact of the channel, thereby ensuring correct demodulation of the signal. It may be understood that the information sequence received by the receive end corresponds to the information sequence to be sent by the transmit end.

Optionally, before performing resource element mapping after completing modulation, the transmit end may further perform layer mapping (layer mapping) and precoding. For example, the transmit end may map modulation symbols to multiple layers (layers), and then perform precoding (precoding) on the modulation symbols after the layer mapping to obtain a precoded signal. The precoded signal is then mapped to multiple resource elements (REs) through resource element mapping. Correspondingly, before performing channel equalization after completing resource element demapping, the receive end may further perform layer demapping and precoding, and then perform channel equalization.

A specific implementation of each step in FIG. 5 may be implemented by using an existing technology. For details, refer to related chapters in the 3 ^{rd} Generation Partnership Project (3rd generation partnership project, 3GPP) technical specification (technical specification, TS) 38.211, and details are not described herein.

FIG. 5 is merely an example. In other communication technology-related standards, the signal processing process may include some of these operations. For example, in ZigBee technology, the physical layer operations at the transmit end may include encoding, modulation, transmission, and the like, and the physical layer operations at the receive end may include receiving, demodulation, decoding, and the like.

For the transmit end and physical layer operations in different communication technologies, refer to the prior art of each communication technology, for example, refer to related standards, and no further examples are provided herein.

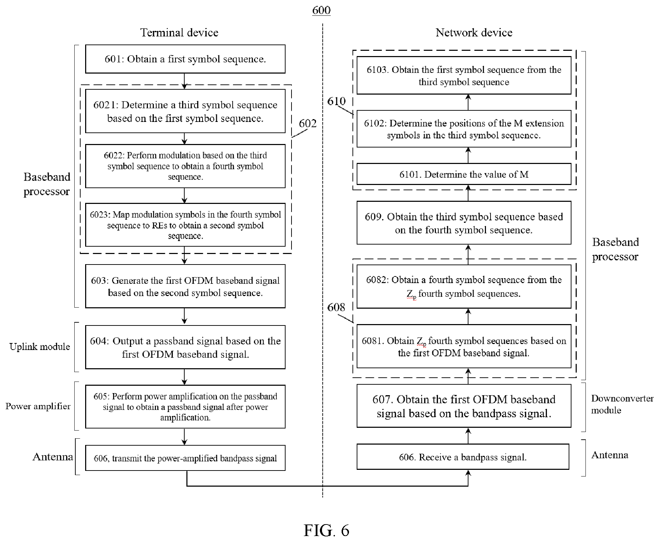

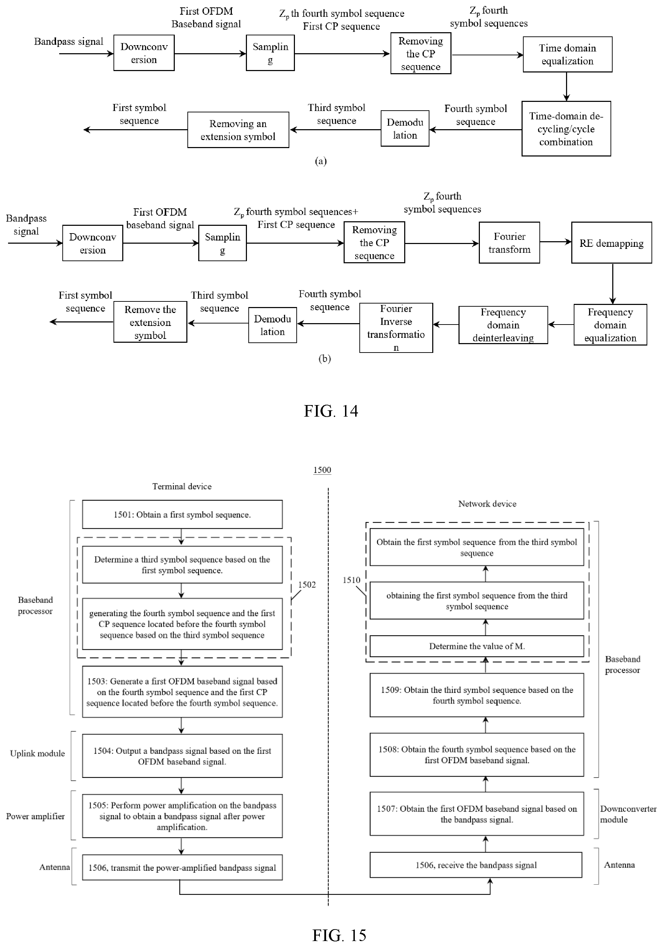

The following will describe in detail the communication method provided in this application with reference to the accompanying drawings. In the following embodiments, the communication method provided in this application is implemented in two different manners by using the procedures shown in FIG. 6 and FIG. 15 as examples. In the procedure shown in FIG. 6, after obtaining the first symbol sequence to be transmitted, the first communications apparatus (for example, the terminal device) may extend the first symbol sequence to obtain a third symbol sequence, then perform RE mapping on the third symbol sequence, and generate the first OFDM baseband signal based on the second symbol sequence obtained through RE mapping. This procedure may be similar to the process of generating an OFDM baseband signal defined in current standards. In the procedure shown in FIG. 15, the first communications apparatus may generate, in advance, the first CP sequence corresponding to the CP of the first OFDM baseband signal before the first OFDM baseband signal is generated. In contrast, it can be seen that in the procedure shown in FIG. 6, the first communications apparatus generates the CP of the first OFDM baseband signal during the generation of the first OFDM baseband signal, without the need to generate the first CP sequence in advance.

In addition, FIG. 6 and FIG. 15 respectively describe a communication method provided in this application by using an example in which the terminal device sends N to-be-transmitted symbols to the network device as an example of data transmission, where the terminal device is an example of the first communications apparatus, and the network device is an example of the second communications apparatus. That is, the terminal device may be replaced with the first communications apparatus, and the network device may be replaced with the second communications apparatus. It should be understood that the methods shown in FIG. 6 and FIG. 15 are not only applicable to a case in which the terminal device sends data to the network device, but also applicable to a case in which the network device sends data to the terminal device, that is, the first communications apparatus may be the network device, and the second communications apparatus may be the terminal device; or the methods may be used for communication between terminal devices, that is, both the first communications apparatus and the second communications apparatus are terminal devices. This is not limited in this application. In addition, the terminal device may be replaced with a component used for the terminal device, such as a chip, a chip system, or a processor, or may be replaced with a logic module or software that can implement all or some functions of the terminal device. The network device may also be replaced with a component used for the network device, such as a chip, a chip system, or a processor, or may be replaced with a logic module or software that can implement all or some functions of the network device.

The following describes these two implementation methods in combination with the accompanying drawings.

FIG. 6 is a schematic flowchart of a communication method according to an embodiment of this application.

The method 600 shown in FIG. 6 may include steps 601 to 610. Among them, steps 601 to 606 are a procedure performed by a terminal device, and steps 606 to 610 are a procedure performed by a network device. For example, steps 601 to 603 may be performed by a baseband processor of the terminal device, steps 604 to 605 may be performed by a radio frequency chip of the terminal device, where step 604 may be performed by an upconversion module in the radio frequency chip, step 605 may be performed by a power amplifier in the radio frequency chip, and the sending operation in step 606 may be performed by an antenna (such as a transmit antenna) of the terminal device. The receiving operation in step 606 may be performed by an antenna (such as a receive antenna) of the network device, step 607 may be performed by a radio frequency chip of the network device, and steps 608 to 610 may be performed by a baseband processor of the network device.

The steps of method 600 are described in detail below.

In step 601, the terminal device obtains a first symbol sequence, which includes N symbols to be transmitted.

For example, the terminal device (which may specifically be the baseband processor within the terminal device) may perform baseband processing on information to be transmitted from a higher layer, such as channel coding, rate matching, modulation, etc., to obtain N symbols to be transmitted. The modulation may include, but is not limited to, one-dimensional modulation schemes such as PAM, π/2-BPSK, BPSK, QPSK, etc.

One-dimensional modulation refers to modulation performed in one of the three dimensions-amplitude, phase, or frequency. Through a predefined mapping relationship, the bit sequence to be transmitted undergoes modulation, resulting in the output of a value in one of the dimensions of the complex plane, or, in other words, the output becomes a real number or an imaginary number.

In step 602, the terminal device obtains a second symbol sequence based on the first symbol sequence.

In this embodiment, the terminal device may obtain the second symbol sequence through modulation.

As described above, if modulation is directly performed based on the first symbol sequence, a phase jump may occur between the CP and the signal body in an OFDM baseband signal generated based on the obtained modulation symbol sequence, which may cause an envelope to be not constant. Therefore, the terminal device may add several extension symbols on the basis of the first symbol sequence, and obtain a head-to-tail phase self-cycling of the modulation symbol sequence through design of the extension symbols, so that a phase between the CP and the signal body of the generated OFDM baseband signal is continuous.

Optionally, step 602 includes:
Step 6021: The terminal device determines a third symbol sequence based on the first symbol sequence;
Step 6022: The terminal device performs modulation based on the third symbol sequence to obtain a fourth symbol sequence;
Step 6023: The terminal device maps modulation symbols in the fourth symbol sequence to REs to obtain the second symbol sequence.

The third symbol sequence includes the N to-be-transmitted symbols and the M extension symbols. In step 6021, the third symbol sequence may be obtained through calculation based on the modulation scheme and the first symbol sequence. That is, the M extension symbols are inserted before, in, or after the N to-be-transmitted symbols, so that the third symbol sequence obtained after the M extension symbols are inserted has a feature of phase self-cycling at the beginning and end after the third symbol sequence is modulated, thereby obtaining a modulated symbol sequence (namely, the fourth symbol sequence described below).

It should be noted that step 6021 and step 6022 are not necessarily performed separately, and may be performed synchronously. These steps are split into two steps for description in this specification merely for ease of understanding. For example, the terminal device may perform modulation while determining the third symbol sequence, and does not necessarily perform modulation after the third symbol sequence is determined.

If modulation is directly performed based on the first symbol sequence, the phase of the first symbol sequence obtained through modulation may be discontinuous at the beginning and end, which may cause discontinuity between the CP and the body signal of the OFDM baseband signal generated from this modulated symbol sequence. Therefore, the terminal device may additionally add several (for example, M) extension symbols based on the first symbol sequence, and implement a phase self-cycling at the beginning and end of the fourth symbol sequence by designing the extension symbols, so that the phase of the CP of the first OFDM baseband signal generated based on the fourth symbol sequence is continuous with the body signal of the first OFDM baseband signal, that is, a waveform with continuous phase is obtained.

It may be understood that when M is zero, the third symbol sequence is the same as the first symbol sequence; when M is greater than zero, the third symbol sequence is different from the first symbol sequence, and the third symbol sequence is a sequence obtained by adding one or more extension symbols to the first symbol sequence while keeping the sequence of the N to-be-transmitted symbols in the first symbol sequence unchanged.

As an example rather than a limitation, modulation in this application is continuous phase modulation. For example, the modulation includes CPM or LFM. Since CPM belongs to phase modulation and LFM belongs to frequency modulation, the modulation described in this specification may also be referred to as phase modulation or frequency modulation.

The following separately describes step 6021 with reference to the CPM and the linear frequency modulation.

### CPM:

It is a non-linear modulation scheme in which information is carried by a carrier phase, and a transmitted signal of the scheme has characteristics of a constant envelope and a continuously changing phase. It is assumed that the first symbol sequence **a** is { *a₁, a₂, a₃,..., a*_{N} }, and includes N to-be-transmitted symbols in total. A bandpass waveform *s*(*t,***a**) obtained by performing CPM on the first symbol sequence a meets the following formula: $s \left(t, a\right) = \sqrt{2 E / T} cos \left(2{πf}_{c}t+φ\left(t, a\right)+{φ}_{01}\right)$

*φ*(*t,***a**) represents a phase of the first symbol sequence**a** at time *t.* By connecting phases at different times, a baseband waveform *φ*(*t*,**a**) may be obtained, which satisfies: $φ \left(t, a\right) = 2 πh {\int }_{- ∞}^{t} {\sum }_{i = - ∞}^{∞} {a}_{i} g \left(τ-iT\right) dτ + {φ}_{02}$; E is an energy symbol; T is a duration of each symbol; for the first symbol sequence **a**, *t* satisfies: 0 ≤ t ≤ NT; *f*_{c} is a carrier frequency; *φ*₀₁ is an initial phase of the carrier; *h* is a modulation index, or a modulation index of the CPM signal; *aᵢ* is an ith to-be-transmitted symbol in the first symbol sequence a; *g*(*t*) is a frequency pulse shaping function, which satisfies: $q \left(t\right) = {\int }_{- ∞}^{t} g \left(τ\right) dτ$, where *q*(*t*) represents a phase pulse shaping function; and *φ*₀₂ is an initial phase of the CPM.

If M additional extension symbols are added to the symbol sequence **a** to obtain a symbol sequence **a̅**, then the symbol sequence **a̅** can meet the characteristic of self-cyclic phase at the beginning and end, provided that the symbol sequence satisfies that the phase difference between the start position and the end position is an integer multiple of 2π.

In this embodiment of this application, it is assumed that the first symbol sequence is the symbol sequence a mentioned above, and the third symbol sequence is the symbol sequence **a̅**. Then, when CPM is performed on the third symbol sequence **a̅**, *t* satisfies: 0 ≤ *t* ≤ (N+M) × T. A phase of a start position of the obtained fourth symbol sequence may be represented as *φ*(0,**a̅**), and a phase of an end position of the fourth symbol sequence may be represented as *φ*((N + M)T,**a̅**). A phase difference between the start position and the end position of the fourth symbol sequence **a̅** is an integer multiple of 2π, which may be represented as: *φ*((N + M)T,**a̅**)= *φ*(0,**a̅**)±2*k*₁*π*, *k*₁ is an integer.

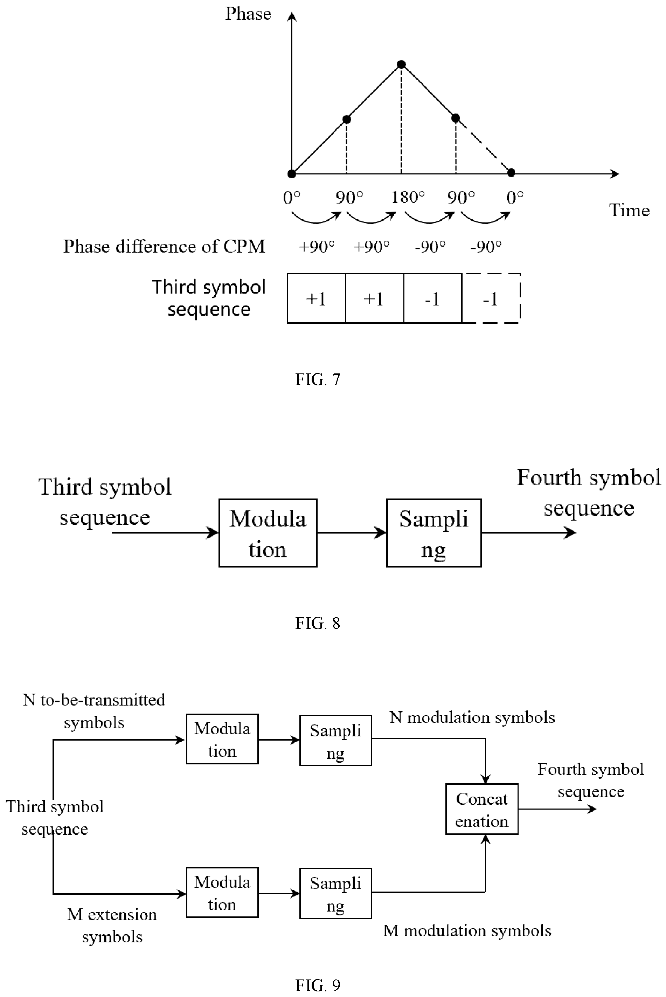

To better understand the relationship between the M extension symbols and the head-to-tail phase self-cycling, the following will illustrate this with reference to an example in FIG. 7. FIG. 7 is an example of a third symbol sequence according to an embodiment of this application. The figure shows a phase change of the third symbol sequence. For ease of distinction, in the figure, N to-be-transmitted symbols and their corresponding phase changes are represented by solid lines, and M extension symbols and their corresponding phase changes are represented by dashed lines.

Assuming that N=3, the N to-be-transmitted symbols in the first symbol sequence may be obtained through PAM, and the symbols are respectively: +1, +1, -1. It is assumed that the mapping relationship between the phase difference between the symbol obtained through PAM and the CPM is as follows: a symbol with a value of +1 corresponds to a phase difference of +90°, a symbol with a value of -1 corresponds to a phase difference of -90°, and the initial phase of the CPM is 0°. Based on this mapping relationship, the phase change of the symbols in the first symbol sequence after passing through the CPM may be obtained as follows: 0°→90°→180°→90°. It can be seen that if no additional extension symbol is added to the first symbol sequence, the phase difference between the phase at the end position of the first symbol sequence (+90°) and the phase at the start position (0°) is 90°, which results in a phase jump. If it is desired that the phase difference between the beginning and end be an integer multiple of 2π, an extension symbol -1 may be added to the end of the N to-be-transmitted symbols, thereby obtaining the third symbol sequence as follows: +1, +1, -1, -1. By adding the extension symbol -1, the phase difference of -90° can adjust the phase at the end position from 90° to 0°, so that the phase difference between this and the phase at the start position is an integer multiple of 2π. In this way, the (N+M) symbols in the third symbol sequence may be obtained as follows: +1, +1, -1, -1.

Certainly, the manner of adding one extension symbol at the end of the N to-be-transmitted symbols is merely one possible manner, but not the only one. For example, more extension symbols may be added at the end of the N to-be-transmitted symbols, or one or more extension symbols may be added at the beginning or another position of the N to-be-transmitted symbols, or the like.

It should be understood that the foregoing formula of the baseband waveform of the CPM is merely an example, and a person skilled in the art may make an equivalent replacement or a simple transformation thereof to obtain another formula, and this application includes but is not limited to this.

### LFM:

It is a spread spectrum modulation technology that does not require a pseudo-random coding sequence. An LFM signal is a signal in which an instantaneous frequency changes linearly with time. A bandpass signal *s*(*t,***a**) obtained by performing LFM on a symbol sequence a meets the following formula: $s \left(t, a\right) = A cos \left(2{πf}_{c}t+\frac{π \left(Ft+φ\left(t, a\right)\right)}{T}t+{φ}_{01}\right)$

Here, *φ*(*t,**a***) represents the phase of the symbol sequence a at time *t,* and by connecting the phases at different times, the baseband waveform can be obtained. For the symbol sequence **a**, *t* satisfies the condition: 0 ≤ *t* ≤ NT; A is the amplitude; *f*_{c} is the carrier frequency; F represents the frequency modulation (FM) slope of the LFM; 1/T denotes the information bandwidth; FT≫1 is the maximum peak of the matched filter output; and *φ*₀₁ is the initial phase of the carrier.

Similar to CPM, if the phase difference between any two adjacent time points of the baseband waveform is an integer multiple of 2π, the baseband waveform satisfies phase continuity, and thus the bandpass waveform also has phase continuity. Therefore, if an additional M number of extension symbols are added to the symbol sequence **a** to obtain a new symbol sequence **a̅**, this new symbol sequence **a̅** will satisfy the characteristic of phase self-cycling at the beginning and end as long as the phase difference between the starting and ending positions is an integer multiple of 2π.

In the embodiments of this application, it is assumed that the first symbol sequence is the aforementioned symbol **a**, and the third symbol sequence is a symbol sequence **a̅**. Then, LFM is performed on the third symbol sequence **a̅**, *where the value of t* satisfies the condition: 0 ≤ *t* ≤ (N+M) × T. The phase at the start position of the obtained fourth symbol sequence may be represented as *φ*(0,**a̅**), the phase at the end position of the fourth symbol sequence **a̅** may be represented as *φ*((N + M)T,**a̅**), and the difference between the phases at the start and end positions of the fourth symbol sequence is an integer multiple of 2π, which may be expressed as: *φ*((N + M)T,**a̅**)=*φ*(0,**a̅**)±2*k*₁*π, φ*(0,**a̅**)±2*k*₁*π where k* ₁ is an integer.

For an explanation of the M extension symbols and the phase self-cycling at the beginning and end, refer to the example in the foregoing with reference to FIG. 7. LFM is similar thereto, and details are not described again.

It should be understood that the foregoing formula of the baseband waveform of the LFM is merely an example. A person skilled in the art may perform equivalent replacement or simple transformation on the formula to obtain another formula, and this application includes but is not limited to this.

In step 6022, the terminal device may perform modulation based on the third symbol sequence. A process in which the terminal device performs modulation based on the third symbol sequence may be implemented in a plurality of possible implementations. The following provides detailed descriptions of different implementations with reference to the accompanying drawings.

A possible implementation of step 6022 is shown in FIG. 8, where a third symbol sequence is modulated to obtain a fourth symbol sequence.

In other words, the third symbol sequence is used as an input for modulation, the third symbol sequence is modulated, and an output of the modulation is the fourth symbol sequence.

The modulation scheme provided in this application is designed to ensure phase-continuous modulation. Therefore, the (N+M) modulation symbols obtained after modulation are continuous, and they can be stored in a digital system only after being sampled. Therefore, after modulation, each modulation symbol obtained through modulation may further be sampled. Sampling may be considered as an independent operation, as shown in the figure, where sampling is performed after modulation. Alternatively, sampling may be considered as a part of modulation, in which case the sampling operation in the figure may be combined with the modulation operation. This is not limited in this application.

Assuming the sampling rate is S, where S is a positive integer, S sample points are sampled for each modulation symbol, and each modulation symbol may be recorded through the S sample points obtained through sampling. Since the third symbol sequence includes (N+M) symbols, (N+M) modulation symbols may be obtained after modulation, and therefore (N+M) × S time domain sample points may be obtained through sampling. In the embodiments of this application, the fourth symbol sequence may refer to (N+M) consecutive modulation symbols obtained through modulation, or may refer to (N+M) × S sample points obtained through sampling. The (N+M) modulation symbols and the (N+M) × S time domain sample points may be considered as two different forms of the fourth symbol sequence.

In another possible implementation of step 6022, as shown in FIG. 9, modulation is separately performed on the N to-be-transmitted symbols and the M extension symbols in the third symbol sequence to obtain N modulated symbols and M modulated symbols; and the M modulated symbols are inserted into the N modulated symbols based on the positions of the M extension symbols in the third symbol sequence, and phase compensation is performed on at least some of the N modulated symbols, so that phases of (M+N) modulated symbols obtained after the M modulated symbols are inserted are continuous (which may correspond to the splicing operation in FIG. 9), thereby obtaining the second symbol sequence.

A position of the M modulated symbols in the third symbol sequence is not limited in this application. The M modulated symbols may be consecutive and located before or after the N to-be-transmitted symbols, or the M modulated symbols may be consecutively or discretely distributed in the N to-be-transmitted symbols. Due to the characteristic of the CPM itself that accumulates phases, when the M modulated symbols are inserted into the N to-be-transmitted symbols, phase continuity between the inserted M modulated symbols and the N modulated symbols needs to be considered, therefore, phase compensation needs to be performed.

For ease of understanding, a phase compensation process is described below by using an example.

For example, it is assumed that N=3, M=1, and locations of the M extension symbols in the third symbol sequence are located before the N to-be-transmitted symbols, for example, denoted as *a*ₑₓ₁, *a*₁, *a*₂, *a*₃, *a*₁ to *a*₃ are to-be-transmitted symbols, *a*ₑₓ₁ is an extension symbol, and by using the extension symbol *a*ₑₓ₁ as a boundary, the third symbol sequence may be divided into two parts, which are respectively denoted as **a₁** (including *a*ₑₓ₁) and **a₂** (including *a*₁, *a*₂, and *a*₃). CPM is used as an example. If CPM is performed on **a₁** and **a₂**, M modulation symbols corresponding to **a₁** and N modulation symbols corresponding to **a₂** are obtained, Phase compensation may be performed on the phases of the N modulation symbols based on a difference between a phase at an end position of the M modulation symbols and a phase at a start position of the N modulation symbols, so that the phase difference between the N modulation symbols and the M modulation symbols is an integer multiple of 2π.

For example, in this example, it is assumed that an initial phase of the CPM is *φ*₀₂, a phase at an end position of the M modulation symbols is *φ*₀₂ + *φ*(T,**a**₁), and a phase at a start position of the N modulation symbols is *φ*₀₂ + *φ*(0,**a**₂). A difference between the phases at the end positions of the M modulation symbols and the phases at the start positions of the N modulation symbols is *φ*(T,**a**₁)- *φ*(0,**a**₂). Therefore, the phases of the N modulation symbols may be compensated according to the phase differences, and the phases at the start positions of the N modulation symbols obtained after the compensation are *φ*₀₂ *+ φ*(0,**a**₂)*+φ*(T,**a**₁)-*φ*(0,**a**₂)*+*2*k*₂*π*, that is, *φ*₀₂ *+φ*(T,**a**₁)+2*k*₂*π*. Phases at end positions of the N modulation symbols obtained through compensation are: *φ*₀₂ +*φ*(3T,**a**₂)+*φ*(*T,***a**₁)-*φ*(0,**a**₂)+ 2*k*₂*π*, and k2 is an integer.In another example, it is assumed that N=3, M=2, M extension symbols are discretely distributed in the third symbol sequence, one extension symbol is located after the first to-be-transmitted symbol in the N to-be-transmitted symbols, and the other extension symbol is located after the N to-be-transmitted symbols. For example, the extension symbol is denoted as: *a*₁, *a*ₑₓ₁, *a*₂, *a*₃, *a*ₑₓ₂, *a*ₑₓ₂, and *a*₁ to *a*₃ are to-be-transmitted symbols, *a*ₑₓ₁ and *a*ₑₓ₂ are extension symbols, and when respectively using the extension symbols *a*ₑₓ₁ and *a*ₑₓ₂ as a boundary, the third symbol sequence may be divided into three parts, which are respectively denoted as **a₁** (including *a*₁ and *a*ₑₓ₁), **a₂** (including *a*₂ and *a*₃), and **a₃** (including *a*ₑₓ₂). Using CPM as an example, if CPM is performed on **a₁**, **a₂**, and **a₃**, one modulation symbol corresponding to **a₁** is obtained (denoted as a symbol block 1 for ease of differentiation and description) 2. Two modulation symbols corresponding to **a₂** (denoted as symbol block 2 for ease of differentiation and description) and one modulation symbol corresponding to **a₃** (denoted as a symbol block 3 for ease of differentiation and description). Except the part whose position is in the front, phase compensation needs to be performed on a phase of a modulation symbol in each of the remaining two parts according to a difference between a phase at an end position of the previous part and a phase at a start position of the next part. For example, the phase of the symbol block 2 needs to be compensated based on a difference between a phase at an end position of the symbol block 1 and a phase at a start position of the symbol block 2. A phase of the symbol block 3 needs to be compensated based on a difference between a phase at an end position of the symbol block 2 after phase compensation and a phase at a start position of the symbol block 3.

For example, in this case, assuming the initial phase of the CPM is *φ*₀₂, the phase at the end position of symbol block 1 is *φ*₀₂ + *φ*(2T,**a**₁), the phase at the start position of symbol block 2 is *φ*₀₂ + *φ*(0,**a**₂), and the difference between the phase at the start position of symbol block 2 and the phase at the end position of symbol block 1 is *φ*(2T,**a**₁)- *φ*(0,**a**₂). Therefore, the phase of symbol block 2 can be compensated based on this phase difference, and the phase at the start position of symbol block 2 obtained after compensation is *φ*₀₂ *+ φ*(2T,**a**₁)+2*k*₃*π*, and the phase at the end position of symbol block 2 is *φ*₀₂ + *φ*(2T,**a**₂)+ *φ*(2T,**a**₁)-*φ*(0,**a**₂)+2*k*₃*π,k*₃ is an integer. After performing phase compensation on symbol block 2, the phase of symbol block 3 can be compensated based on the difference between the phase at the end position of symbol block 2 after compensation and the phase at the start position of symbol block 3. The phase at the start position of symbol block 3 is *φ*₀₂ + *φ*(0,**a**₃), and the difference between the phase at the end position of symbol block 3 and the phase at the start position of symbol block 2 after compensation is *φ*(2T,**a**₂) + *φ*(2T,**a**₁) -*φ*(0,**a**₂) -*φ*(0,**a**₃) + 2*k*₄*π*, *k*₄ is an integer. Therefore, the phase of symbol block 3 can be compensated based on this phase difference, and the phase at the start position of symbol block 3 obtained after compensation is *φ*₀₂ + *φ*(2T, **a**₂)+ *φ*(2T,**a**₁)*-φ*(0,**a**₂)+ 2*k*₄*π,* and the phase at the end position of symbol block 3 is *φ*₀₂ *+ φ*(T,**a**₃)*+φ*(2T,**a**₂)+*φ*(2T,**a**₁)*φ*(0,**a**₂)-*φ*(0,**a**₃)+ 2*k*₄*π.*

The foregoing has provided an example explanation of the phase compensation process by combining different values of M and different positions in the third symbol sequence. A person skilled in the art may perform phase compensation based on any value of M and any position in the third symbol sequence based on the same concept. For brevity, no further examples are provided herein. In addition, the foregoing example merely provides a possible manner of phase compensation, and this application does not exclude the possibility of performing phase compensation in another manner to obtain a fourth symbol sequence with a phase continuity.

Similar to FIG. 8 and FIG. 9, after the N to-be-transmitted symbols and the M extension symbols are modulated, each modulated symbol obtained through modulation may further be sampled. Sampling may be considered as an independent operation, as shown in the figure, where sampling is performed after modulation. Alternatively, sampling may be considered as a part of modulation, in which case the sampling operation in the figure may be combined with the modulation operation. This is not limited in this application.

Assuming that the sampling rate is S, N×S sample points and M×S sample points may be obtained by separately sampling the N modulated symbols and the M modulated symbols. The process of inserting the M modulated symbols into the N modulated symbols, which is actually a process of inserting the M×S sample points into the N×S sample points, is similar to the implementation process, and details are not described again.

The foregoing describes two possible implementations of step 6022 with reference to FIG. 8 and FIG. 9. These implementations are merely examples and should not constitute any limitation on this application. This application does not limit a specific implementation of step 6022.

In the foregoing several implementations, the fourth symbol sequence may be recorded by using a sample point in each implementation. The sampling rate S may be predefined, may be configured by the network device, or may be determined by the terminal device. This is not limited in this application.

If the sampling rate S is configured by the network device, optionally, the method further includes: receiving, by the terminal device, second information from the network device, or sending, by the network device, second information to the terminal device, where the second information is used to indicate the sampling rate S. The network device may indicate the sampling rate S to the terminal device by using the second information, so that the network device can conveniently determine the quantity of subcarriers used for transmitting the second symbol sequence, and then correctly demodulate the received signal.

If the sampling rate S is determined by the terminal device, optionally, the method further includes: sending, by the terminal device, second information to the network device, or receiving, by the network device, second information from the terminal device, where the second information is used to indicate the sampling rate S. The terminal device may also determine the sampling rate S by itself, for example, determine the sampling rate S based on factors such as a transmission rate and demodulation performance, and then indicate the sampling rate S to the network device by using the second information, so that the network device can correctly demodulate the received signal.

After the terminal device obtains the fourth symbol sequence through modulation, it may perform step 6023, mapping each modulated symbol in the fourth symbol sequence to an RE, thereby obtaining the value carried on each RE. For ease of distinction and explanation in this document, the symbol sequence obtained after RE mapping is denoted as the second symbol sequence. The symbols in the second symbol sequence are obtained by mapping the (N+M) modulated symbols from the aforementioned fourth symbol sequence to the REs.

The fourth symbol sequence can be understood as a single carrier (single carrier, SC) symbol based on CP (CP-SC). After converting a CP-SC symbol into the frequency domain, it is mapped onto multiple subcarriers to obtain a DFT-s-OFDM waveform.

It should be understood that in the baseband chip, RE mapping mainly refers to frequency domain mapping at the baseband level. Therefore, frequency domain mapping can be considered as determining the relative positions of subcarriers when mapping a signal to frequency domain resources. In the subsequent step 604, the terminal device will move the signal from the baseband to the target frequency band, which will not be described in detail here.

It should be noted that the RE mapping is a step corresponding to the 3GPP standard. For a specific implementation process, refer to related chapters on RE mapping (RE mapping) in TS 38.211, and details are not described herein. In this application, mapping the (N+M) modulation symbols in the fourth symbol sequence to the REs includes but is not limited to RE mapping. Because the fourth symbol sequence is a symbol sequence in the time domain, and the RE mapping is performed in the frequency domain, the (N+M) modulation symbols in the fourth symbol sequence may be converted to the frequency domain for RE mapping. In other words, mapping the (N+M) modulation symbols in the fourth symbol sequence to the REs includes but is not limited to RE mapping, and further includes operations such as converting the (N+M) modulation symbols in the fourth symbol sequence to the frequency domain. For details, refer to the following detailed descriptions of this step with reference to Manner 1 and Manner 2.

Manner 1: Frequency domain interleaving and mapping are performed after the fourth symbol sequence is converted to the frequency domain, to obtain the second symbol sequence.

As previously mentioned, the fourth symbol sequence includes (N+M)×S sample points, and since the fourth symbol sequence is a time-domain signal, these (N+M)×S sample points are time-domain sample points. By converting these (N+M)×S time-domain sample points to the frequency domain, (N+M)×S frequency-domain sample points can be obtained. These (N+M)×S frequency-domain sample points are then mapped to REs, such that each frequency-domain sample point is mapped to one subcarrier, where each of the (N+M)×S subcarriers may be used to transmit one frequency-domain sample point. By mapping the (N+M)×S frequency-domain sample points to the (N+M)×S subcarriers, the value carried on each RE can be determined, thereby obtaining the second symbol sequence. One possible form of the second symbol sequence is the (N+M)×S frequency-domain sample points carried on the (N+M)×S subcarriers. Starting from the first sample point among these (N+M)×S frequency-domain sample points, every S frequency-domain sample points correspond to one of the (N+M) modulation symbols in the fourth symbol sequence. From a frequency domain perspective, these (N+M)×S frequency-domain sample points may also be referred to as (N+M)×S modulation symbols.

A manner of converting a signal from the time domain to the frequency domain may include but is not limited to FFT, discrete Fourier transform (discrete Fourier transform, DFT), and the like. A manner of converting a signal from the frequency domain to the time domain may include but is not limited to IFFT, IDFT, and the like. This is not limited in this application.

Optionally, the (N+M)×S subcarriers are consecutive. That the (N+M)×S subcarriers are consecutive may specifically mean that numbers of the (N+M)×S subcarriers are consecutive. The (N+M)×S frequency domain samples are mapped to consecutive (N+M)×S subcarriers.

Optionally, the (N+M)×S subcarriers are in a comb shape, and subcarrier offsets between every two adjacent comb teeth are equal. In other words, the (N+M)×S subcarriers are discontinuous, or numbers of the (N+M)×S subcarriers are discontinuous. The subcarrier offset between every two adjacent comb teeth is equal, that is, the number of subcarriers between every two subcarriers that are offset in the (N+M)×S subcarriers is equal. In other words, the (N+M)×S subcarriers are distributed at equal intervals.

It is assumed that the subcarrier offset is Zₚ (Zₚ is a positive integer), that is, there are Zₚ subcarriers between every two adjacent comb teeth that are not used to transmit the N to-be-transmitted symbols. These Zₚ subcarriers may be empty or may be used to transmit another signal. This is not limited in this application. It may be understood that when Zₚ = 1, it indicates that the (N+M)×S subcarriers are consecutive; and when Zₚ >1, it indicates that the (N+M)×S subcarriers are non-consecutive.

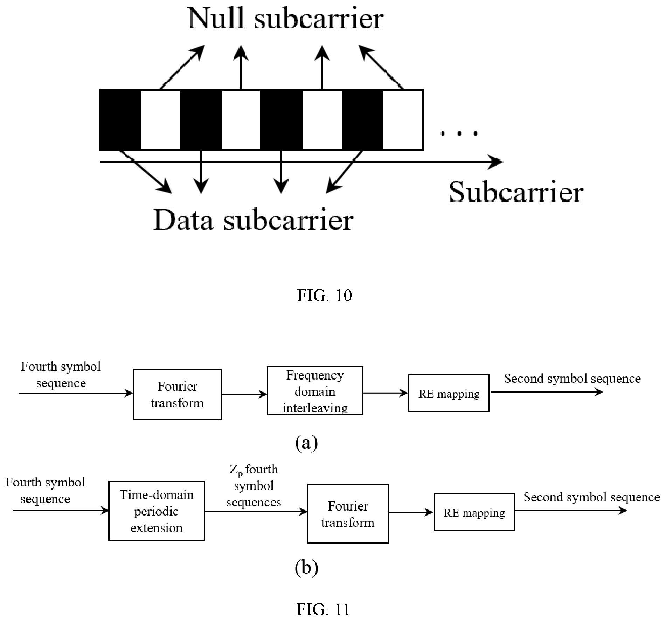

FIG. 10 is a schematic diagram of (N+M)×S subcarriers. FIG. 10 shows a plurality of consecutive subcarriers, where a black block represents a subcarrier used to carry the first OFDM baseband signal, and is an example of the (N+M)×S subcarriers, which may be referred to as a data subcarrier for short. A white block represents a subcarrier that is not used to carry data, and is referred to as an empty subcarrier for short. The black blocks are distributed at equal intervals among the plurality of subcarriers, and the subcarriers are in a comb tooth shape, where a subcarrier offset Zₚ between every two adjacent comb teeth is 2.

When the frequency domain resource allocated by the network device for use by the terminal device includes more than (N+M)×S subcarriers, based on the foregoing design, the (N+M)×S frequency domain samples may be mapped to the frequency domain resource at equal intervals. This frequency domain mapping manner may be referred to as frequency domain interleaved mapping. Simply speaking, frequency domain interleaved mapping includes frequency domain interleaving and RE mapping. Frequency domain interleaving and RE mapping may be performed synchronously, or frequency domain interleaving may be performed first and then RE mapping, or RE mapping may be performed first and then frequency domain interleaving. This is not limited in this application.

Through frequency domain interleaved mapping, there is one or more empty subcarriers between every two subcarriers carrying the frequency domain samples, and the number of empty subcarriers between every two adjacent data subcarriers is the same. Zero padding may be performed on the empty subcarriers between every two adjacent data subcarriers. Therefore, the number of time domain samples that can be formed based on the number of frequency domain samples (N+M)×S and the subcarrier offset Zₚ, is (N+M)×S×Zₚ. The (N+M)×S time domain samples are obtained by sampling (N+M) modulation symbols in the fourth symbol sequence, and the other (N+M)×(Zₚ -1) time domain samples are obtained by zero padding in the frequency domain. It may be understood that Zₚ being 1 indicates that zero padding is not performed in the frequency domain, or in other words, frequency domain interleaving is not performed. In other words, frequency domain interleaving is an optional step.

Manner 2: After period extension is performed on the fourth symbol sequence in the time domain, the fourth symbol sequence is switched to the frequency domain to perform RE mapping, to obtain the second symbol sequence.

It can be learned from the property of Fourier transform that the frequency domain interleaving is equivalent to the time domain period extension, that is, the (N+M)×S time domain sample points are continuously repeated in the time domain, starting from the start position. Every (N+M) ×S time domain sample points may be considered as a period. In terms of time domain, the subcarrier offset Zₚ may also be referred to as a quantity of times that the (N+M)××S time domain sample points repeatedly appear. A person skilled in the art may understand that the foregoing (N+M)××S time domain sample points are continuously repeated in the time domain, so that phase continuity can be implemented.

Therefore, the frequency domain interleaving may also be implemented in a time domain period extension manner. The (N+M)×S time domain sample points are repeatedly extended in the time domain for (Zₚ-1) times, that is, an effect of the foregoing frequency domain interleaving can be implemented. Herein, the quantity of times of repeated extension refers to a quantity of times that the (N+M)×S time domain sample points appear repeatedly except the original (N+M)×S time domain sample points. In other words, if the extension is repeated (Zₚ-1) times, there are (N+M)×S×Zₚ time domain sample points in total, or a quantity of times that the time domain sample points repeatedly appear is Zp times. (N+M)×S×Zₚ time domain sample points are converted into frequency domain, and (N+M)×S×Zₚ frequency domain sample points can be obtained, Then, RE mapping is performed on the (N+M)×S×Zₚ frequency domain sample points, and the (N+M)×S×Zₚ frequency domain sample points may be mapped to the (N+M)×S×Zₚ REs. A value mapped to each RE can be obtained from this. Therefore, another possible form of the second symbol sequence is (N+M)×S×Zₚ frequency domain sample points.

It may be understood that when Zₚ = 1, the (N+M)×S time domain samples do not need to be repeatedly extended in the time domain, or in other words, the number of times for repeated extension is 0. According to the properties of the Fourier transform, there is no need for periodic extension in the time domain, and there is no need for zero-stuffing in the frequency domain, that is, there is no need for interleaving and mapping, or in other words, mapping is performed in the frequency domain without interleaving.

Since the second symbol sequence is used to generate the first OFDM baseband signal, the (N+M)×S subcarriers mentioned above are frequency domain resources used for transmitting the first OFDM baseband signal.

FIG. 11 (a) and (b) each show two manners of mapping symbols in the fourth symbol sequence to REs to obtain the second symbol sequence. In (a) of FIG. 11, the terminal device converts the fourth symbol sequence to the frequency domain through Fourier transform, performs frequency domain interleaving and RE mapping, to obtain values mapped to each RE, that is, the second symbol sequence. In (b) of FIG. 11, the terminal device performs periodic time domain extension on the fourth symbol sequence to obtain Zₚ fourth symbol sequences, then converts these Zₚ fourth symbol sequences to the frequency domain, and performs RE mapping to obtain the second symbol sequence. For more detailed content, refer to the foregoing description, and details are not described again.

When the terminal device processes the to-be-transmitted data, resources allocated for different amounts of to-be-transmitted data may be different, and the number of times time-domain sample points are repeatedly extended may also be different in different transmissions. There may even be a case where repeated extension is not needed, for example, as described above in the case where Zₚ is 1. In this case, the step of time-domain periodic extension may be skipped and not performed. Alternatively, for ease of processing, the terminal device may set different values for Zₚ based on different numbers of times of repeated extension. Therefore, regardless of whether repeated extension of the time-domain sample points is required, the terminal device may perform the step of time-domain periodic extension, although the value of Zₚ on which the step is based may be different.

Zₚ may be predefined in a protocol, configured by a network device, or determined by the terminal device. This is not limited in this application.

If Zₚ is configured by the network device, optionally, the method further includes: the terminal device receives the first information from the network device, or the network device sends the first information to the terminal device, where the first information is used to indicate Zₚ. The network device may indicate Zₚ to the terminal device through the first information, so that the terminal device can perform time-domain periodic extension based on the first information, and transmit the first OFDM baseband signal by using a corresponding resource. When the network device receives the first OFDM baseband signal from the terminal device, the network device may also obtain the first OFDM baseband signal based on the first information.

If Zₚ is determined by the terminal device, optionally, the method further includes: the terminal device sends the first information to the network device, or the network device receives the first information from the terminal device, where the first information is used to indicate Zₚ. Alternatively, the terminal device may determine Zₚ by itself. For example, the terminal device may determine Zp based on a frequency band bandwidth allocated by the network device to the terminal device, a quantity N of to-be-transmitted symbols, a quantity M of extension symbols, a sampling rate S, and the like, and then indicate Zₚ to the network device by using the first information, so that the network device performs RE demapping on the first OFDM baseband signal by using a same parameter.

In step 603, the terminal device generates the first OFDM baseband signal based on the second symbol sequence.

The terminal device may generate the first OFDM baseband signal based on the value of each RE obtained after the RE mapping.

For example, the first OFDM baseband signal meets the following condition: $s {\left(t, \overline{a}\right)}_{baseband} = {\sum }_{k = 0}^{{N}_{grid , x}^{size , μ} {N}_{sc}^{RB} - 1} {a}_{k , l}^{\left(p, μ\right)} {e}^{j 2 π \left(k+{k}_{0}^{μ}-{N}_{grid , x}^{size , μ}{N}_{sc}^{RB}/2\right) Δ f \left(t-{N}_{CP , l}^{μ}{T}_{c}-{t}_{start , l}^{μ}\right)}$

In the formula, ${k}_{0}^{μ}$ satisfies: ${k}_{0}^{μ} = \left({N}_{grid , x}^{start , μ}+{N}_{grid , x}^{size , μ}/2\right) {N}_{sc}^{RB} - \left({N}_{grid , x}^{start , μ}+{N}_{grid , x}^{size , μ}/2\right) {N}_{sc}^{RB} {2}^{{μ}_{0} - μ} .$ where ${a}_{k , l}^{\left(p, μ\right)}$ represents a value mapped to the RE (k, 1) for the antenna port *p* and the subcarrier spacing configuration *µ*, In this embodiment, ${a}_{k , l}^{\left(p, μ\right)}$ may refer to the foregoing values for mapping (N+M)×S frequency domain sample points to (N+M)×S subcarriers respectively. RE (k, 1) represents an RE whose frequency domain index is k and whose time domain index is l; The frequency domain index k may mean that an index of a subcarrier is k, and the subcarrier index is an index relative to the frequency domain reference point. The time domain index l may mean that an index of the OFDM symbol is 1, and the index of the OFDM symbol is an index relative to the time domain reference point. ${t}_{start , l}^{μ}$ represents an offset of the start position of the OFDM symbol corresponding to the first OFDM baseband signal relative to the time domain reference point. Both the frequency domain reference point and the time domain reference point may be predefined. Δ*f* represents a subcarrier spacing, *µ* represents a subcarrier spacing configuration, and *µ* and Δ*f* satisfy Δ*f* = 2*^{µ}*·15 [*kHz*]*. µ*₀ represents a maximum value in a subcarrier spacing configuration that is configured by using a higher layer parameter. ${N}_{grid , x}^{size , μ}$ represents a size of a resource grid, and the size of the resource grid may be represented by a quantity of RBs included in the resource grid; ${N}_{grid , x}^{start , μ}$ represents a start position of a resource grid. ${N}_{sc}^{RB}$ represents the number of subcarriers in each RB; ${N}_{CP , l}^{μ}$ represents a preconfigured CP length, for example, a CP length configured by using a 5G basic parameter set (numerology). *T_{c}* represents a basic time unit (basic time unit) in NR, and in a possible implementation of this embodiment, *T_{c}* meets ${N}_{u}^{μ} {T}_{c} = NT$*,* where ${N}_{u}^{μ} = 2048 κ ⋅ {2}^{- μ}$*, κ* is a constant, for example, *κ* is a ratio 64 of a basic time unit *Tₛ* in LTE to a basic time unit *T_{c}* in NR.

The first OFDM baseband signal may include a signal body and a first CP. In this embodiment, the signal body may be generated based on the second symbol sequence, and the first CP may be obtained by copying some (for example, K₁) symbols at the end of the signal body to before the signal body. Since the second symbol sequence in this embodiment is obtained by mapping (N+M) modulation symbols in the fourth symbol sequence to REs, the first OFDM baseband signal may also be referred to as being generated based on the fourth symbol sequence.

It should be understood that the generation of the OFDM baseband signal may be performed by referring to various existing methods, for example, by referring to 4G standards, 5G standards, or future 6G standards, or the like. This is not limited in this application. The foregoing is merely an example given with reference to the chapters related to OFDM baseband signal generation (OFDM baseband signal generation) in 3GPP TS 38.211. For more detailed content, refer to the standards, and details are not described herein again.

In this embodiment, the length K₁ of the first CP may be configured by the network device, or may be determined by the terminal device.

The terminal device may use a resource corresponding to the frequency band bandwidth allocated by the network device to transmit the first OFDM baseband signal, that is, the bandwidth of the target frequency band is equal to the frequency band bandwidth allocated by the network device. In this case, the length of the first CP is corresponding to the frequency band bandwidth allocated by the network device, and the length of the first CP may be configured by the network device.

Optionally, the method further includes: receiving, by the terminal device, third information from the network device, or sending, by the network device, third information to the terminal device, where the third information is used to indicate the length of the first CP.

For example, the third information may directly indicate a value of K₁, for example, the third information may include the value of K₁, or other information that can be used to identify the value of K₁. Alternatively, the third information may indicate the bandwidth of the frequency band allocated to the terminal device. A ratio of the system bandwidth to the bandwidth of the frequency band allocated to the terminal device is equal to a ratio of a length of a CP corresponding to the system bandwidth to a length of a CP corresponding to the bandwidth of the frequency band allocated to the terminal device, or a ratio of the bandwidth of the frequency band allocated to the terminal device to the length of the CP corresponding to the bandwidth is equal to a ratio of the system bandwidth to the length of the CP corresponding to the system bandwidth. The terminal device may calculate the length of the first CP based on the frequency band bandwidth allocated to the terminal device indicated in the third information, the system bandwidth, and the length of the CP corresponding to the system bandwidth.

It should be noted that the system bandwidth and the CP length corresponding to the system bandwidth may be indicated by using existing signaling. For example, in 5G, the system bandwidth and the CP length corresponding to the system bandwidth may be indicated by using an index of a basic parameter set (numerology). Alternatively, the system bandwidth and the CP length corresponding to the system bandwidth may be indicated by using third information. In this case, in addition to indicating the bandwidth of the frequency band allocated to the terminal device, the third information may further indicate the system bandwidth and the CP length corresponding to the system bandwidth, or indicate a bandwidth different from the system bandwidth and the CP length corresponding to the bandwidth. It should be understood that regardless of whether the third information indicates the system bandwidth and the CP length corresponding to the system bandwidth, the other bandwidth and the CP length corresponding to the other bandwidth are all proportionally scaled according to the system bandwidth and the CP length corresponding to the system bandwidth, and can all be used to determine the length of the first CP in this application.

Alternatively, the terminal device may use some resources in the frequency band allocated by the network device to transmit the first OFDM baseband signal, that is, the bandwidth of the target frequency band is less than the bandwidth of the frequency band allocated by the network device. In this case, the length of the first CP is corresponding to the bandwidth of the target frequency band. A ratio of the system bandwidth to the bandwidth of the target frequency band is equal to a ratio of the CP length corresponding to the system bandwidth to the length of the first CP, or a ratio of the bandwidth of the target frequency band to the length of the first CP is equal to a ratio of the system bandwidth to the CP length corresponding to the system bandwidth. The terminal device may determine the length of the first CP based on the ratio of the system bandwidth to the CP length corresponding to the system bandwidth and the bandwidth of the target frequency band, and may notify the network device of the length of the first CP. The system bandwidth and the CP length corresponding to the system bandwidth may be configured by the network device, for example, indicated by using an index of a basic parameter set (numerology) in 5G.

Optionally, the method further includes: sending, by the terminal device, third information to the network device, or receiving, by the network device, third information from the terminal device, where the third information is used to indicate the length of the first CP.

For example, the third information may directly indicate a value of K₁, for example, the third information may include the value of K₁, or may include other information that can be used to identify the value of K₁. Alternatively, the third information may indicate a bandwidth of the target frequency band, for example, the third information may include a bandwidth value of the target frequency band, or the third information may include information about a start position and an end position of the target frequency band, or the like. The start position and the end position of the target frequency band may be an absolute position, or may be a relative position relative to a preset reference point. This is not limited in this application.

The time domain resource of the first OFDM baseband signal may be an OFDM symbol, that is, the first OFDM baseband signal may be mapped to one OFDM symbol in the time domain. In other words, the fourth symbol sequence may be transmitted through one OFDM symbol. That is, the (N+M)×S time domain samples used to carry the fourth symbol sequence may be transmitted through one OFDM symbol, where a transmission duration of each time domain sample is 1/[(N + M) ×S× Δ*f*], where Δ*f* is a subcarrier spacing, and 1/Δ*f* is a duration of one OFDM symbol.

Optionally, the subcarrier spacing is predefined by the protocol, or is configured by the network device.

If the subcarrier spacing is configured by the network device, optionally, the method further includes: the terminal device receiving seventh information from the network device, or the network device sending seventh information to the terminal device, where the seventh information is used to indicate the subcarrier spacing. By configuring the subcarrier spacing, the network device can implicitly indicate the duration of an OFDM symbol to the terminal device.

It should be noted that the subcarrier spacing may also be indicated through existing signaling, for example, it may be indicated through a numerology index in 5G. In other words, the numerology index can indicate the system bandwidth, the CP length corresponding to the system bandwidth, and the subcarrier spacing.

Based on the aforementioned steps 601 to 603, the terminal device may generate and output the first OFDM baseband signal for subsequent operations.

In a possible implementation, steps 601 to 603 are implemented by a baseband chip in the terminal device.

From the process of steps 601 to 603 described above, it can be seen that this application constructs a modulation symbol sequence with self-cyclic phase at the beginning and end, thereby ensuring phase continuity and constant envelope between the CP sequence and the modulation symbol sequence, achieving a 0 dB PAPR. Then, the modulation symbol sequence of a single carrier is shifted and embedded into a given frequency domain resource, and a CP that satisfies the length constraint is added to ensure compatibility with the OFDM technology, thereby achieving interference-free coexistence.

It should be noted that the RE mapping mentioned above is used to determine which subcarriers the (N+M) modulation symbols converted from the fourth symbol sequence are mapped to in the frequency domain, without considering the frequency domain resources of the first CP. This is because the subcarriers to which the RE mapping is applied are the subcarriers used to transmit the first OFDM baseband signal. After the first OFDM baseband signal is generated, the terminal device can directly use these subcarriers to transmit the first CP. The first CP only occupies different resources in the time domain from the signal body, that is, the first CP is located before the signal body, and this can be achieved through the generation formula of the OFDM baseband signal (such as the formula 3 mentioned above). Therefore, in this embodiment, the object of the RE mapping is the samples corresponding to the (N+M) modulation symbols in the frequency domain, and does not include the first CP, nor does it include the symbols used to generate the first CP (for example, the last K₁ modulation symbols of the (N+M) modulation symbols, which may be referred to as the first CP sequence) or the samples corresponding to these symbols in the frequency domain, or in other words, there is no need to perform RE mapping on the first CP, the first CP sequence, or the samples corresponding to these symbols in the frequency domain. In other words, neither the fourth symbol sequence nor the second symbol sequence includes the first CP or the first CP sequence. Therefore, even if a modulation method that can ensure phase continuity, such as CPM or LFM, is used, if the first symbol sequence is not extended and modulation is directly performed based on the first symbol sequence, a first OFDM baseband signal with phase continuity cannot be obtained.

In step 604, the terminal device outputs a passband signal based on the first OFDM baseband signal.

The terminal device (which may be specifically a radio frequency chip in the terminal device) may move the first OFDM baseband signal to the target frequency band, thereby facilitating transmission. For example, the target frequency band may be a frequency band allocated by the network device for use by the terminal device, for example, the terminal device determines some frequency bands from the frequency band allocated by the network device for performing data transmission; or the target frequency band may be all frequency bands allocated by the network device for use by the terminal device. This is not limited in this application.

In step 603, the terminal device has already mapped (N+M) modulation symbols in the fourth symbol sequence to the frequency domain resource of the baseband through RE mapping, that is, the terminal device has determined the relative location of the frequency domain resource of the first OFDM baseband signal. After the location of the target frequency band is determined, the terminal device may determine the absolute location of the frequency domain resource of the first OFDM baseband signal based on the center frequency of the target frequency band, and then perform up-conversion.

Optionally, before step 604, the method further includes: determining, by the terminal device, an absolute location of a frequency domain resource of the first OFDM baseband signal.

The frequency domain resource of the first OFDM baseband signal includes (N+M)×S subcarriers, and the (N+M)×S subcarriers may be consecutive or may be non-consecutive. Therefore, the center location of the frequency domain resource is found, and the center location is aligned with the center frequency of the target frequency band, thereby determining the absolute location of the frequency domain resource used to transmit the first OFDM baseband signal.

For example, if the (N+M)×S subcarriers are consecutive and (N+M)×S is an odd number, the center location of the (N+M)×S subcarriers is the center frequency of the subcarrier whose number is in the middle (that is, the subcarrier whose number is the median), that is, the center frequency of the subcarrier whose number is ((N + M)×S+1)/2 in the (N+M)×S subcarrier counted from 1. If the (N+M)×S subcarriers are consecutive and (N+M)×S is an even number, the center location of the (N+M)×S subcarriers is the average value of the sum of frequencies of two adjacent subcarriers whose numbers are in the middle, that is, the average value of the sum of frequencies of the subcarrier whose number is (N+M)×S/2 in the (N+M)×S subcarrier and the subcarrier whose number is ((N + M)×S/2+1) in the (N+M)×S subcarrier counted from 1. If the (N+M)×S subcarriers are non-consecutive, the terminal device may first determine a total quantity of subcarriers included between the first subcarrier and the last subcarrier in the (N+M)×S subcarriers, and then determine the center location based on the total quantity of subcarriers. Specifically, the terminal device may perform processing based on the foregoing cases where the total quantity of subcarriers is an odd number or an even number, and for a specific processing manner, refer to the foregoing description, and details are not described again.

The location of the target frequency band may be determined according to the location of the frequency band allocated by the network device to the terminal device. For example, the target frequency band may be the frequency band allocated by the network device to the terminal device, and in this case, the locations of the two frequency bands are the same. Alternatively, the target frequency band may be a part of the bandwidth in the frequency band allocated by the network device to the terminal device. In this case, the location of the target frequency band is within the location of the frequency band allocated by the network device to the terminal device. The location may be specifically determined by the terminal device, or may be indicated by the network device. This is not limited in this application.

The location of the frequency band allocated by the network device to the terminal device may be indicated by the network device by using signaling. Optionally, the method further includes: the network device sends eighth information to the terminal device, or the terminal device receives the eighth information from the network device, where the eighth information is used to indicate the location of the frequency band allocated by the network device to the terminal device.

After the absolute location of the frequency domain resource is determined, the terminal device may perform step 604, that is, move the first OFDM baseband signal to the target frequency band.

A possible implementation of step 604 is that the terminal device directly performs frequency modulation on the carrier based on the first OFDM baseband signal, to obtain a bandpass signal.

In this embodiment of this application, because the first OFDM baseband signal is generated based on the second symbol sequence, and the second symbol sequence is obtained by mapping (N+M) modulation symbols obtained by modulating (N+M) modulation symbols through a phase or frequency modulation manner such as CPM or LFM to REs, where the phase or frequency modulation aims to modulate information to be transmitted into a phase or frequency without carrying information through an amplitude, therefore, the transformation from the baseband signal to the bandpass signal, that is, upconversion, may be implemented by directly performing frequency modulation. Because the signal obtained through direct frequency modulation may be referred to as a frequency modulated signal, the bandpass signal obtained through upconversion performed by means of direct frequency modulation is a frequency modulated signal.

The upconversion is performed by using a direct frequency modulation manner. For example, the upconversion may be implemented by using a device such as a PLL, a VCO, or a DCO that can generate a frequency-tunable sine wave. Compared with the transmitter architecture shown in FIG. 3, this manner can avoid frequency band shifting of a signal implemented through an I/Q modulator using a frequency mixer, thereby saving power consumption, simplifying a circuit structure, and reducing costs.

Of course, the implementation of upconversion is not limited to direct frequency modulation. In another possible implementation, the terminal device performs upconversion on the first OFDM baseband signal using I/Q modulation technology to obtain a bandpass signal.

For example, if the I/Q modulation technology is used, the first OFDM baseband signal generated by the terminal device may be an I-channel baseband signal and a Q-channel baseband signal. That is, the first OFDM baseband signal generated by the terminal device in step 603 is not limited to the form obtained through calculation using formula 3. The terminal device may directly generate the I-channel baseband signal and the Q-channel baseband signal based on the second symbol sequence in step 603, or may calculate the I-channel baseband signal and the Q-channel baseband signal through formula 3 based on the second symbol sequence and then obtain the I-channel baseband signal and the Q-channel baseband signal through mathematical transformation (for example, by separately taking the real part and the imaginary part of the baseband signal in formula 3). This is not limited in this application.

Accordingly, in step 604, after the I baseband signal and the Q baseband signal are output by the baseband chip to the upconversion module, the I baseband signal and the Q baseband signal may be respectively mixed by an I-path mixer and a Q-path mixer to perform frequency mixing, thereby achieving frequency band shifting, and a combined bandpass signal is obtained through superposition. In this case, the terminal device may use, for example, one of a PLL, a VCO, or a DCO, and a mixer to implement upconversion. Compared with direct frequency modulation, this method introduces more components, resulting in higher circuit complexity, as well as higher transmission power consumption and costs.

In step 605, the terminal device performs power amplification on the bandpass signal to obtain a bandpass signal after power amplification.

As described above, power amplification may include linear power amplification or non-linear power amplification. With reference to the three different transmitter structures shown in FIG. 4 above, it can be learned that power amplification of the bandpass signal in this application may be performed in a linear power amplification manner, or may be performed in a non-linear power amplification manner.

For example, in step 604, direct frequency modulation is used, and in step 605, linear power amplification or non-linear power amplification is used. For another example, in step 604, I/Q modulation is used, and in step 605, non-linear power amplification is used. In the foregoing several examples, the transmit power may be reduced from at least one of the two dimensions of upconversion and power amplification.

In a possible implementation, step 604 and step 605 may be implemented by a radio frequency chip in the terminal device.

In step 606, the terminal device sends the bandpass signal after power amplification. Correspondingly, the network device receives the bandpass signal after power amplification.

The terminal device may transmit a power-amplified bandpass signal through the transmit antenna. The network device may receive the bandpass signal from the terminal device through the receive antenna. It can be understood that the bandpass signal received by the network device is the bandpass signal emitted by the terminal device after power amplification.

It should be understood that the steps shown in steps 601 to 606 above are merely examples and should not be construed as imposing any limitation on the operations performed by the terminal device. The terminal device may also perform other operations in addition to the aforementioned ones. For example, the terminal device may perform channel coding and modulation before obtaining the first symbol sequence; or perform digital-to-analog conversion before outputting the first OFDM baseband signal; or perform filtering and gain adjustment before outputting the first OFDM baseband signal, and so on. This application does not impose any limitation thereto.

It should also be understood that during the transmission of a signal from the terminal device to the network device, the signal may undergo distortion due to external interference or due to suboptimal quality of the wireless channel, which may result in a certain bit error rate. Therefore, the first symbol sequence, the second symbol sequence, the third symbol sequence, the extended symbol sequence, and the like described in this specification may be different symbol sequences for the terminal device and the network device. In this specification, the symbol sequences at different processing stages are assigned the same name merely for ease of understanding and illustration.

To better understand the method provided in this application, the following will describe the processing process from obtaining the first symbol sequence to sending a bandpass signal by the terminal device with reference to several different transmitter structures shown in FIG. 4 and the accompanying drawings. As shown in (a) in FIG. 12A, after obtaining the first symbol sequence to be transmitted, the terminal device first extends the first symbol sequence to determine a third symbol sequence, and then modulates the third symbol sequence to obtain a fourth symbol sequence. As mentioned above, the fourth symbol sequence obtained by modulating the third symbol sequence is a continuous symbol sequence, and discrete multiple time domain samples may be obtained after sampling. For brevity, the following and the accompanying drawings do not distinguish between the continuous fourth symbol sequence and the discrete fourth symbol sequence. It may be understood that the fourth symbol sequence may be collectively referred to as a fourth symbol sequence, regardless of whether it is a continuous fourth symbol sequence or a discrete fourth symbol sequence. The terminal device may perform a Fourier transform on the fourth symbol sequence, convert the fourth symbol sequence to a frequency domain, and then perform RE mapping on the fourth symbol sequence to obtain a second symbol sequence. The terminal device may generate the first OFDM baseband signal based on the second symbol sequence. After the first OFDM baseband signal is obtained through the foregoing baseband processing, the terminal device may perform direct frequency modulation on a carrier based on the first OFDM baseband signal, output a bandpass signal, then perform power amplification on the bandpass signal, and send the bandpass signal after power amplification through an antenna. The power amplification may include non-linear power amplification or linear power amplification.

The processing shown in (b) of Figure 12A is similar to that in (a) of Figure 12A, with the difference being the manner in which the fourth symbol sequence is obtained. After obtaining the first symbol sequence to be transmitted, the terminal device first extends the first symbol sequence to determine the third symbol sequence, then modulates and samples the N symbols to be transmitted and the M extension symbols in the third symbol sequence separately to obtain N modulated symbols and M modulated symbols, and then concatenates the N modulated symbols and the M modulated symbols to obtain the fourth symbol sequence. Subsequent operations are the same as those in (a) of Figure 12A, and will not be described in detail again.

The operations of Fourier transform and RE mapping shown in (a) and (b) of Figure 12A correspond to (a) in Figure 11. It can be understood that the operations of Fourier transform and RE mapping shown in (a) and (b) of Figure 12A may also be replaced by (b) in Figure 11, that is, after performing time-domain periodic extension on the fourth symbol sequence, a Fourier transform is performed to convert it to the frequency domain, and then RE mapping is performed. As shown in (a) and (b) of Figure 12B, the specific operations in the figure may be understood with reference to the foregoing descriptions, and will not be described in detail again.

In (a) and (b) of FIG. 12A and (a) and (b) of FIG. 12B, the extension may correspond to step 6021 mentioned above, modulation, sampling, and splicing may correspond to step 6022 mentioned above, the Fourier transform, frequency domain interleaving, and RE mapping may correspond to manner 1 in step 6023 mentioned above, the time domain periodic extension, Fourier transform, and RE mapping may correspond to manner 2 in step 6023 mentioned above, the generation of the OFDM baseband signal may correspond to step 603 mentioned above, direct frequency modulation may correspond to step 604 mentioned above, and nonlinear/linear power amplification may correspond to step 605 mentioned above. For each operation in the figures, refer to the corresponding descriptions of the steps mentioned above, and no further details will be provided.

It should be understood that the processing processes shown in (a) and (b) of FIG. 12A and (a) and (b) of FIG. 12B may be applicable to (a) and (c) in FIG. 4. The difference between (a) and (c) in FIG. 4 lies in the power amplifier. In (a) of FIG. 4, the power amplifier is a nonlinear power amplifier, so the linear/nonlinear power amplification in the processing processes shown in (a) and (b) of FIG. 12A and FIG. 12B may specifically be nonlinear power amplification. In (c) of FIG. 4, however, the power amplifier is a linear power amplifier, so the linear/nonlinear power amplification in the processing processes shown in (a) and (b) of FIG. 12A and FIG. 12B may specifically be linear power amplification.

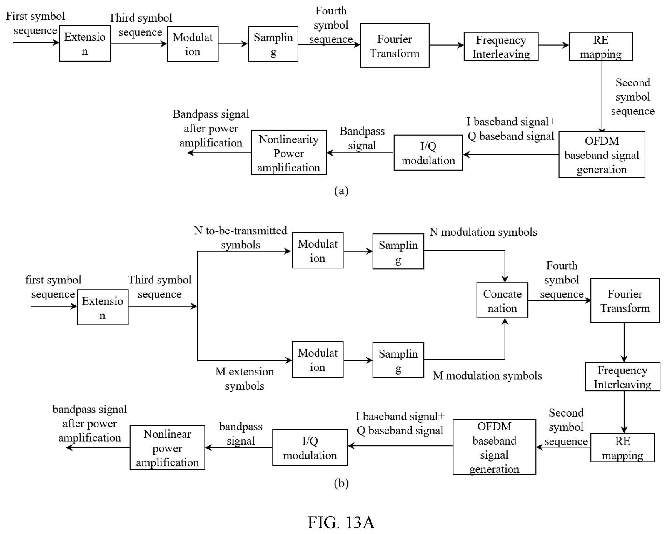

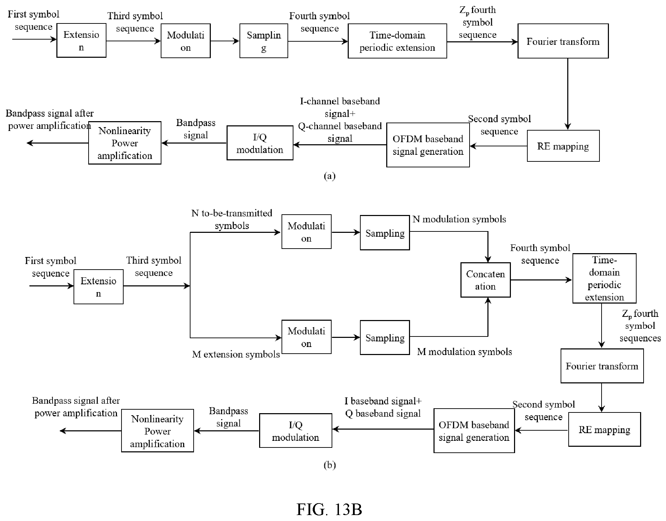

The processing processes shown in (a) and (b) of FIG. 13A and (a) and (b) of FIG. 13B may be applicable to (b) in FIG. 4. The difference between (b) and (a) in FIG. 4 lies in the different devices used for upconversion, and the specific upconversion processing methods shown in (a) and (b) of FIG. 13A and (a) and (b) of FIG. 13B correspondingly are also different from the specific upconversion processing methods shown in (a) and (b) of FIG. 12A and (a) and (b) of FIG. 12B. The specific upconversion processing method shown in (a) and (b) of FIG. 12A and (a) and (b) of FIG. 12B is direct frequency modulation, where an input is the first OFDM baseband signal, and an output is a bandpass signal (or a frequency modulated signal). The specific upconversion processing method shown in (a) and (b) of FIG. 13A and (a) and (b) of FIG. 13B is I/Q modulation, where an input is an I-channel baseband signal and a Q-channel baseband signal, and an output is a bandpass signal, where the I-channel baseband signal and the Q-channel baseband signal are obtained based on the first OFDM baseband signal. The specific generation method has been described above, and details are not repeated herein. Other operations are the same as those in (a) and (b) of FIG. 12A and (a) and (b) of FIG. 12B, and details are not repeated herein.

In step 607, the network device obtains the first OFDM baseband signal based on the bandpass signal.

The network device (which may specifically be a radio frequency chip within the network device) may perform downconversion on the received bandpass signal to obtain the first OFDM baseband signal. The process of downconverting the received bandpass signal by the network device may be implemented using existing downconversion technologies, and this is not limited in this application.

For example, in a RAN (Radio Access Network) where a CU, a DU, and an RU are deployed, the specific implementation of steps 606 and 607 may be as follows: the RU receives a bandpass signal and forwards the received bandpass signal to the DU for processing, thereby obtaining the first OFDM baseband signal; in an ORAN (Open Radio Access Network), the specific implementation of steps 606 and 607 may be as follows: the O-RU receives a bandpass signal, performs partial physical layer processing on the bandpass signal, and then forwards it to the O-DU for processing, thereby obtaining the first OFDM baseband signal.

After the radio frequency chip of the network device obtains the first OFDM baseband signal through downconversion, the first OFDM baseband signal may be output to the baseband chip of the network device for further processing by the baseband chip. Optionally, the network device may also perform noise suppression on the received bandpass signal before downconversion. For example, the network device may use a low noise amplifier (LNA) to perform noise suppression, thereby outputting a signal with a high signal-to-noise ratio (SNR). Since the specific process of using an LNA for noise suppression can be referred to in the prior art, it will not be described in detail here.

In step 608, the network device obtains a fourth symbol sequence based on the first OFDM baseband signal.

The network device (which may specifically be a baseband processor within the network device) may sample the first OFDM baseband signal based on the first OFDM baseband signal received from the radio frequency chip, thereby obtaining a discrete signal. In this embodiment, (N+M)×S×Zₚ+K₁×S) time-domain sample points can be obtained. Since the CP (i.e., the first CP) of the first OFDM baseband signal is the last K₁ symbols of the signal body of the first OFDM baseband signal, the (N+M)×S×Zₚ+K₁ ×S) time-domain sample points obtained through sampling include two parts, each corresponding to the signal body and the first CP respectively, namely Zₚ fourth symbol sequences and the first CP sequence. The network device may obtain the fourth symbol sequence from the first OFDM baseband signal, where S is the sampling rate, Zₚ is the subcarrier offset between two adjacent frequency domain combs, or the number of times the time-domain sample points are repeated.

For example, in a RAN where a CU, a DU, and an RU are deployed, a specific implementation of step 608 may be: the DU obtains a fourth symbol sequence based on the first OFDM baseband signal; in an ORAN, a specific implementation of step 608 may be: the O-DU obtains a fourth symbol sequence based on the first OFDM baseband signal.

Optionally, step 608 specifically includes:
Step 6081: The network device obtains Zₚ fourth symbol sequences based on the first OFDM baseband signal;

The network device (which may specifically be a baseband processor within the network device) may sample the first OFDM baseband signal based on the first OFDM baseband signal from the radio frequency chip to obtain a discrete signal. In this embodiment, ( (N+M) × S × Zₚ + K₁ × S) time domain samples may be obtained. Since the CP (i.e., the first CP) of the first OFDM baseband signal is the last K₁ symbols of the signal body of the first OFDM baseband signal, the ( (N+M) × S × Zₚ + K₁ × S) time domain samples obtained through sampling include two parts, each corresponding to the signal body and the first CP respectively, namely, Zₚ fourth symbol sequences and the first CP sequence.

Step 6082: The network device obtains a fourth symbol sequence from the Zₚ fourth symbol sequences.

For example, the network device may remove the first CP sequence based on the length of the first CP sequence, to obtain Zₚ fourth symbol sequences, and then obtain the fourth symbol sequence through RE demapping. The obtained fourth symbol sequence includes L modulation symbols, where L = M + N, that is, the L modulation symbols include (M + N) modulation symbols obtained by modulating the third symbol sequence consisting of N to-be-transmitted symbols and M extension symbols.

As described above, the length of the first CP may be configured by the network device, or may be determined by the terminal device and indicated to the network device. Therefore, the network device may determine the length of the first CP in advance, and then obtain the second symbol sequence based on the length of the first CP.

Corresponding to the implementation of the terminal device in step 6023, in step 6082, the network device may obtain the fourth symbol sequence by converting the Zₚ fourth symbol sequences into a frequency domain to obtain the fourth symbol sequence through RE demapping and frequency domain de-interleaving, or may directly perform de-periodization or period combination in the time domain to obtain the fourth symbol sequence.

The following describes step 6082 in detail with reference to two different manners.

Manner 1: De-periodic or periodic combination is performed on the Zp fourth symbol sequences in time domain, to obtain the fourth symbol sequence.

In this embodiment, Zp may be 1, or may be greater than 1. If Zp is 1, it indicates that in step 6023, the terminal device does not perform time domain period extension on the fourth symbol sequence, or does not interleave the (N+M)×S frequency domain sample points in the frequency domain. If Zp is greater than 1, it indicates that in step 6023 described above, the terminal device repeatedly extends the fourth symbol sequence for at least one time, or interleaves the (N+M)×S frequency domain sample points in the frequency domain.

Correspondingly, when Zp is greater than 1, the network device may perform time domain deperiodicization or time domain period combination on the Zp fourth symbol sequences, to obtain the fourth symbol sequence.

The time domain de-periodicization specifically refers to removing (Zp-1) periods from the Zp periods, or retaining one complete period in the Zp periods, to obtain the fourth symbol sequence. A reserved period may be one of Zp periods, and a specific period to be retained is not limited in this application. The time domain period combination specifically means that the time domain sample points corresponding to the Zp periods are combined in a manner, for example, by taking an average value or a weighted average value, to obtain a complete period, and use the complete period as the fourth symbol sequence. Time domain sample points corresponding to the Zp periods may be understood as follows: If (N+M)×S sample points in each period of the Zp periods are separately numbered, Sample points with a same number in the Zp periods are corresponding time domain sample points in the Zp periods. It may be understood that the periodic combination combines time domain sample points in a plurality of periods, and therefore has higher gains than the non-periodic combination.

When Zₚ is equal to 1, the fourth symbol sequence may be obtained after the first CP sequence is removed, and time-domain de-cyclic or cyclic combination may be skipped and not performed.

In addition, because the network device processes the OFDM baseband signal, the number of times that time-domain sample points are repeatedly expanded may be different in OFDM baseband signals obtained at different times, that is, the values of Zₚ may be different. The network device may need to perform time-domain de-cyclic or cyclic combination, or may not need to perform time-domain de-cyclic or cyclic combination. As described above, Zₚ may be configured by the network device, or may be determined by the terminal device. Therefore, the network device may obtain the Zₚ in advance, and then determine whether to perform time-domain de-cyclic or cyclic combination.

It may be understood that when Zₚ is greater than 1, the network device may obtain the fourth symbol sequence by performing step 6081 and step 6082; and when Zₚ is equal to 1, the network device may directly obtain the fourth symbol sequence by performing step 6081, and step 6082 may be skipped and not performed.

Manner 2: Convert the Zₚ fourth symbol sequences to the frequency domain, perform RE demapping and frequency domain de-interleaving, and then convert them back to the time domain to obtain the fourth symbol sequence.

Due to the characteristics of Fourier transform, time-domain periodic extension is equivalent to frequency-domain interleaving, and correspondingly, time-domain de-periodization or time-domain periodic combination is also equivalent to frequency-domain de-interleaving. Therefore, when Zₚ is greater than 1, after obtaining the Zₚ fourth symbol sequences, the network device may also convert them to the frequency domain, complete RE demapping and frequency domain de-interleaving in the frequency domain, and then convert them back to the time domain to obtain the fourth symbol sequence. When Zₚ is equal to 1, frequency domain de-interleaving may be skipped and not performed.

It may be understood that when Zₚ is greater than 1, the network device may obtain the fourth symbol sequence by performing steps 6081 and 6082; when Zₚ is equal to 1, the network device may obtain the fourth symbol sequence by performing step 6081, and the network device may perform RE demapping when performing step 6082, without performing frequency domain de-interleaving.

In step 609, the network device performs demodulation based on the fourth symbol sequence to obtain the third symbol sequence.

For example, in a RAN in which a CU, a DU, and an RU are deployed, a specific implementation of step 609 may be: the DU performs demodulation based on the fourth symbol sequence to obtain the third symbol sequence; or in an ORAN, a specific implementation of step 609 may be: the O-DU performs demodulation based on the fourth symbol sequence to obtain the third symbol sequence.

As described in step 6022, the fourth symbol sequence is obtained by the terminal device through modulation based on the third symbol sequence. Therefore, the network device may perform demodulation on the fourth symbol sequence by using a corresponding demodulation manner to obtain the third symbol sequence.

For example, corresponding to the modulation scheme of the terminal device, the demodulation manner of the network device on the fourth symbol sequence includes CPM demodulation or LFM demodulation. A specific manner in which the network device performs demodulation on the fourth symbol sequence may be determined by the network device itself. The network device may perform demodulation in a CPM demodulation or LFM demodulation manner, or may perform demodulation in another manner. For example, a person skilled in the art may make a simple transformation based on the same concept to achieve the same effect as that of CPM demodulation or LFM demodulation. For example, with CPM demodulation as an example, the demodulation in the phase domain is converted to another domain, and then after the demodulation is completed, the demodulation is converted back to the phase domain. Essentially, this still completes CPM demodulation, or is essentially the same as CPM demodulation. There are many such examples, and details are not described again.

Optionally, before step 609, the method further includes: performing channel equalization by the network device.

Channel equalization is performed on a channel obtained based on channel estimation, where an impact of the channel is removed by using an equalization algorithm, thereby ensuring correct demodulation of a signal. Channel equalization may include frequency domain channel equalization (which may be referred to as frequency domain equalization for short) or time domain channel equalization (which may be referred to as time domain equalization for short). In other words, the network device may perform channel equalization in the frequency domain, that is, remove an impact of the channel by using a frequency domain equalization algorithm, or may perform channel equalization in the time domain, that is, remove an impact of the channel by using a time domain equalization algorithm.

For example, when performing step 6082, if the network device obtains the fourth symbol sequence through time domain de-periodization or time domain period combination, the network device may directly perform channel equalization by using a time domain equalization algorithm, thereby avoiding an amount of calculation caused by a time-frequency domain conversion and saving power consumption. Certainly, the network device may alternatively convert a signal to the frequency domain, perform channel equalization in the frequency domain by using a frequency domain equalization algorithm, and then convert the signal back to the time domain.

For another example, when performing step 6082, the network device may obtain the fourth symbol sequence through frequency domain de-interleaving. Alternatively, after converting the first OFDM baseband signal to the frequency domain, the network device may perform channel equalization by using a frequency domain equalization algorithm, and then convert the first OFDM baseband signal back to the time domain after completing frequency domain de-interleaving.

In step 610, the network device obtains the first symbol sequence from the third symbol sequence.

For example, in a RAN in which a CU, a DU, and an RU are deployed, a specific implementation of step 610 may be: the DU obtains the first symbol sequence from the third symbol sequence; or in an ORAN, a specific implementation of step 610 may be: the O-DU obtains the first symbol sequence from the third symbol sequence.

As described in step 602, the third symbol sequence includes the N to-be-transmitted symbols and the M extension symbols. The third symbol sequence obtained by the network device from the second symbol sequence also includes L symbols, where the L symbols include N symbols corresponding to the N to-be-transmitted symbols (denoted as N first symbols for ease of differentiation) and M extension symbols added to obtain a constant envelope waveform. The network device may obtain the first symbol from the third symbol sequence based on the positions of the M extension symbols in the third symbol sequence and the value of M.

Optionally, step 610 includes:
Step 6101: The network device determines a value of M;
Step 6102: The network device determines locations of the M extension symbols in the third symbol sequence;
Step 6103: The network device obtains the first symbol sequence from the third symbol sequence.

The value of M may be predefined in a protocol, or may be configured by the network device, or may be determined by the terminal device. If the value of M is predefined in the protocol or configured by the network device, the network device may learn the value of M in advance, and the value of M may be pre-stored in a memory (for example, a buffer) of the network device. When performing step 6101, the network device may determine the value of M by reading data in the memory. If the value of M is determined by the terminal device, when performing step 6101, the network device may obtain the value of M by parsing sixth information received from the terminal device.

One possible case is that the value of M is zero, that is, L = N, and the L symbols obtained through demodulation by the network device based on the second symbol sequence are all the N first symbols that the terminal device wants to transmit. When performing step 6103, the network device may determine the third symbol sequence as the first symbol sequence based on the value of M being zero, without performing step 6102. It should be understood that in this case, step 609 and step 6103 may also be considered as a same step, and step 6101 may be performed before step 609.

Another possible case is that the value of M is not zero, that is, M > 0 and L > N, and the L symbols obtained through demodulation by the network device based on the second symbol sequence include the N first symbols and M extension symbols. When performing step 6103, the network device may remove the M extension symbols from the third symbol sequence based on the value of M and the positions of the M extension symbols in the third symbol sequence, to obtain the N first symbols, that is, obtain the first symbol sequence.

The positions of the M extension symbols in the third symbol sequence may be predefined in a protocol, or may be configured by the network device, or may be determined by the terminal device. If the positions of the M extension symbols in the third symbol sequence are predefined in the protocol or configured by the network device, the network device may know the positions of the M extension symbols in the third symbol sequence in advance. When performing step 6102, the network device may determine the positions of the M extension symbols in the third symbol sequence by reading data in the memory. If the positions of the M extension symbols in the third symbol sequence are determined by the terminal device, when performing step 6102, the network device may obtain the positions of the M extension symbols in the third symbol sequence by parsing information (for example, the fifth information) received from the terminal device.

For example, assuming that M is 1, and the positions of the M extension symbols in the third symbol sequence are after the N first symbols, the network device may remove the last symbol from the third symbol sequence, and the obtained N symbols are the N first symbols, which may form a first symbol sequence.

The possible cases regarding the positions of the M extension symbols in the third symbol sequence have been described in detail in the previous steps, and thus will not be reiterated here. Regardless of the positions of these M extension symbols in the third symbol sequence, the network device can remove them from the third symbol sequence to obtain the first symbol sequence. For the sake of brevity, no further examples will be provided here.

In a possible implementation, steps 608 to 610 are implemented by a baseband chip in the network device.

To better understand the process by which network devices handle received signals, the following will illustrate with figures the processing procedure of a network device from the moment it receives a bandpass signal until it obtains the first symbol sequence.

The processing procedures shown in (a) and (b) of Figure 14 correspond to those in Figures 12A, 12B, 13A, and 13B, and can be used to process the bandpass signals sent based on the processing procedures illustrated in any one of Figures 12A, 12B, 13A, or 13B.

As shown in (a) in FIG. 14, after receiving the bandpass signal, the network device may first perform downconversion on the received bandpass signal. The bandpass signal is moved to a baseband through downconversion, to obtain a first OFDM baseband signal. After sampling the first OFDM baseband signal, (N+M)×S×Zₚ+K₁ ×S) sample points (or time domain sample points) may be obtained, that is, Zₚ fourth symbol sequences and the first CP sequence. After the CP sequence is removed, the network device may obtain the fourth symbol sequence after performing time domain de-cycling or period combination. Then, the network device may demodulate the fourth symbol sequence to obtain a third symbol sequence, and then remove the M extension symbols from the third symbol sequence to obtain the first symbol sequence. Optionally, to ensure correct demodulation of the fourth symbol sequence, the network device may perform channel equalization before time domain de-cycling. The processing shown in (a) in FIG. 14 is performed in the time domain, and the channel equalization may be time domain equalization.

In (a) of Figure 14, downconversion may correspond to step 607 mentioned above, sampling and removing the CP sequence may correspond to step 6081 mentioned above, time domain equalization and time domain de-cyclization/cyclization combination may correspond to step 6082 mentioned above, demodulation may correspond to step 609 mentioned above, and removing the extension symbol may correspond to step 610 mentioned above. For each operation in the figure, refer to the corresponding descriptions of the steps mentioned above, and no further details will be provided.

Step (b) in Figure 14 is similar to the steps in (a) of Figure 14, except that the operations of obtaining the fourth symbol sequence and performing channel equalization in step 6082 are converted to be performed in the frequency domain. After the CP sequence is removed to obtain Zₚ fourth symbol sequences, these sequences can be converted to the frequency domain through Fourier transform, followed by frequency domain equalization and frequency domain de-interleaving, and then converted back to the time domain through inverse Fourier transform to obtain the fourth symbol sequence. Here, downconversion may correspond to step 607 mentioned above, sampling and removing the CP sequence may correspond to step 6081 mentioned above, Fourier transform, RE demapping, frequency domain equalization, frequency domain de-interleaving, and inverse Fourier transform may correspond to step 6082 mentioned above, demodulation may correspond to step 609 mentioned above, and removing the extension symbol may correspond to step 610 mentioned above. For other steps in (b) of Figure 14, refer to (a) of Figure 14 and the corresponding descriptions of the steps mentioned above, and no further details will be provided.

Based on the aforementioned technical solution, the first symbol sequence is extended to obtain the third symbol sequence, and then modulation and RE mapping are performed based on the third symbol sequence to obtain the second symbol sequence. The second symbol sequence obtained in this way can simultaneously satisfy the following conditions: phase continuity and self-cyclic phase at the beginning and end. Therefore, the signal body of the first OFDM baseband signal generated based on this second symbol sequence and the CP between them also satisfy phase continuity. Based on this, if the modulation technology used is a modulation technology capable of maintaining a constant amplitude, a waveform with phase continuity and constant envelope can be obtained. In this way, a solution can be achieved where phase or frequency modulation technology is combined with OFDM technology to obtain a constant envelope waveform. Since the constant envelope waveform meets the requirements of direct frequency conversion and nonlinear power amplification for waveforms, communication devices can use some more power-efficient methods for signal transmission, thereby improving the standby life of the communication device (especially for small-sized IoT nodes that do not carry large-capacity batteries). In addition, the steps such as RE mapping and OFDM baseband signal generation of the terminal device are consistent with current standards, thus ensuring good compatibility.

After receiving the bandpass signal and demodulating to obtain the third symbol sequence, the network device may obtain the first symbol sequence from the third symbol sequence based on the number of extension symbols and in combination with the positions of the extension symbols in the third symbol sequence, so that the first symbol sequence can be received. It can be seen that the processing process performed by the network device after receiving the bandpass signal does not require significant modifications compared to the current processing process, thus providing good compatibility.

The embodiments provided in this application are illustrated with reference to FIG. 6 to FIG. 14 above. In this embodiment, the generation of the first OFDM baseband signal is basically consistent with the definition in the current 3GPP standard, thus providing good compatibility. As is known from the properties of Fourier transform, the signal processing process in the frequency domain can also be converted to the time domain. For example, RE mapping may also be completed through time domain periodic extension, and the generation of the OFDM baseband signal may also be completed in the time domain. This can eliminate operations such as Fourier transform and inverse transform, thereby reducing the computational load and further saving power consumption. The following will provide a detailed description of another possible embodiment of the communication method provided in this application.

FIG. 15 is a schematic flowchart of a communication method according to another embodiment of this application.

The method 1500 shown in FIG. 15 may include step 1501 to step 1510. Among them, step 1501 to step 1506 are processes performed by a terminal device, and step 1506 to step 1510 are processes performed by a network device. For example, step 1501 to step 1503 may be performed by a baseband processor of the terminal device, step 1504 may be performed by an upconversion module of the terminal device, step 1505 may be performed by a power amplifier of the terminal device, and the sending operation in step 1506 may be performed by an antenna (such as a transmit antenna) of the terminal device. The receiving operation in step 1506 may be performed by an antenna (such as a receive antenna) of the network device, step 1507 may be performed by a downconversion module of the network device, and step 1508 to step 1510 may be performed by a baseband processor of the network device.

The steps of method 1500 are described in detail below.

In step 1501, the terminal device obtains a first symbol sequence, where the first symbol sequence includes N to-be-transmitted symbols.

For specific descriptions of step 1501, refer to step 601 in the method 600 above. For brevity, details are not described again.

In step 1502, the terminal device generates a fourth symbol sequence and a first CP sequence located before the fourth symbol sequence based on the first symbol sequence.

Different from method 600, before generating the first OFDM baseband signal, the terminal device may generate, in advance, the first CP sequence corresponding to the first CP, and then generate the first OFDM baseband signal based on the fourth symbol sequence and the first CP sequence.

In this embodiment, the terminal device may obtain the fourth symbol sequence through modulation. The same as method 600, modulation in this application is continuous phase modulation. For example, the modulation includes CPM or LFM. If the terminal device directly performs modulation based on the first symbol sequence, there may be a case where a phase of an OFDM baseband signal generated based on the modulation changes, which may cause an envelope to be not constant. Therefore, the terminal device may add several (for example, M) extension symbols on the basis of the first symbol sequence, and implement a phase self-cycling between a start and an end of the second symbol sequence through design of the extension symbols, thereby making a phase of the OFDM baseband signal generated based on the second symbol sequence continuous.

M may be an integer greater than or equal to zero. When M is zero, the third symbol sequence is the same as the first symbol sequence; when M is greater than zero, the third symbol sequence is different from the first symbol sequence, and the third symbol sequence is obtained by adding one or more extension symbols to the first symbol sequence while keeping the order of the N to-be-transmitted symbols in the first symbol sequence unchanged.

Optionally, step 1502 includes:
determining, by the terminal device, the third symbol sequence based on the first symbol sequence; and
generating, by the terminal device, the fourth symbol sequence and the first CP sequence located before the fourth symbol sequence based on the third symbol sequence.

For a specific process in which the terminal device determines the third symbol sequence based on the first symbol sequence, refer to the related descriptions in step 6021 in the foregoing method 600. For brevity, details are not described again.

The process of generating the fourth symbol sequence and the first CP sequence based on the third symbol sequence by the terminal device mainly includes the following parts: modulation, CP sequence generation, and RE mapping. The modulation includes modulation performed based on the third symbol sequence, and an output after modulation includes the fourth symbol sequence; the RE mapping is to map each modulated symbol in the fourth symbol sequence to an RE, to obtain a value carried on each RE. In this embodiment, the RE mapping is implemented through time-domain periodic extension. The CP sequence generation is to generate the first CP sequence located before the fourth symbol sequence, where the first CP sequence includes K₁ modulated symbols, corresponding to K₁ symbols at the end of the third symbol sequence. The modulation and the CP sequence generation may be performed simultaneously, or may be performed separately.

For the process of modulating the third symbol sequence by the terminal device, refer to the detailed description of the method 600 in combination with CPM and LFM in the foregoing, where the third symbol sequence is used as an input **a̅** of CPM or LFM to obtain the fourth symbol sequence *φ*(*t*,**a̅**). For specific implementation manners, *φ*(*t*,***a***) refer to the related descriptions in the foregoing, where**"a"**is replaced with " **a̅** " and no further details will be provided.

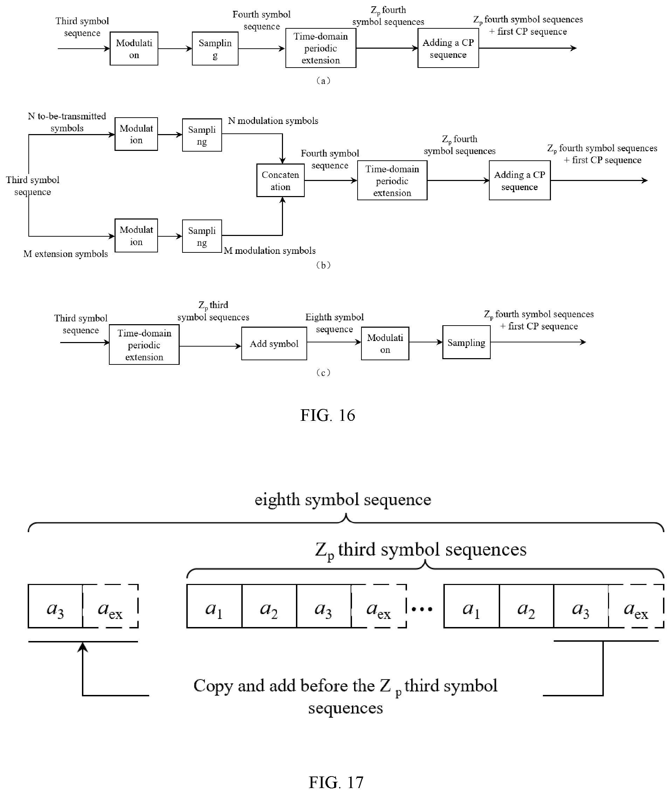

FIG. 16 (a), (b), and (c) show three possible implementations of step 1502.

A possible implementation of step 1502 is shown in (a) of FIG. 16. The terminal device may modulate the third symbol sequence to obtain a fourth symbol sequence; perform time domain periodic extension on the fourth symbol sequence to obtain Zₚ fourth symbol sequences; and add K₁ modulation symbols at the end of the fourth symbol sequence to before the Zₚ fourth symbol sequences (corresponding to the operation of adding the CP sequence in (a) of FIG. 16), to obtain the Zₚ fourth symbol sequences and the first CP sequence located before the Zₚ fourth symbol sequences.

That is, the third symbol sequence is used as an input for modulation, and the third symbol sequence is modulated. Because the third symbol sequence is determined based on the first symbol sequence, the fourth symbol sequence can be a symbol sequence that satisfies a phase self-cycling at the beginning and end, so that the fourth symbol sequence is performed time domain periodic extension, and the obtained Zₚ fourth symbol sequences are phase-continuous; and K₁ modulation symbols at the end of the obtained fourth symbol sequence are added as the first CP sequence to before the fourth symbol sequence, where the first CP sequence and the fourth symbol sequence are also phase-continuous.

Because the modulated symbols obtained through modulation are continuous, they need to be sampled before being stored in a digital system. Therefore, after modulation, each modulated symbol may be sampled. Sampling may be considered as an independent operation, as shown in the figure, where sampling is performed after modulation. Alternatively, sampling may be considered as a part of modulation, in which case the sampling operation in the figure may be combined with the modulation operation. This is not limited in this application.

Assuming that the sampling rate is S, where S is a positive integer, S sampling points are sampled for each modulated symbol, and each modulated symbol may be recorded by using the S sampling points obtained through sampling. Since the third symbol sequence includes (N+M) symbols, (N+M) modulated symbols may be obtained after modulation, and therefore, (N+M)×S sampling points may be obtained through sampling. In this embodiment of this application, the fourth symbol sequence may refer to (N+M) consecutive modulated symbols obtained through modulation, or may refer to (N+M)×S sampling points obtained through sampling. The (N+M) modulated symbols and the (N+M)×S sampling points may be considered as two different forms of the fourth symbol sequence.

In another possible implementation of step 1502, as shown in (b) in FIG. 16, the terminal device may modulate the N to-be-transmitted symbols and the M extension symbols in the third symbol sequence separately, to obtain N consecutive modulation symbols and M consecutive modulation symbols; and insert the M modulation symbols into the N modulation symbols based on the positions of the M extension symbols in the third symbol sequence, and perform phase compensation on at least some of the N modulation symbols, so that phases of (M+N) modulation symbols obtained after the M modulation symbols are inserted are continuous (which may correspond to the splicing operation in (b) in FIG. 16), thereby obtaining the fourth symbol sequence; and after performing time-domain periodic extension on the fourth symbol sequence to obtain Zₚ fourth symbol sequences, the terminal device adds the K₁ modulation symbols at the end of the fourth symbol sequence to before the Zₚ fourth symbol sequences, to obtain the Zₚ fourth symbol sequences and the first CP sequence located before the Zₚ fourth symbol sequences.

As this application does not limit the positions of the M modulation symbols in the third symbol sequence, the M modulation symbols may be consecutive and located before or after the N to-be-transmitted symbols, or the M modulation symbols may be consecutively or discretely distributed among the N to-be-transmitted symbols. Due to the characteristic of CPM where the phase is accumulated, when the M modulation symbols are inserted into the N to-be-transmitted symbols, phase continuity between the inserted M modulation symbols and the N modulation symbols needs to be considered. Therefore, phase compensation is required. For a manner of performing phase compensation on the fourth symbol, refer to the second implementation of step 6022 in the method 600 described above with reference to the example, and details are not described again.

Similar to (a) in FIG. 16, after the N to-be-transmitted symbols and the M extension symbols are modulated, each modulation symbol obtained through modulation may further be sampled. Sampling may be considered as an independent operation, as shown in the figure, where sampling is performed after modulation. Alternatively, sampling may be considered as a part of modulation, in which case the sampling and modulation may be combined in the figure. This is not limited in this application.

Another possible implementation of step 1502 is shown in (c) of FIG. 16. The terminal device may first perform time domain periodic extension on the third symbol sequence to obtain Zₚ third symbol sequences; add K₁ symbols at the end of the third symbol sequence to before the Zₚ third symbol sequences (corresponding to the operation of adding symbols in (c) of FIG. 16), to obtain an eighth symbol sequence; and modulate the eighth symbol sequence to obtain Zₚ fourth symbol sequences and a first CP sequence located before the Zₚ fourth symbol sequences.

In other words, before performing modulation, the terminal device first adds symbols used to generate the first CP sequence to the third symbol sequence. The symbols used to generate the first CP sequence are the K₁ symbols at the end of the third symbol sequence, and the third symbol sequence can enable the fourth symbol sequence to meet the requirement of phase self-cycling at the beginning and end. Therefore, the terminal device adds the K₁ symbols at the end of the third symbol sequence to before the Zₚ third symbol sequences, and then modulates the obtained eighth symbol sequence, so that the first CP sequence obtained through modulation is phase-continuous with the fourth symbol sequence, and the Zₚ fourth symbol sequences are also phase-continuous. In this implementation, although the first CP sequence is obtained through modulation based on the K₁ symbols at the end of the third symbol sequence, it can be understood that the K₁ modulation symbols at the end of the fourth symbol sequence are also obtained through modulation based on the K₁ symbols at the end of the third symbol sequence. Therefore, the first CP sequence may also be considered as the K₁ modulation symbols at the end of the fourth symbol sequence.

Similar to (a) in FIG. 16, after the eighth symbol sequence is modulated, each modulated symbol obtained through modulation may further be sampled. Sampling may be considered as an independent operation, as shown in the figure, where sampling is performed after modulation. Alternatively, sampling may be considered as a part of modulation, in which case sampling and modulation may be combined in the figure. This is not limited in this application.

Assuming that the sampling rate is S, the fourth symbol sequence obtained through modulation and sampling of the eighth symbol sequence may be recorded by using (N+M)×S sample points.

FIG. 17 shows an example of an eighth symbol sequence. In FIG. 17, it is assumed that the third symbol sequence is { *a₁, a₂, a₃, a*ₑₓ }, where *a₁* to *a₃* are N to-be-transmitted symbols, *a*ₑₓ is M extension symbols, and the M extension symbols are located after the N to-be-transmitted symbols. It is assumed that the length K₁ of the first CP is 2, then two symbols at the end of the third symbol sequence may be copied and added before the Zₚ third symbol sequences, to obtain the eighth symbol sequence { *a₃, aₑₓ, a*₁*, a*₂*, a_{3,} a_{ex,...,} a*₁*, a*₂ *a₃, a*_{*ex* }}.

It should be understood that FIG. 17 is merely shown for ease of understanding, and should not constitute any limitation on this application. This application imposes no limitation on the first symbol sequence, the third symbol sequence, N, M, K₁, Zₚ, or the like.

With reference to (a), (b), and (c) in FIG. 16, the foregoing separately shows three different implementations of step 1502. In these implementations, time-domain periodic extension is separately performed on the third symbol sequence or the fourth symbol sequence. In fact, as described in step 6022 of the foregoing method 600, the terminal device may not necessarily perform the operation of time-domain periodic extension, that is, Zₚ may be equal to 1. Therefore, the operation of time-domain periodic extension in the figure is optional, and may be skipped.

In addition, regardless of whether time-domain periodic extension is performed on the third symbol sequence or the fourth symbol sequence, the first CP sequence is located before the Zₚ fourth symbol sequences. Therefore, in step 1502, the terminal device may generate, based on the third symbol sequence, at least one fourth symbol sequence and the first CP sequence located before the at least one fourth symbol sequence.

In step 1503, the terminal device generates the first OFDM baseband signal based on the fourth symbol sequence and the first CP sequence.

The process of generating the OFDM baseband signal may be understood as a process of generating a time domain signal. In this embodiment, the terminal device may generate the first OFDM baseband signal based on the value obtained on each RE after the RE mapping and the first CP sequence. The following separately uses CPM and LFM as examples to describe a specific process of step 1503.

In a possible manner, the first OFDM baseband signal *s*(*t*',**a̅**)*_{baseband}* meets the following condition: $s {\left(t′,\overline{a}\right)}_{baseband} = \sqrt{2 E / T} cos \left(φ′\left(t′-\frac{{K}_{1}}{\left(N+M\right) \times Δ f},\overline{a}\right)+{φ}_{01}\right)$

A value range of *t'* satisfies the following condition: $0 \leq t ′ \leq \frac{N + M + {K}_{1}}{\left(N+M\right) \times Δ f}$, where Δ*f* is a subcarrier spacing; *φ*'(*t',***a̅**)is a periodic function, a period of *t'* is (N+M)×T, and an expression of the period when 0≤ *φ*(t*,***a̅**)≤ (N+M)×T is *φ*(*t,***a̅**), where *φ*(*t*,**a̅**) represents a phase of the third symbol sequence **a̅** at time *t* , $φ \left(t, a\right) = 2 πh {\int }_{- ∞}^{t} {\sum }_{i = - ∞}^{∞} {a}_{i} g \left(τ-iT\right) dτ + {φ}_{02}$*,* the value range of *t* satisfies 0≤*t* ≤ (N+M) ×T..

In formula (4), $t ′ - \frac{{K}_{1}}{\left(N+M\right) \times Δ f}$ indicates that the CP (namely, the first CP) of the first OFDM baseband signal is located before the body of the first OFDM baseband signal in the time domain. It is not difficult to see that the first OFDM baseband signal is continuous. For descriptions of other parameters, refer to the related descriptions of formula (1) and formula (2) above, and details are not described again.

It should be understood that formula (4) is similar to formula (1) shown in method 600, and the difference lies in that formula (1) does not yet insert the first CP, while formula (4) inserts the first CP at the time domain position before the OFDM symbol. Formula (4) is merely an example, and a person skilled in the art may make simple variations based on the same concept, for example, formula 4.1 shown below.

Assuming that a symbol sequence formed by the Zₚ fourth symbol sequences generated in step 1502 and the first CP sequence located before these Zₚ fourth symbol sequences is denoted as $\overline{\overline{a}}$, then the first OFDM baseband signal generated based on the Zₚ fourth symbol sequences and the first CP sequence may meet the following condition: $s {\left(t, \overline{\overline{a}}\right)}_{baseband} = \sqrt{2 E / T} cos \left(φ\left(t, \overline{\overline{a}}\right)+{φ}_{01}\right)$ wherein $φ \left(t, \overline{\overline{a}}\right)$ represents a phase of the third symbol sequence **a̅** at time *t,* and may satisfy $φ \left(t, \overline{\overline{a}}\right) = 2 πh {\int }_{- ∞}^{t} {\sum }_{i = - ∞}^{∞} {a}_{i} g \left(τ-iT\right) dτ + {φ}_{02}$, *where a value range of* t *satisfies:* $0 \leq t \leq \frac{N + M + {K}_{1}}{\left(N+M\right) \times Δ f}$. Descriptions of other parameters may be referred to the foregoing descriptions related to formula 1 and formula 4, and details are not described again. From formula 4.1, it can be more directly seen that the first OFDM baseband signal is generated based on the Zₚ fourth symbol sequences and the first CP sequence.

One or more of the parameters used by the CPM, such as a frequency pulse shaping function of the CPM, a phase pulse shaping function of the CPM, a modulation index of the CPM, or an initial phase of the CPM, may be configured by the network device, or may be determined by the terminal device. This is not limited in this application.

If the parameter is configured by the network device, the network device may indicate the parameter to the terminal device by using the fourth information, so that the terminal device performs CPM based on the parameter indicated by the fourth information. Optionally, the method further includes: receiving, by the terminal device, the fourth information from the network device, or sending, by the network device, the fourth information to the terminal device, where the fourth information is used to indicate a parameter for modulation.

If the parameter is determined by the terminal device, the terminal device may indicate the parameter to the network device by using the fourth information, so that the network device performs CPM demodulation based on the parameter indicated by the fourth information. Optionally, the method further includes: the terminal device sends the fourth information to the network device, or the network device sends the fourth information to the terminal device, where the fourth information is used to indicate the modulation parameter.

When the modulation scheme is CPM, the modulation parameter may include, for example, at least one of a frequency pulse shaping function *g*(*t*) or a phase shaping function *q*(*t*) of CPM, a modulation index *h* of CPM, and an initial phase *φ*₀₂ of CPM.

In another possible manner, the first OFDM baseband signal *s*(*t*',**a**)*_{baseband}* meets the following condition: $s {\left(t′,\overline{a}\right)}_{baseband} = A cos \left(\frac{π \left(Ft′+φ′\left(t′-\frac{{K}_{1}}{\left(N+M\right) \times Δ f},\overline{a}\right)\right)}{T}t′+{φ}_{01}\right)$

A value range of *t'* satisfies: $0 \leq t ′ \leq \frac{N + M + {K}_{1}}{\left(N+M\right) \times Δ f}$; *φ'*(*t',***a̅**) is a periodic function, where a period is (N+M)×T, and expressed as *φ*(*t,***a̅**) when 0≤t' ≤ (N+M)×T, where *φ*(*t,***a̅**) represents a phase of the third symbol sequence **a̅** at time *t,* the value range of *t* satisfies: 0≤ *t* ≤ (N+M)×T. It can be easily learned that the first OFDM baseband signal is continuous.

It should be understood that formula 5 is similar to formula 2 shown in the method 600, and a difference lies in that formula 2 does not insert the first CP, while formula 5 inserts the first CP at a time domain position before the OFDM symbol. Formula 5 is merely an example, and a person skilled in the art may make a simple transformation based on the same concept, for example, formula 5.1 shown below.

Assuming that a symbol sequence formed by the Zₚ fourth symbol sequences generated in step 1502 and the first CP sequence located before the Zₚ fourth symbol sequences is denoted as $\overline{\overline{a}}$, the first OFDM baseband signal generated based on the Zₚ fourth symbol sequences and the first CP sequence may meet the following: $s {\left(t, \overline{\overline{a}}\right)}_{baseband} = A cos \left(\frac{π \left(Ft+φ\left(t, \overline{\overline{a}}\right)\right)}{T}t+{φ}_{01}\right)$ wherein $φ \left(t, \overline{\overline{a}}\right)$ represents a phase of the third symbol sequence **a̅** at timet, and a value range of *t* satisfies: $0 \leq t \leq \frac{N + M + {K}_{1}}{\left(N+M\right) \times Δ f}$. For descriptions of other parameters, refer to the foregoing related descriptions of formula 1 and formula 5, and details are not described again. Formula 5.1 can more directly show that the first OFDM baseband signal is generated based on the Zₚ fourth symbol sequences and the first CP sequence.

A parameter used by the LFM, for example, a bandwidth of a frequency band used to transmit a signal, may be configured by the network device, or may be determined by the terminal device. This is not limited in this application.

If the parameter is configured by the network device, the network device may indicate the parameter to the terminal device by using the fourth information, so that the terminal device performs LFM based on the parameter indicated by the fourth information. Optionally, the method further includes: receiving, by the terminal device, the fourth information from the network device, or sending, by the network device, the fourth information to the terminal device, where the fourth information is used to indicate a modulation parameter.

If the parameter is determined by the terminal device, the terminal device may indicate the parameter to the network device by using the fourth information, so that the network device performs LFM demodulation based on the parameter indicated by the fourth information. Optionally, the method further includes: sending, by the terminal device, the fourth information to the network device, or sending, by the network device, the fourth information to the terminal device, where the fourth information is used to indicate a modulation parameter.

When the modulation scheme is LFM, the modulation parameter may include, for example, a bandwidth F of a frequency band used to transmit a signal. In this embodiment, F may be a bandwidth of a frequency band used to transmit the first OFDM baseband signal, or a bandwidth of a target frequency band.

It should be understood that the formula satisfied by the first OFDM baseband signal shown above is merely an example given by combining the formula provided above. A person skilled in the art may perform other possible mathematical transformations or equivalent replacements based on this, and these mathematical transformations or equivalent replacements should fall within the protection scope of this application.

As mentioned in the foregoing method 600, upconversion is not limited to direct frequency modulation, but may also be implemented through I/Q modulation. In this case, the first OFDM baseband signal generated by the terminal device based on the fourth symbol sequence and the first CP sequence is not limited to a form obtained directly by using formula 4, formula 4.1, or formula 5 or formula 5.1. The first OFDM baseband signal may include an I-channel baseband signal and a Q-channel baseband signal.

Using CPM as an example, the I-channel baseband signal may be $cos \left(φ′\left(t′-\frac{{K}_{1}}{\left(N+M\right) \times Δ f},\overline{a}\right)+{φ}_{01}\right)$, and the Q-channel baseband signal may be $- sin \left(φ′\left(t′-\frac{{K}_{1}}{\left(N+M\right) \times Δ f},\overline{a}\right)+{φ}_{01}\right)$; or the I-channel baseband signal may be $cos \left(φ\left(t-\frac{{K}_{1}}{\left(N+M\right) \times Δ f},\overline{\overline{a}}\right)+{φ}_{01}\right)$, and the Q-channel baseband signal may be $- sin \left(φ\left(t-\frac{{K}_{1}}{\left(N+M\right) \times Δ f},\overline{\overline{a}}\right)+{φ}_{01}\right)$. The I-channel baseband signal and the Q-channel baseband signal may be obtained through frequency mixing operations performed by an I-channel frequency mixer and a Q-channel frequency mixer, respectively, to implement a frequency band shift, and then a superposition operation is performed to obtain a bandpass signal. Definitions of the parameters, **a̅**, *t and φ'*(*t',***a̅**), and $\overline{\overline{a}}$, *t*' and $φ \left(t, \overline{\overline{a}}\right)$ and the like may be understood with reference to the foregoing descriptions with reference to formula 4, formula 4.1, formula 5, and formula 5.1, and details are not described again.

In this embodiment, the time domain resource of the first OFDM baseband signal may be an OFDM symbol, that is, the first OFDM baseband signal may be mapped to one OFDM symbol in the time domain. In other words, the second symbol sequence may be transmitted through one OFDM symbol. That is, the (N+M)×S time domain samples used to carry the second symbol sequence may be transmitted through one OFDM symbol, where a transmission duration of each time domain sample is 1/[(N + M)×S×Δ*f*], where Δ*f* is a subcarrier spacing, and 1/Δ*f* is a duration of one OFDM symbol.

Optionally, the subcarrier spacing is predefined in a protocol, or is configured by the network device.

If the subcarrier spacing is configured by the network device, optionally, the method further includes: receiving, by the terminal device, seventh information from the network device, or sending, by the network device, seventh information to the terminal device, where the seventh information is used to indicate the subcarrier spacing. The network device may implicitly indicate a duration of one OFDM symbol to the terminal device by configuring the subcarrier spacing.

It should be noted that the subcarrier spacing may also be indicated by using existing signaling, for example, may be indicated by using a numerology index in 5G. In other words, the numerology index may indicate the system bandwidth, the CP length corresponding to the system bandwidth, and the subcarrier spacing.

In step 1504, the terminal device outputs a bandpass signal based on the first OFDM baseband signal.

In step 1505, the terminal device performs power amplification on the bandpass signal to obtain a bandpass signal obtained after power amplification.

In step 1506, the terminal device sends the bandpass signal obtained after power amplification. Correspondingly, the network device receives the bandpass signal.

In step 1507, the network device obtains the first OFDM baseband signal based on the bandpass signal.

It should be understood that a specific process of steps 1504 to 1507 is the same as that of steps 604 to 607 in the method 600 above. Refer to the foregoing related descriptions for details, and details are not described again.

In step 1508, the network device obtains the fourth symbol sequence based on the first OFDM baseband signal.

In step 1509, the network device obtains the third symbol sequence based on the fourth symbol sequence.

In step 1510, the network device obtains the first symbol sequence from the third symbol sequence.

Optionally, step 1510 includes:
The network device determines a value of M;
The network device determines positions of the M extension symbols in the third symbol sequence;
The network device obtains the first symbol sequence from the third symbol sequence.

A specific process of steps 1508 to 1510 is the same as that of steps 608 to 610 in the method 600. Refer to the foregoing related descriptions for details, and details are not described again.

In addition, for specific implementations of the steps in the network device in different forms of RANs, refer to the detailed descriptions of the method 600, and details are not described again.

In a possible implementation, steps 1501 to 1503 are implemented by a baseband chip of the terminal device, steps 1504 to 1505 are implemented by a radio frequency chip of the terminal device, and the sending action in step 1506 is implemented by an antenna of the terminal device. A receiving action in step 1506 is implemented by an antenna of the network device, step 1507 is implemented by a radio frequency chip of the network device, and steps 1508 to 1510 are implemented by a baseband chip of the network device. To better understand this embodiment, with reference to several different transmitter structures shown in FIG. 4, the following describes with drawings a process in which the terminal device obtains the first symbol sequence to the process in which the terminal device sends the band-pass signal and a process in which the network device receives the band-pass signal to the process in which the first symbol sequence is obtained.

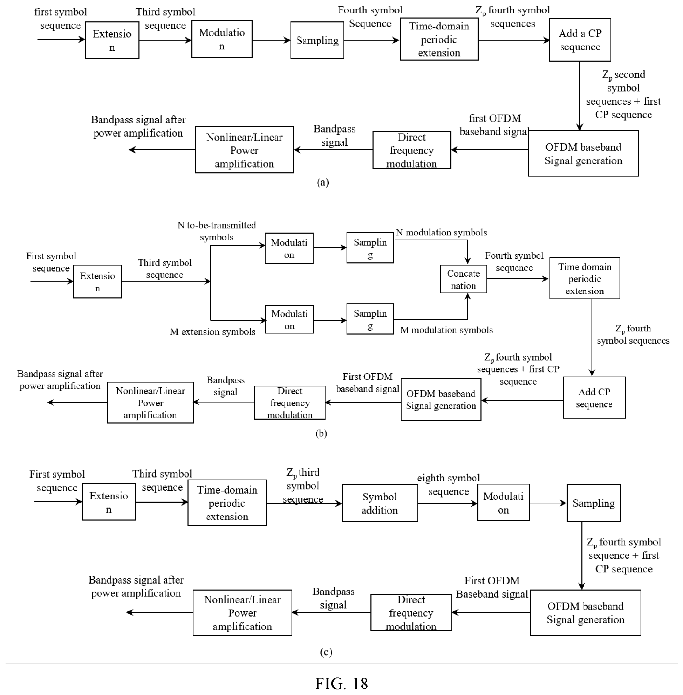

(a), (b), and (c) in FIG. 18 show processing processes of the terminal device.

As shown in (a) in FIG. 18, after obtaining the to-be-transmitted first symbol sequence, the terminal device first extends the first symbol sequence to determine the third symbol sequence, and then modulates the third symbol sequence to obtain the fourth symbol sequence. As described above, the fourth symbol sequence obtained by modulating the third symbol sequence is a continuous symbol sequence, and a discrete fourth symbol sequence may be obtained after sampling. For brevity, the following and the accompanying drawings do not distinguish between the continuous fourth symbol sequence and the discrete fourth symbol sequence. It may be understood that both the continuous fourth symbol sequences and the discrete fourth symbol sequences may be collectively referred to as the fourth symbol sequences. The terminal device may perform time domain period extension on the fourth symbol sequence to obtain Zₚ fourth symbol sequences, and then add CP sequences to obtain the Zₚ fourth symbol sequences and the first CP sequences located before the Zₚ second symbol sequences. Then, the terminal device may generate the first OFDM baseband signal based on the Zₚ fourth symbol sequences and the first CP sequence. After the first OFDM baseband signal is obtained by performing the foregoing baseband processing, the terminal device may perform direct frequency modulation on a carrier based on the first OFDM baseband signal, output a bandpass signal, then perform power amplification on the bandpass signal, and send the bandpass signal obtained after power amplification by using the transmit antenna. The power amplification includes non-linear power amplification or linear power amplification.

The processing process shown in (b) of FIG. 18 is similar to that in (a) of FIG. 18, with the difference lying in the manner in which the fourth symbol sequence is obtained. After obtaining the first symbol sequence to be transmitted, the terminal device first extends the first symbol sequence to determine the third symbol sequence, then modulates and samples the N symbols to be transmitted and the M extension symbols in the third symbol sequence separately to obtain N modulated symbols and M modulated symbols, and then concatenates the N modulated symbols and the M modulated symbols to obtain the fourth symbol sequence. Subsequent operations are the same as those in (a) of FIG. 18, and will not be described in detail again.

The process shown in (c) of FIG. 18 is different from that in (a) and (b) of FIG. 18. After obtaining the first symbol sequence to be transmitted, the terminal device first extends the first symbol sequence to determine the third symbol sequence, and then performs periodic time-domain extension to obtain Zₚ third symbol sequences. The terminal device may add the last K₁ symbols of the third symbol sequence to the front of the Zₚ third symbol sequences to obtain an eighth symbol sequence, and then modulates and samples the eighth symbol sequence to obtain Zₚ fourth symbol sequences and a first CP sequence. Thereafter, the terminal device may generate the first OFDM baseband signal based on the Zₚ second symbol sequences and the first CP sequence. Subsequent operations are the same as those in (a) of FIG. 18, and will not be described in detail again.

It should be understood that the processing processes shown in (a), (b), and (c) in FIG. 18 may be applicable to (a) and (c) in FIG. 4. The difference between (a) and (c) in FIG. 4 lies in the power amplifier. In (a) of FIG. 4, the power amplifier is a nonlinear power amplifier. Therefore, in the processing processes shown in (a), (b), and (c) in FIG. 18, linear/nonlinear power amplification may specifically be nonlinear power amplification. In (c) of FIG. 4, the power amplifier is a linear power amplifier. Therefore, in the processing processes shown in (a), (b), and (c) in FIG. 18, linear/nonlinear power amplification may specifically be linear power amplification.

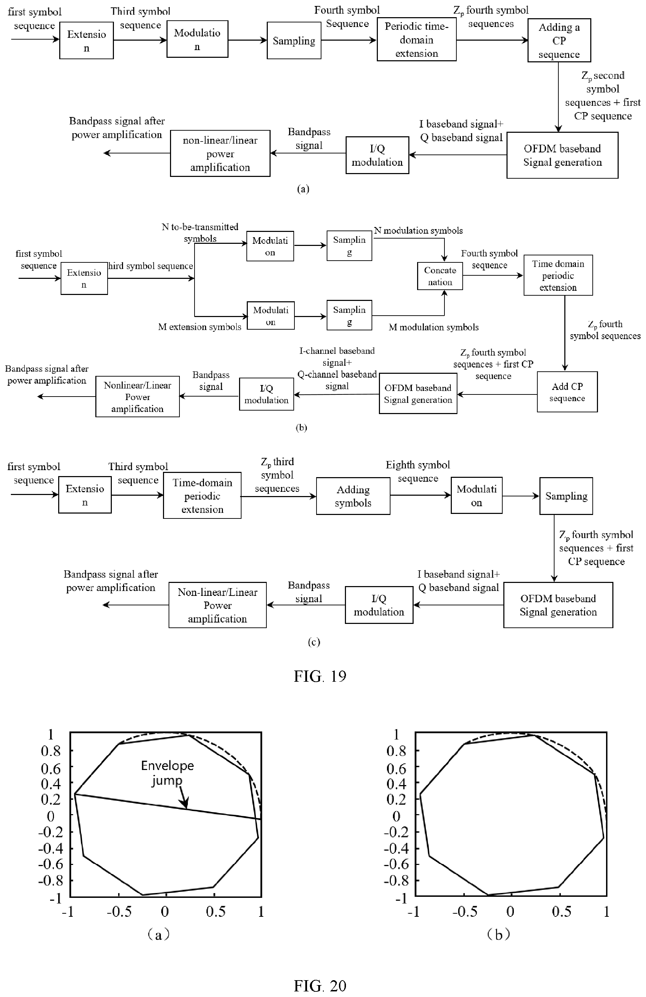

The processing processes shown in (a), (b), and (c) in FIG. 19 may be applicable to (b) in FIG. 4. The difference between (b) and (a) in FIG. 4 lies in the different devices used for upconversion, and the specific processing manner of upconversion shown in (a), (b), and (c) in FIG. 18 corresponding to (b) in FIG. 4 is also different from the specific processing manner of upconversion shown in (a), (b), and (c) in FIG. 19. The specific processing manner of upconversion shown in (a), (b), and (c) in FIG. 18 is direct frequency modulation, where an input is the first OFDM baseband signal, and an output is a bandpass signal (or a frequency modulated signal). The specific processing manner of upconversion shown in (a), (b), and (c) in FIG. 19 is I/Q modulation, where an input is an I-channel baseband signal and a Q-channel baseband signal, and an output is a bandpass signal, and the I-channel baseband signal and the Q-channel baseband signal are obtained based on the first OFDM baseband signal. For a specific generation manner, refer to the related descriptions in step 1503 above, and details are not described again. Other operations are the same as those in (a) of FIG. 18, and details are not described again.

For the processing procedure of the network device, refer to (a), (b), (c) in FIG. 16 and their related descriptions in the method 600 mentioned above, and details are not repeated herein.

Based on the foregoing technical solution, the third symbol sequence is obtained by extending the first symbol sequence, and the fourth symbol sequence obtained through modulation based on the third symbol sequence can simultaneously satisfy the following conditions: phase continuity, self-cyclic phase at the beginning and end, and phase continuity between the end position of the first CP sequence and the start position of the fourth symbol sequence. Therefore, the first OFDM baseband signal generated based on the fourth symbol sequence and the first CP sequence also satisfies phase continuity. Based on this, if the modulation technology used is a modulation technology capable of maintaining a constant amplitude, a waveform with phase continuity and a constant envelope can be obtained. In this way, a solution for obtaining a constant-envelope waveform by combining phase or frequency modulation technology with OFDM technology can be achieved. Since the constant-envelope waveform meets the requirements of direct frequency conversion and nonlinear power amplification for waveforms, the communication device can use some more power-efficient methods for signal transmission, thereby improving the standby life for the communication device (especially for small-sized IoT nodes without large-capacity batteries). In addition, in this embodiment, the steps of RE mapping and OFDM baseband signal generation of the terminal device, and the steps of RE demapping and channel equalization of the network device are all performed in the time domain. That is, the signal processing process does not need to be converted to the frequency domain through Fourier transform, and then the frequency domain processing is completed and the signal is converted back to the time domain, which can greatly reduce the computational load and save power consumption.

After receiving the bandpass signal and demodulating it to obtain the third symbol sequence, the network device may obtain the first symbol sequence from the third symbol sequence based on the number of extension symbols and in combination with the positions of the extension symbols in the third symbol sequence, thereby enabling the first symbol sequence to be received. It can be seen that the processing procedure performed by the network device after receiving the bandpass signal does not require significant modifications compared to the current processing procedure, thus providing good compatibility.

As can be easily understood from the foregoing description combined with Figures 6 to 19, regardless of whether the first CP sequence is generated in advance before the first OFDM baseband signal is generated, the first OFDM baseband signal is generated based on the fourth symbol sequence, where the signal body thereof corresponds to the fourth symbol sequence, and the CP thereof corresponds to the K₁ modulation symbols at the end of the fourth symbol sequence. Therefore, the two implementation manners provided in Figures 6 and 15 are two different implementation manners for generating the first OFDM baseband signal based on the fourth symbol sequence. The fourth symbol sequence is obtained by modulating the third symbol sequence, which is obtained by extending the first symbol sequence, using modulation methods such as CPM or LFM. Therefore, the two implementation manners provided in Figures 6 and 15 are two implementation manners based on the same concept.

FIG. 20 is a simulation diagram according to an embodiment of this application. (a) and (b) in FIG. 20 respectively show a bandpass signal in a complex plane. An approximately circular polygon in the figure is formed by connecting a plurality of sample points of the bandpass signal. A horizontal coordinate represents a real part of the sample point, and a vertical coordinate represents an imaginary part of the sample point. It may be understood that a higher sampling rate indicates more sample points, and the polygon approximately circular in the figure is closer to a circle. If all the sample points fall on a circle, it indicates that the waveform is constant-envelope.

The bandpass signal in (a) in FIG. 20 is generated by modulating the first symbol sequence based on CPM. Some sample points of the bandpass signal in the figure fall inside the polygon, causing an envelope to jump and a zero-crossing to occur, and therefore the envelope is not constant.

The bandpass signal in (b) in FIG. 20 is generated by modulating the third symbol sequence based on CPM. All sample points of the bandpass signal in the figure fall inside the polygon, so that an approximate circle can be formed, and therefore the envelope is constant.

It can be learned from comparison that by using the method provided in this embodiment of this application, an extension symbol is added to the first symbol sequence and then CPM is performed, so that envelope jump can be eliminated, so that a waveform with a pass signal has a constant envelope.

Different quantities M of the extension symbols may cause different spectral efficiency and different degrees of spectral leakage. If the value of M is too large, the frequency efficiency may be too low, but the spectrum leakage is small. If the value of M is too small, the spectral efficiency may be high, but the spectral leakage may be large. Therefore, a value range of M may be constrained, so as to obtain a compromise between spectral efficiency and spectral leakage.

The following describes the value range of M with reference to two different modulation modes, namely, CPM and LFM.

Optionally, the modulation scheme is CPM, and M may meet the following: 1≤M≤max{U+2, U+V-1} and is an integer.

V meets the following requirements: h = W/V, W/V is the minimal fraction, and h is the modulation index of the CPM. W, U, and V are all positive integers. For example, if h is 0.5, h=1/2, that is, V=2. For another example, h is 1/3, because 1/3 is the simplest fraction, that is, V=3. U can be used to determine the pulse length of the frequency pulse shaping function *g* (*t*) in CPM. For the relationship between the CPM bandpass waveform and the frequency pulse shaping function, reference may be made to the foregoing description with reference to Formula 1, and details are not described again. It should be noted that the frequency pulse shaping function is a piecewise function, and when t<0 and t>UT, a value of the function is 0. When 0≤*t*≤UT, the value of this function is not 0. That is, a pulse length of the frequency pulse shaping function is UT, where T is a duration of each symbol. It can be learned that the pulse length of the frequency pulse shaping function may be obtained by predefining U. U may be predefined in a protocol, or may be a value selected from a plurality of currently disclosed optional values, for example, selected according to a use requirement. This is not limited in this application.

In this application, to obtain a constant envelope waveform, the terminal device may perform CPM after inserting the M extension symbols into the first symbol sequence, so that an end phase of the fourth symbol sequence obtained through CPM is equal to an initial phase. This process may be considered as a convolutional coding process: Inserting the M extension symbols into the first symbol sequence is equivalent to inputting an additional M symbols into a convolutional encoder, so that a register state of the convolutional code returns to an initial state, that is, returns to an initial phase.

The first symbol sequence is a symbol sequence obtained through one-dimensional modulation, where the one-dimensional modulation may include but is not limited to PAM, π/2-BPSK, BPSK, QPSK, and the like. Based on these one-dimensional modulation manners, a critical value Zof the number of inserted symbols under different modulation orders may be determined. When the number of inserted symbols exceeds the critical value, spectral leakage does not further decrease, while spectral efficiency further deteriorates. Herein, the modulation order refers to a quantity of bits that each symbol can represent when a bit sequence is modulated. For example, for 2-level PAM, the modulation order is 2; for 4-level PAM, the modulation order is 4, and so on.

Table 1 below shows the critical value Zof the number of inserted symbols corresponding to different modulation orders and different values of V.

**Table 1**

| Modulation Order | V | Z |
|---|---|---|
| 2 | 2 | U+1 |
| | 3, 4 , ... | U+V-1 |
| 4 | 2, 3 | U |
| | 4,5,6 | U+1 |
| | 7,8,9 | U+2 |
| 8 | 2, 3 , ..., 7 | U |
| | 8, 9,..., 14 | U+1 |
| 16 | 2, 3,..., 15 | U |

Zcorresponding to different modulation orders and different V values in Table 1 may be determined based on a register length of a convolutional code. For example, if the register length is 8 bits, Zmay be selected as 8.

The upper bound of M in this embodiment of this application may be a maximum value of a critical value Zof a quantity of inserted symbols under different modulation orders, that is, under all modulation orders, which is a maximum value of Zvalues in Table 1. It can be easily learned that U+2 and U+V-1 in the Zvalues in Table 1 are greater than other values, but the values cannot be compared because the value of V is not determined. Therefore, the upper bound of M may be max{U+2, U+V-1}.

In an example, the modulation scheme is MSK (it should be understood that MSK is a type of CPM), U is 1, and V is 2. In this case, M may meet the following condition: 1≤M≤3.

Optionally, the modulation scheme is LFM, and M may meet the following condition: 1≤M≤3 and M is an integer.

The frequency modulation signal obtained through LFM is a chirp (chirp) signal, which may be considered as a case where U=1 and V=1. In other words, when the modulation scheme is LFM, it may also be considered that M meets the following condition: 1≤M≤max{U+2, U+V-1} and M is an integer.

The terminal device may determine M from the value range of M based on different scenarios. For example, for a scenario with a high requirement on spectral leakage, a relatively large value may be selected from the range as M; for a scenario with a high requirement on spectral efficiency but where a certain amount of spectral leakage is acceptable, a relatively small value may be selected from the range as M.

It may be understood that the foregoing merely uses the first OFDM baseband signal as an example to describe the constraint on the quantity of extension symbols. Based on a same concept, the foregoing constraint on the quantity of extension symbols may also be applied to other OFDM baseband signals. For example, before each OFDM baseband signal is generated, several extension symbols may be inserted into the to-be-transmitted symbol sequence to implement a phase self-cycling between the beginning and the end of the OFDM baseband signal, and the quantity of inserted extension symbols may also meet the following constraint: when the modulation scheme is CPM, the value range of the quantity of extension symbols is [1, max{U+2, U+V-1}]; when the modulation scheme is LFM, the value range of the quantity of extension symbols is [1, 3].

Based on the foregoing constraint on the value range of the number of extension symbols, by adding several extension symbols whose number meets the foregoing constraint to the to-be-transmitted symbol sequence, the generated OFDM baseband signal can not only meet the phase self-cycling at the beginning and end, thereby obtaining a waveform with a constant envelope on each OFDM symbol, but also achieve a tradeoff between spectral efficiency and spectral leakage.

In the method procedures shown in FIG. 6 and FIG. 15 described above, the process of generating and sending signals by the terminal device and the process of receiving and recovering signals by the network device are particularly described. In a data transmission process, to ensure correct reception of the data, the terminal device may further send a reference signal to the network device, so as to facilitate channel estimation and measurement.

In this embodiment of this application, to avoid destroying the feature of phase continuity, the terminal device cannot insert a reference signal at a specific frequency domain position. Therefore, a time domain reference signal is used, and the reference signal is carried on one or more OFDM symbols for transmission. It may be understood that the reference signal sent by the terminal device to the network device is an uplink reference signal, such as a sounding reference signal (sounding reference signal, SRS), a demodulation reference signal (demodulation reference signal, DMRS), or the like. This is not limited in this application.

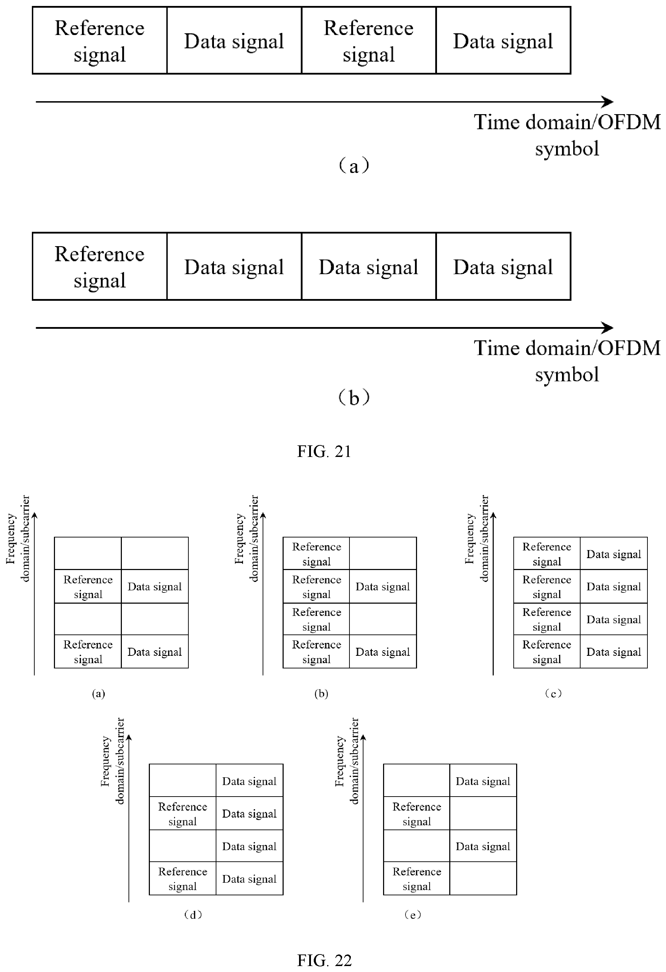

FIG. 21 is a schematic diagram of time domain resources of a reference signal and a data signal according to an embodiment of this application. (a) and (b) in FIG. 21 show two different patterns (patterns) in four OFDM symbols. For ease of description, an OFDM symbol used to carry a reference signal may be referred to as a pilot OFDM symbol for short, and an OFDM symbol used to carry data may be referred to as a data OFDM symbol for short.

In (a) of FIG. 21, the reference signal occupies two OFDM symbols, and is spaced from two other OFDM symbols carrying data signals, that is, each data OFDM symbol is immediately adjacent to a pilot OFDM symbol. In (b) of FIG. 21, the reference signal occupies one OFDM symbol, and the other three OFDM symbols are used to carry data, that is, each pilot OFDM symbol is immediately adjacent to three data OFDM symbols.

Optionally, a frequency band covered by the frequency domain resource of the reference signal overlaps at least partially with a frequency band (namely, a target frequency band) covered by the frequency domain resource of the first OFDM baseband signal.

There may be several possible cases where the frequency band covered by the frequency domain resource of the reference signal overlaps with the target frequency band: the frequency domain resource of the reference signal overlaps with the frequency domain resource of the first OFDM baseband signal, or the frequency domain resource of the reference signal does not overlap with the frequency domain resource of the first OFDM baseband signal, but the frequency bands covered by the two overlap.

The frequency band covered by the frequency domain resource may be understood as follows: if the frequency domain resource is contiguous, the frequency band covered by the frequency domain resource is the frequency band occupied by the frequency domain resource; or if the frequency domain resource is a comb-shaped resource, the frequency band covered by the frequency domain resource may be the frequency band occupied by the first subcarrier to the last subcarrier of the frequency domain resource.

FIG. 22 is a schematic diagram of frequency domain resources of a reference signal and a data signal according to an embodiment of this application. It should be understood that FIG. 22 shows only a part of the frequency domain resources, and does not show all frequency domain resources occupied by the data signal and the reference signal. (a), (b), (c), (d), and (e) in FIG. 22 show several different patterns of the reference signal, and show several examples in which the frequency band covered by the frequency domain resource of the reference signal overlaps with the frequency band covered by the frequency domain resource of the data signal.

As shown in (a) of FIG. 22, the frequency domain resource of the reference signal and the frequency domain resource of the data signal each have a comb-like shape, and the frequency domain resources occupied by the two completely overlap, that is, the frequency domain resource of the reference signal overlaps the frequency domain resource of the data signal, or the frequency domain resources are the same.

As shown in (b) of FIG. 22, the frequency domain resource of the reference signal is continuous, and the frequency domain resource of the data signal has a comb-like shape. The frequency domain resource of the data signal falls within the frequency domain resource range of the reference signal. Therefore, the frequency domain resource of the reference signal overlaps the frequency domain resource of the data signal.

As shown in (c) of FIG. 22, the frequency domain resource of the reference signal and the frequency domain resource of the data signal are both continuous, and the frequency domain resources occupied by the two completely overlap, that is, the frequency domain resource of the reference signal overlaps the frequency domain resource of the data signal, or the frequency domain resources are the same.

As shown in (d) of FIG. 22, the frequency domain resource of the reference signal has a comb-like shape, and the frequency domain resource of the data signal is continuous. The frequency domain resource of the reference signal falls within the frequency domain resource range of the data signal. Therefore, the frequency domain resource of the reference signal overlaps the frequency domain resource of the data signal.

As shown in (e) of FIG. 22, the frequency domain resources of the reference signal and the frequency domain resources of the data signal both have a comb-like shape, and the frequency domain resources occupied by the two do not overlap, that is, the frequency domain resources of the reference signal do not overlap with the frequency domain resources of the data signal, or in other words, they are not the same. However, the frequency band covered by the frequency domain resources of the reference signal overlaps with the frequency band covered by the frequency domain resources of the data signal.

The fact that the frequency band covered by the frequency domain resources of the reference signal overlaps with the frequency band covered by the frequency domain resources of the first OFDM baseband signal can make the channel estimation and measurement based on the reference signal more accurate, which is more conducive to the correct demodulation of the first OFDM baseband signal. For example, in the cases (a), (b), (c), (d), and (e) shown in FIG. 22, the frequency domain resources of the reference signal in (e) are different from the frequency domain resources of the first OFDM baseband signal, but the frequency bands covered by the two overlap, and the obtained channel estimation and measurement results are still relatively close to the channel state of the frequency domain resources of the first OFDM baseband signal. Therefore, this is beneficial for the correct demodulation of the first OFDM baseband signal, and more specifically, for the correct demodulation of the fourth symbol sequence. Although the frequency domain resources of the reference signal in (d) do not completely cover the frequency domain resources of the first OFDM baseband signal, the channel state on some subcarriers can be obtained through an interpolation method, so the channel estimation and measurement results are relatively accurate, which is beneficial for the correct demodulation of the first OFDM baseband signal. In (a), (b), and (c), the frequency domain resources of the reference signal completely cover the frequency domain resources of the first OFDM baseband signal, and the obtained channel estimation and measurement results are even more accurate, which is more conducive to the correct demodulation of the first OFDM baseband signal. Compared to (d) and (e), these cases also have better demodulation performance.

A possible design is that the frequency domain resource of the reference signal is the same as the frequency domain resource of the first OFDM baseband signal.

That is, the frequency domain resource of the reference signal and the frequency domain resource of the first OFDM baseband signal are at the same location and have the same size, and the two resources completely overlap each other. In this way, a full-channel measurement of the frequency domain resource used to transmit the first OFDM baseband signal can be obtained, which is more conducive to correct demodulation of the first OFDM baseband signal.

Through the design of the time domain reference signal, the terminal device may send the reference signal while sending the data signal, so as to ensure normal demodulation of the data without compromising the constant envelope characteristic of the signal.

The foregoing has described in detail, with reference to the accompanying drawings, a method for designing a signal waveform within an OFDM symbol to obtain a constant envelope waveform with a continuous phase and a constant amplitude. Since the terminal device may also send data on a plurality of consecutive OFDM symbols, this application further provides the following embodiments to further consider the constant envelope of waveforms between OFDM symbols.

In this embodiment of this application, the signal is further designed, so that signal waveforms on adjacent OFDM symbols also maintain a constant envelope. The foregoing design may be adding symbols to a to-be-modulated symbol sequence, so that a symbol sequence obtained after the symbol sequence is added can meet a dual head-to-tail phase self-cycling after modulation; or may be performing phase compensation on an OFDM baseband signal; or may be first splicing a plurality of to-be-modulated symbol sequences into one symbol sequence, and then modulating the symbol sequence obtained after the splicing. The following provides descriptions with reference to the accompanying drawings.

For ease of understanding and description, it is assumed that the time domain resource of the first OFDM baseband signal mentioned above is denoted as a first OFDM symbol, the first OFDM symbol is adjacent to the second OFDM symbol, and the first OFDM symbol is located after the second OFDM symbol. The second OFDM symbol is a time domain resource of a second OFDM baseband signal, where the second OFDM baseband signal is generated based on a fifth symbol sequence, the fifth symbol sequence is a modulated symbol sequence obtained through modulation based on a sixth symbol sequence, and the sixth symbol sequence includes at least one to-be-transmitted symbol and at least two extension symbols, where the at least one to-be-transmitted symbol is a symbol in a to-be-transmitted seventh symbol sequence. For ease of description, it is assumed herein that the seventh symbol sequence includes P (P is a positive integer) to-be-transmitted symbols, and the sixth symbol sequence includes the P to-be-transmitted symbols and Q (Q is an integer greater than or equal to 0) extension symbols.

It may be understood that, in this example, the seventh symbol sequence is similar to the first symbol sequence, the fifth symbol sequence is similar to the fourth symbol sequence, and the sixth symbol sequence is similar to the third symbol sequence. It should be understood that the first OFDM baseband signal is generated based on the fourth symbol sequence, and the fourth symbol sequence is obtained by modulating the third symbol sequence. Therefore, the time domain resource of the first OFDM baseband signal may also be understood as a time domain resource of the third symbol sequence, which is the first OFDM symbol. Similarly, the second OFDM baseband signal is generated based on the fifth symbol sequence, and the fifth symbol sequence is obtained by modulating the sixth symbol sequence. Therefore, the time domain resource of the second OFDM baseband signal may also be understood as a time domain resource of the sixth symbol sequence.

In order to ensure that the signal waveform on the first OFDM symbol is constant envelope to the signal waveform on the second OFDM symbol, a possible design is to add symbols to the to-be-modulated symbol sequence, so that the symbol sequence obtained after the symbols are added can satisfy a dual head-to-tail phase self-cycling after modulation.

For example, in this embodiment, M extension symbols are added to the first symbol sequence to obtain a third symbol sequence. M is an integer greater than or equal to 0, M₁ extension symbols in the M extension symbols are among the first (N+M-K₁) symbols in the third symbol sequence, and M₂ extension symbols in the M extension symbols are among the last K₁ symbols in the third symbol sequence. In addition, the following condition is met: a difference between a phase at an end position of a modulated symbol sequence obtained by modulating the first (N+M-K₁) symbols and a phase at a start position of the modulated symbol sequence is an integer multiple of 2π, so that a difference between an initial phase of modulation used to obtain the first OFDM baseband signal and an initial phase of modulation used to obtain the second OFDM baseband signal is an integer multiple of 2π; where M = M₁ + M₂, M₁ and M₂ are both integers greater than or equal to 0, and K₁ is an integer greater than 1.

In other words, the M extension symbols are discretely distributed in the third symbol sequence, so that when the third symbol sequence is divided into two parts, there is at least one extension symbol in each part. Due to the presence of this at least one extension symbol, each part can satisfy the condition that the difference between the phase at the end position and the phase at the start position of the modulated third symbol sequence is an integer multiple of 2π, that is, the condition of phase self-cycling at the beginning and end can be met after the third symbol sequence is modulated.

As previously mentioned, adding the M extension symbols after the first symbol sequence may enable the fourth symbol sequence obtained after modulation to satisfy the following condition: the difference between the phase at the end position and the phase at the start position is also an integer multiple of 2π. In other words, the third symbol sequence not only satisfies the self-cyclic phase at the beginning and end overall, but also satisfies the self-cyclic phase at the beginning and end in each of the two parts when the third symbol sequence is divided into the two parts. This paper refers to this characteristic as dual head-to-tail phase self-cycling. It can be understood that if the third symbol sequence satisfies head-to-tail phase self-cycling, and the first part and the second part each satisfy the head-to-tail phase self-cycling, then the existence of any two of these three conditions necessarily implies the existence of the third one.

In the embodiments of this application, if the symbol sequence on each OFDM symbol can satisfy the self-cyclic phase at the beginning and end, then by setting the same initial phase or initial phases differing by an integer multiple of 2π for the modulation, a constant envelope of the signal waveform between the OFDM symbols can be obtained.

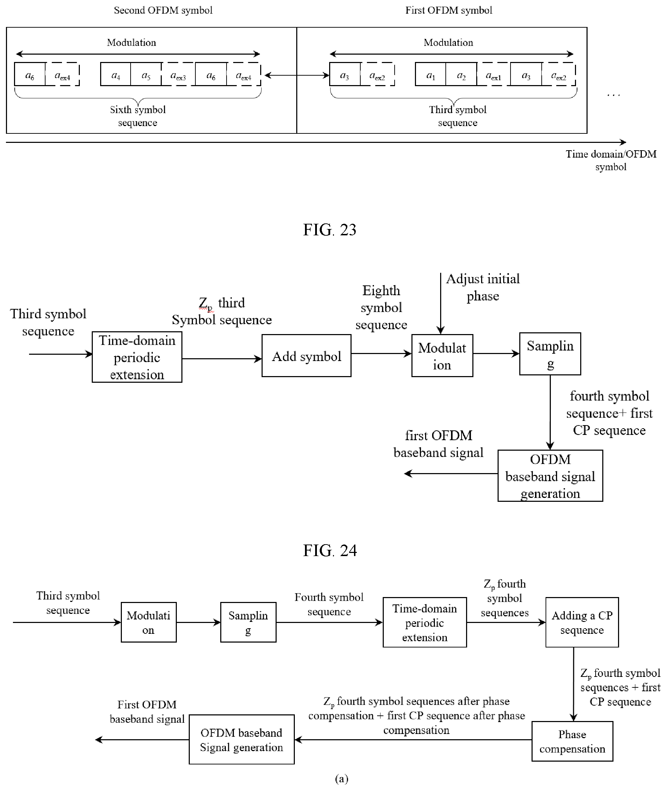

The following provides description with reference to the accompanying drawings. FIG. 23 is a schematic diagram of symbol sequences on a first OFDM symbol and a second OFDM symbol according to an embodiment of this application.

As shown in the figure, it is assumed that N=3, M=2, and K₁=2 that the first symbol sequence is [*a*₁, *a*₂*, a*₃], and the third symbol sequence is [*a*₁, *a*₂*, a*ₑₓ₁, *a*₃, *a*ₑₓ₂], where *a*ₑₓ₁ and *a*ₑₓ₂ are extension symbols. It is assumed that P=3, Q=2, K₂=2, the seventh symbol sequence is [*a*₄, *a*₅, *a*₆], and the sixth symbol sequence is [*a*₄, *a*₅, *a*ₑₓ₃, *a*₆, *a*ₑₓ₄]. *a*ₑₓ₃ and *a*ₑₓ₄ are extension symbols (that is, Q extension symbols), and a length K₂ of the second CP is equal to 2. The time domain resource of the third symbol sequence is the first OFDM symbol, and the time domain resource of the sixth symbol sequence is the second OFDM symbol.

Based on the foregoing design, the third symbol sequence may be divided into two parts: [*a*₁, *a*₂*, a*ₑₓ₁] and [*a*₃, *a*ₑₓ₂], and each part includes one extension symbol. After the third symbol sequence is modulated, three modulation symbols (hereinafter referred to as symbol block A) corresponding to [*a*₁, *a*₂*, a*ₑₓ₁] and two modulation symbols (hereinafter referred to as symbol block B) corresponding to [*a*₃, *a*ₑₓ₂] can be obtained. In the foregoing part, the extension symbol aₑₓ₁ may be calculated, so that the symbol block A obtained after [*a*₁, *a*₂*, a*ₑₓ₁] is modulated meets the following requirements: a difference between a phase at the end position and a phase at the start position is an integer multiple of 2π. In the latter part, the extension symbol aₑₓ₁ may be calculated, so that the symbol block B obtained by modulating [*a*₃, *a*ₑₓ₂] meets the following requirements: A difference between a phase at the end position and a phase at the start position is an integer multiple of 2π. In this way, the difference between the phase at the start position of the modulation symbol corresponding to the symbol *a*₁ and the phase at the end position of the modulation symbol corresponding to the symbol *a*ₑₓ₁ is an integer multiple of 2π, a difference between a phase at a start position of a modulation symbol corresponding to the symbol *a*₃ and a phase at an end position of a modulation symbol corresponding to the symbol *a*ₑₓ₂ is an integer multiple of 2π; In addition, because the fourth symbol sequence obtained by performing modulation on the third symbol sequence has a self-circulating feature of a start and tail phase, a difference between a phase of a start position of a modulation symbol corresponding to the symbol *a*₁ and a phase of an end position of a modulation symbol corresponding to the symbol *a*ₑₓ₂ is also an integer multiple of 2π. Therefore, it can be deduced that a difference between the phase of the start position of the modulation symbol corresponding to the symbol *a*₁ and the phase of the start position of the modulation symbol corresponding to the symbol a₃ is also an integer multiple of 2π.

Similarly, the sixth symbol sequence may also be divided into two parts: [*a*₄, *a*₅, *a*ₑₓ₃] and [*a*₆, *a*ₑₓ₄], and each part includes one extension symbol. After the sixth symbol sequence is modulated, three modulation symbols corresponding to [*a*₄, *a*₅, *a*ₑₓ₃] and two modulation symbols corresponding to [*a*₆, *a*ₑₓ₄] can be obtained. Because the sixth symbol sequence meets the dual head-to-tail phase self-cycling, a difference between the phase at the start position of the modulation symbol corresponding to the symbol *a*₄ and the phase at the end position of the modulation symbol corresponding to the symbol *a*ₑₓ₃ is an integer multiple of 2π. a difference between a phase at a start position of a modulation symbol corresponding to a symbol *a*₆ and a phase at an end position of a modulation symbol corresponding to a symbol *a*ₑₓ₄ is an integer multiple of 2π, A difference between the phase of the start position of the modulation symbol corresponding to the symbol *a*₄ and the phase of the start position of the modulation symbol corresponding to the symbol *a*₆ is also an integer multiple of 2π.

Because the second OFDM symbol is adjacent to the first OFDM symbol, and the second OFDM symbol is located before the first OFDM symbol, to ensure a constant envelope of signal waveforms between the two OFDM symbols, it needs to be ensured that signal phases on the two OFDM symbols are continuous, that is, It needs to be ensured that a difference between the phase at the end position of the modulation symbol corresponding to the symbol *a*ₑₓ₄ and the phase at the start position of the modulation symbol corresponding to the symbol *a*₃ is also an integer multiple of 2π. It can be learned from the foregoing phase relationship that a difference between a phase at an end position of a modulation symbol corresponding to the symbol *a*ₑₓ₄ and a phase at a start position of a modulation symbol corresponding to the symbol *a*₄ is an integer multiple of 2π. A difference between the phase of the start position of the modulation symbol corresponding to the symbol *a*₃ and the phase of the start position of the modulation symbol corresponding to the symbol *a*₁ is an integer multiple of 2π. Therefore, As long as the difference between the phase of the start position of the modulation symbol corresponding to the control symbol *a*₄ and the phase of the start position of the modulation symbol corresponding to the symbol *a*₁ is an integer multiple of 2π, In this way, it can be ensured that the difference between the phase at the end position of the modulation symbol corresponding to the symbol *a*ₑₓ₄ and the phase at the start position of the modulation symbol corresponding to the symbol *a*₃ is also an integer multiple of 2π, and it can be ensured that the signal phases on the second OFDM symbol and the first OFDM symbol are continuous. No phase jump exists between OFDM symbols, and the envelope is constant.

It can be understood that, due to the characteristic of CPM and LFM of accumulating phase, during the modulation process, the phase of the first symbol can be controlled by the initial phase, while the phase of subsequent symbols is difficult to control. In this example, symbols *a₁* and *a*₄ are the first symbols of the first symbol sequence and the seventh symbol sequence, respectively. Referring to the processing procedure described earlier in conjunction with Figure 8, it can be known that symbols *a₁* and *a*₄ are the first symbols modulated in the third symbol sequence and the sixth symbol sequence, respectively, and their phases can be controlled by the initial phase. Alternatively, referring to the processing procedure described earlier in conjunction with (c) of Figure 16, it can be known that symbols *a₃* and *a*₆ are the first symbols modulated in the third symbol sequence and the sixth symbol sequence, respectively, and their phases can also be controlled by the initial phase. In summary, the phase of the initial position of the fourth symbol sequence and the phase of the initial position of the fifth symbol sequence can both be controlled by the initial phase of modulation. Therefore, the difference between the initial phases of modulation can be controlled to be an integer multiple of 2π. One possible way is to set the initial phase of modulation to a fixed value, that is, to control the phase of the initial position of the fourth symbol sequence to be equal to the phase of the initial position of the fifth symbol sequence.

Based on the above design, when the terminal device sends data through multiple consecutive OFDM symbols, it does not need to consider the phase of the start or end positions of the signals on each OFDM symbol. Instead, by adding at least two extension symbols to different positions within the to-be-transmitted symbols and determining the value of each extension symbol through calculation so that each satisfies the dual head-to-tail phase self-cycling, phase continuity and constant envelope between OFDM symbols can be achieved.

Furthermore, to achieve a trade-off between spectral efficiency and spectral leakage, constraints can also be imposed on the value range of M. Taking the first OFDM baseband signal on the first OFDM symbol as an example, to meet the dual head-to-tail phase self-cycling, the terminal device may divide the M extension symbols inserted into the first symbol sequence into at least two parts, and insert these parts into different positions within the first symbol sequence, thereby obtaining a third symbol sequence. Among these M extension symbols, M₁ extension symbols are located in the first (N+M-K₁) symbols of the third symbol sequence, while the remaining M₂ extension symbols are located in the last K₁ symbols of the third symbol sequence. Since the first (N+M-K₁) symbols and the last K₁ symbols each satisfy the head-to-tail phase self-cyclic condition after modulation, based on the constraints on the value range of M described above, constraints on the value ranges of M₁ and M₂ under different modulation schemes can be obtained accordingly.

Optionally, the modulation scheme is CPM, M₁ meets: 1≤M₁≤max{U+2, U+V-1} and is an integer, and M₂ meets: 1≤M₂≤max{U+2, U+V-1} and is an integer, and M₂ meets: 1≤M₂≤max{U+2, U+V-1} and is an integer. Because M₁+M₂=M, it can be obtained that M meets: 2≤M≤2×max{U+2, U+V-1}, and is an integer.

Optionally, the modulation scheme is LFM, M₁ meets: 1≤M₁≤3 and is an integer, and M₂ meets: 1≤M₂≤3 and is an integer. Because M₁+M₂=M, it can be obtained that M meets:2≤M≤6.

Similarly, the second OFDM baseband signal on the second OFDM symbol adjacent to the first OFDM symbol also needs to meet dual head-to-tail phase self-cycling. The terminal device may insert Q extension symbols into the seventh symbol sequence, and divide the Q extension symbols into at least two parts. inserted into different positions in the seventh symbol sequence, to obtain the sixth symbol sequence. Q₁ extension symbols in the Q extension symbols are located in the first (P+Q-K₂) symbols in the sixth symbol sequence, and another Q₂ extension symbols in the Q extension symbols are located in the last K₂ symbols in the sixth symbol sequence. Because the first (P+Q-K₂) symbols and the last K₂ symbols respectively meet the head-to-tail phase self-cycle after modulation, based on the foregoing description of the constraint on the value range of M, Constraints on the value ranges of Q₁ and Q₂ in different modulation schemes can be obtained.

Optionally, the modulation scheme is CPM, Q₁ satisfies 1≤Q₁ ≤max{U+2, U+V-1} and is an integer, and Q₂ satisfies 1≤Q₂ ≤max {U+2, U+V-1} and is an integer. Since Q₁+Q₂ =Q, it can be obtained that Q satisfies 2 ≤Q≤2 × max{U+2, U+V-1}, and is an integer.

Optionally, the modulation scheme is LFM, Q₁ satisfies 1≤Q₁ ≤3 and is an integer, and Q₂ satisfies 1≤Q₂ ≤3 and is an integer. Since Q₁+Q₂=Q, it can be obtained that Q satisfies 2≤Q≤6.

It should be understood that M and Q may be the same or different, which is not limited in this application.

It may be understood that the foregoing merely uses the first OFDM baseband signal and the second OFDM baseband signal as examples to describe the constraint on the quantity of the extension symbols. Based on a same concept, the foregoing constraint on the quantity of the extension symbols may also be applied to another OFDM baseband signal. For example, before each OFDM baseband signal is generated, several extension symbols are inserted into the to-be-transmitted symbol sequence to implement a dual head-to-tail phase self-cycling of the OFDM baseband signal, and a quantity of inserted extension symbols may also meet the following constraint: if the modulation scheme is CPM, the value range of the quantity of the extension symbols is [2, 2×max{U+2, U+V-1}]; or if the modulation scheme is LFM, the value range of the quantity of the extension symbols is [2, 6].

In addition, the value range of M is obtained by superposing the value ranges of M₁ and M₂, and the value range of Q is obtained by superposing the value ranges of Q₁ and Q₂. The value ranges of M₁, M₂, Q₁, and Q₂ are respectively determined based on the value ranges [1, max{U+2, U+V-1}] and [1, 3] provided in the foregoing.

In another design, the value ranges of M and Q may alternatively be directly defined as: 1≤M≤max{U+2, U+V-1}, where M is an integer; and 1≤Q≤max{U+2, U+V-1}, where Q is an integer.

Based on the foregoing constraint on the value range of the number of extension symbols, by adding several extension symbols whose number meets the foregoing constraint to the to-be-transmitted symbol sequence, the OFDM baseband signal on each OFDM symbol can not only meet a first-last phase self-cycling, but also the OFDM baseband signals on adjacent OFDM symbols can have a continuous phase, thereby facilitating obtaining a waveform with a constant envelope on a plurality of OFDM symbols, and obtaining a tradeoff between spectral efficiency and spectral leakage.

To ensure that the signal waveform on the first OFDM symbol is constant envelope to the signal waveform on the second OFDM symbol, another possible design is to perform phase compensation on the first OFDM baseband signal, so that the difference between the phase at the start position of the first OFDM baseband signal and the phase at the end position of the second OFDM baseband signal is an integer multiple of 2π.

For example, the terminal device may determine the phase compensation amount based on the phase at the end position of the second OFDM baseband signal and the phase at the start position of the first OFDM baseband signal, and perform phase compensation on the first OFDM baseband signal based on the phase compensation amount. In other words, the terminal device may determine the phase compensation amount based on the phase at the end position of the signal on the previous OFDM symbol and the phase at the start position of the signal on the next OFDM symbol, and then perform phase compensation on the signal on the next OFDM symbol based on the phase compensation amount.

For example, the phase at the end position of the second OFDM baseband signal is denoted as, and the phase at the start position of the first OFDM baseband signal before phase compensation is denoted as. A phase difference between the two is. Based on this phase difference, it can be determined that the phase compensation amount satisfies the following condition: *φ*_{II,f} *φ*_{I,s} *φ*_{II,f} - *φ*_{I,s} Δ*φ* Δ*φ = φ*_{II,f} - *φ*_{I,s} *+* 2*k*₁*π k*₁ is an integer. Therefore, phase compensation may be performed on the first OFDM baseband signal, so that the phase at the start position of the first OFDM baseband signal is adjusted to, that is. In this way, the difference between the phase at the start position of the first OFDM baseband signal and the phase at the end position of the second OFDM baseband signal is an integer multiple of 2π, and therefore the generated bandpass signal satisfies phase continuity, thereby achieving a constant envelope waveform between the second OFDM symbol and the first OFDM symbol. *φ*_{I,s} + *φ*_{II,f} - *φ*_{I,s} + 2*k*₁*π φ*_{II,f} - *φ*_{I,s} + 2*k*₁*π*

A possible implementation of performing phase compensation on the first OFDM baseband signal based on the phase compensation amount is to adjust the initial phase of modulation, so that the adjusted initial phase satisfies the following relationship with the initial phase before adjustment:. In other words, the initial phase of modulation is already adjusted before modulation is performed, thereby achieving phase compensation for the fourth symbol sequence and the first CP sequence. This implementation may be applied to a case where a symbol corresponding to the first CP sequence (i.e., the K Δ*φ φ*₀ ' *φ*₀ *φ*₀ ' = *φ*₀ + Δ*φ* ₁ symbols at the end of the third symbol sequence) has been added before modulation.

FIG. 24 is a schematic diagram of phase compensation according to an embodiment of this application. This figure is described in combination with the processing process shown in (c) of FIG. 16 above. For operations repeated in (c) of FIG. 16, refer to the related descriptions above, and details are not repeated herein. As shown in the figure, after obtaining the eighth symbol sequence used to generate the Zₚ third symbol sequences and the first CP sequence, the terminal device may perform modulation on the eighth symbol sequence. Then, through operations such as sampling and OFDM baseband signal generation, the first OFDM baseband signal is output. The initial phase of modulation may be preset, that is, an adjustment is made based on an original initial phase, so that the adjusted initial phase satisfies the following relationship with the initial phase before adjustment:. The original initial phase may be understood as an initial phase used when modulating a symbol sequence on a previous OFDM symbol. For example, in this embodiment, the original initial phase may be an initial phase used when modulating the sixth symbol sequence on the second OFDM symbol. By adding the phase compensation amount to the original initial phase, the difference between the phase at the start position of the first CP sequence and the phase at the end position of the fifth symbol sequence after the fourth symbol sequence is modulated may be an integer multiple of 2π. *φ*₀ ' *φ*₀ *φ*₀ *'* = *φ*₀ + Δ*φ*

It should be understood that although an example of phase compensation is provided with reference to (c) in FIG. 16, this should not constitute any limitation on this application. In other processing processes, phase compensation may also be implemented based on the same concept. For example, in (a) of FIG. 16, the first CP sequence may also be added before the third symbol sequence is modulated, and then modulation is performed based on the adjusted initial phase, and after the modulation, the symbols corresponding to the first CP sequence are removed. The adjusted initial phase may meet the, and for related content, refer to the foregoing description, which is not described in detail herein again. *φ*₀ ' *φ*₀ ' = *φ*₀ + Δ*φ*

Another possible implementation of performing phase compensation on the first OFDM baseband signal based on the phase compensation amount is to perform phase compensation on each modulated symbol in the fourth symbol sequence generated by modulation and the first CP sequence based on the foregoing phase compensation amount. In this case, the fourth symbol sequence and the first CP sequence used to generate the first OFDM baseband signal are the fourth symbol sequence after phase compensation and the first CP sequence after phase compensation, respectively. In other words, after modulation, phase compensation is performed on each modulated symbol obtained through modulation. Δ*φ* Δ*φ*

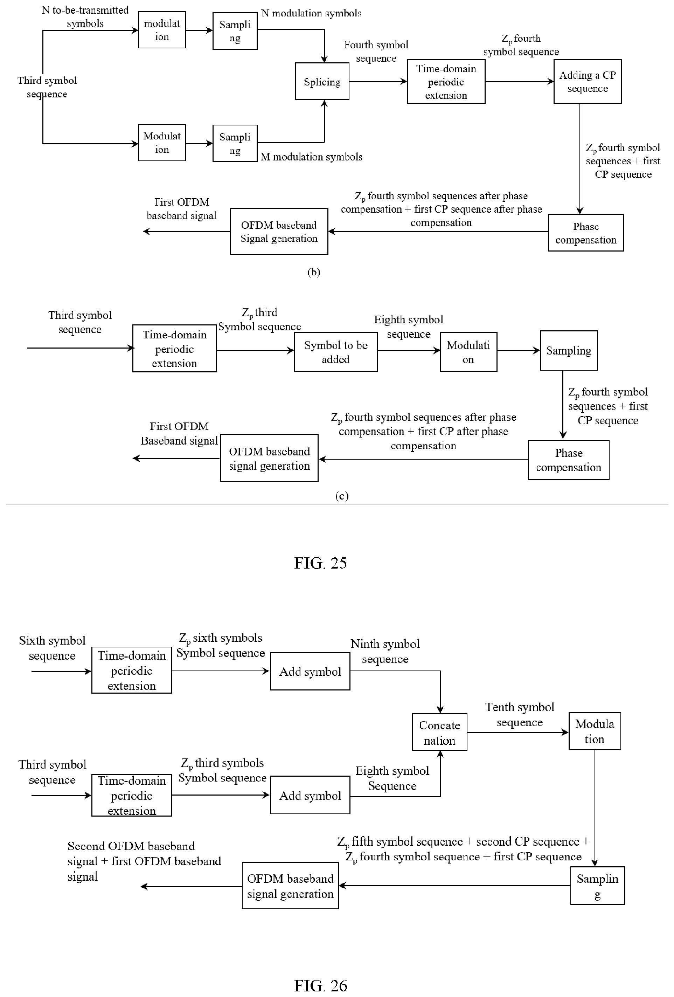

FIG. 25 is another schematic diagram of phase compensation according to an embodiment of this application. (a) to (c) in FIG. 25 are described with reference to the processing processes (a) to (c) in FIG. 16 above. For operations repeated in (a) to (c) in FIG. 16, refer to the related descriptions above, and details are not described again.

First, refer to (a) in FIG. 25. After obtaining the Zₚ fourth symbol sequences and the first CP sequence, the terminal device may perform phase compensation on each modulation symbol in the Z Δ*φ* ₚ fourth symbol sequences and the first CP sequence based on the phase compensation amount. A specific operation of the phase compensation may be adding the phase compensation amount to a phase of each modulation symbol, thereby obtaining the fourth symbol sequence after phase compensation and the first CP sequence after phase compensation. Thereafter, the first OFDM baseband signal may be generated based on the Z Δ*φ* ₚ fourth symbol sequences after phase compensation and the first CP sequence after phase compensation.

(b) and (c) in FIG. 25 are similar to (a) in FIG. 25, and the difference lies in a manner of obtaining the fourth symbol sequence. For this, refer to the description of step 602 in the method 600 above with reference to (b) and (c) in FIG. 16, and details are not described again.

To ensure that the signal waveform on the first OFDM symbol is constant envelope as that on the second OFDM symbol, another possible design is to concatenate multiple to-be-modulated symbol sequences into one symbol sequence, and then modulate the concatenated symbol sequence. Specifically, after adding an extension symbol and a symbol used to generate each CP sequence to the symbol sequences scheduled for transmission on a plurality of consecutive OFDM symbols, the symbol sequences may be concatenated into one symbol sequence in the time order of the OFDM symbols, and the concatenated symbol sequence may be modulated to obtain a modulated symbol sequence and a CP sequence corresponding to each OFDM symbol.

Due to the phase accumulation characteristics of CPM and LFM themselves, the phase of the modulated symbol sequence obtained by modulating multiple concatenated symbol sequences is continuous. Therefore, after the symbol sequences scheduled for transmission on a plurality of consecutive OFDM symbols are each extended and an additional symbol used to generate a CP sequence is added, the symbol sequences may be concatenated into one symbol sequence for modulation.

The following uses examples with reference to the accompanying drawings. FIG. 26 is a schematic diagram of processing a plurality of symbol sequences according to an embodiment of this application. This figure is described with reference to the processing process shown in (c) of FIG. 16. For operations that are repeated with (c) of FIG. 16, reference may be made to the foregoing related description, and details are not described again. As shown in the figure, FIG. 26 shows a third symbol sequence and a sixth symbol sequence, which are obtained by adding symbols to the first symbol sequence and the seventh symbol sequence respectively. The third symbol sequence is used to generate the first OFDM baseband signal, and the sixth symbol sequence is used to generate the second OFDM baseband signal. The first OFDM symbol of the time domain resource of the first OFDM baseband signal is adjacent to the second OFDM symbol of the second OFDM baseband signal, and the second OFDM symbol is located before the first OFDM symbol.

Because the CP sequence is added after the modulation is completed, a phase transition may occur on the modulation symbols that are originally continuous in phases due to addition of the CP sequence. Therefore, before the modulation, a symbol used to generate a respective CP sequence may be added before each symbol. For example, in this example, after the time domain period continuation is separately performed on the sixth symbol sequence and the third symbol sequence to obtain the Zp sixth symbol sequences and the Zp third symbol sequences, a symbol used to generate the second CP sequence may be added before the Zp sixth symbol sequences. obtaining a ninth sequence symbol; and; A symbol used to generate the first CP sequence is added before the Zp third symbol sequences, to obtain the eighth symbol sequence. The eighth symbol sequence and the ninth symbol sequence are concatenated to obtain the tenth symbol sequence. The tenth symbol sequence includes a symbol in the ninth symbol sequence and a symbol in the fourth symbol sequence, the symbol in the ninth symbol sequence is located before the symbol in the fourth symbol sequence, and a sequence of the symbol in the ninth symbol sequence and the symbol in the fourth symbol sequence remains unchanged. If the terminal device modulates the tenth symbol sequence, an obtained modulated symbol sequence is a symbol sequence with continuous phases. Then, the terminal device may generate the OFDM baseband signal based on the modulation symbol sequence obtained through modulation, to obtain the second OFDM baseband signal and the first OFDM baseband signal.

It should be understood that the repetition times Zₚ of the period may be the same or different in different time domain periodic extensions, and this is not limited in this application. In FIG. 26, as shown in the figure, the repetition times of the sixth symbol sequence obtained after the sixth symbol sequence and the third symbol sequence are separately subjected to time domain periodic extension may be the same or different.

It should also be understood that FIG. 26 is merely an example, and shows an example of splicing two symbol sequences. A quantity of symbol sequences to be spliced is not limited in this application. Because the terminal device may be scheduled to use one or more OFDM symbols for data transmission, the terminal device may consider, based on a quantity of scheduled OFDM symbols and whether the OFDM symbols are time domain consecutive, whether to splice symbol sequences on each OFDM symbol and in which order the symbol sequences are spliced. When there are more symbol sequences to be spliced, a specific implementation is similar to the foregoing, and details are not described again.

It should also be understood that some content in the foregoing processing process shown in the accompanying drawings is similar to the content described with reference to FIG. 8, FIG. 9, FIG. 11, and FIG. 16, for example, symbol addition, time domain periodic extension, sampling, CP sequence addition, and OFDM baseband signal generation. For these, refer to the foregoing related descriptions for understanding, and details are not described herein again.

The foregoing describes various possible designs in combination with multiple accompanying drawings, through which the terminal device can achieve phase continuity and constant envelope between multiple consecutive OFDM symbols. Therefore, when the terminal device is scheduled to perform data transmission on a plurality of consecutive OFDM symbols, a constant-envelope waveform can still be generated. In other words, the terminal device may transmit a signal in a manner with lower transmit power consumption, without being limited to using a processing manner with lower transmit power consumption to send a signal on a single OFDM symbol, thereby improving the standby life.

The foregoing has provided a detailed description of the communication method provided in this application in combination with the accompanying drawings. It can be seen that, in the process of implementing the communication method, there is signaling interaction between the terminal device and the network device through multiple parameters. The following will describe the interaction process between the terminal device and the network device.

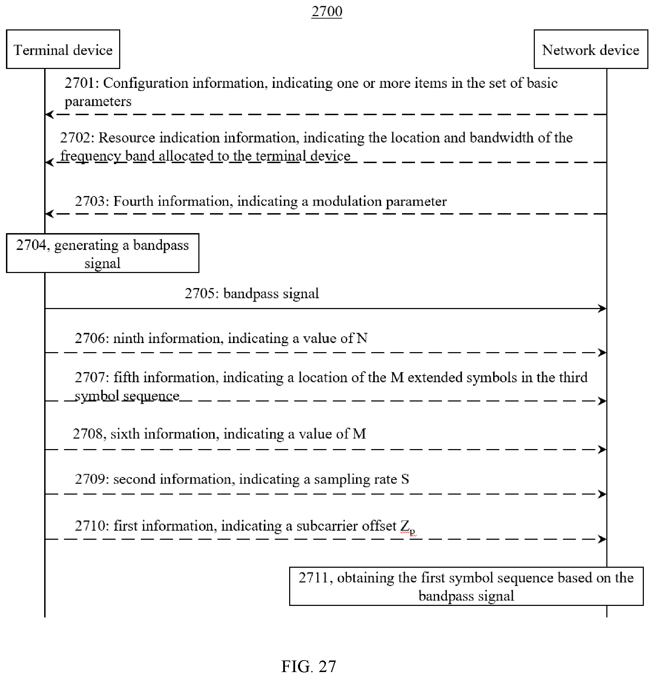

FIG. 27 is another schematic flowchart of a communication method according to an embodiment of this application. The communication method 2700 shown in FIG. 27 illustrates signaling interaction between a terminal device and a network device. The method 2700 may be used in combination with the method 600 in FIG. 6 or the method 1500 in FIG. 15, thereby facilitating data transmission between the terminal device and the network device.

It should be understood that in the procedure shown in FIG. 27, different information may be used to indicate different parameters. As described above, these parameters may be indicated by one of the network device or the terminal device to the other, or may be predefined in a protocol. Therefore, in the procedure shown in FIG. 27, each parameter is merely shown through signaling interaction. Therefore, when the method 600 or the method 1500 is implemented, each step of sending or receiving information in FIG. 27 may be optional.

The method 2700 shown in FIG. 27 may include steps 2701 to 2711. The following provides a detailed description of each step in the method 2700.

In step 2701, the network device sends configuration information to the terminal device, or the terminal device receives the configuration information from the network device, where the configuration information indicates one or more items in the basic parameter set.

In a possible implementation, the configuration information includes a basic parameter set index.

The basic parameter set includes but is not limited to one or more of a subcarrier spacing, a CP length, and a system bandwidth. The CP length refers to a CP length corresponding to the system bandwidth. Different values of the subcarrier spacing, the CP length, and the system bandwidth may be indicated by different basic parameter set indexes, and each group of values of the subcarrier spacing, the CP length, and the system bandwidth may correspond to one basic parameter set index. The network device may configure the subcarrier spacing, the CP length, and the system bandwidth for the terminal device by configuring the basic parameter set index.

In the foregoing embodiment, the network device may indicate the subcarrier spacing by using the seventh information. Therefore, when the network device indicates the index of the basic parameter set by using the configuration information, it is equivalent to adding the seventh information to the configuration information, or the seventh information is an information element in the configuration information.

In step 2702, the network device sends resource indication information to the terminal device, or the terminal device receives the resource indication information from the network device, where the resource indication information is used to indicate a location and a size of a frequency band allocated by the network device to the terminal device.

The location of the frequency band allocated by the network device to the terminal device refers to an absolute location of the frequency domain resource allocated by the network device to the terminal device, and the size of the frequency band allocated by the network device to the terminal device is a bandwidth of the frequency band allocated by the network device to the terminal device. The location of the frequency band may be indicated by at least two of the following items: a start location, an end location, or a frequency band bandwidth. When one of the items is predefined in the protocol, the resource indication information may indicate one of the items.

In the foregoing embodiment, the network device may indicate, by using the eighth information, a location of the frequency band allocated by the network device to the terminal device, and when indicating the length of the first CP by using the third information, may indicate the bandwidth of the frequency band allocated by the network device to the terminal device. Therefore, when the network device indicates, by using the resource indication information, the location and the size of the frequency band allocated by the network device to the terminal device, it is equivalent to carrying the eighth information and the third information in a same piece of signaling, where the signaling may be the resource indication information mentioned above. In other words, the third information may be sent and the eighth information may be sent by using one sending step, and the third information may be received and the eighth information may be received by using one receiving step.

Although not shown in the figure, it may be understood that when the third information is used to indicate the length of the first CP, the third information may also directly indicate the value of K₁. In this case, the third information may not need to be carried in the resource indication information, for example, the third information may be sent separately, or may be sent together with other information in a piece of signaling. This is not limited in this application.

In step 2703, the network device sends fourth information to the terminal device, or the terminal device receives the fourth information from the network device, where the fourth information is used to indicate a modulation parameter.

As described above, modulation parameters may be different when modulation schemes are different. For the parameters of CPM and the parameters of LFM, refer to the foregoing descriptions, and details are not described again.

The modulation parameter may be determined by the network device when the terminal device initially accesses the network, and indicated by using the fourth information; or may be dynamically indicated by the network device by using the fourth information; or may be determined through negotiation between the network device and the terminal device. This is not limited in this application.

The foregoing steps 2701 to 2703 may be parameters preconfigured by the network device for the terminal device after the terminal device accesses the network device. The terminal device may perform data transmission with the network device based on these parameters. Certainly, the parameters preconfigured by the network device for the terminal device may include but are not limited to the foregoing parameters. This is merely an example of listing some parameters related to the communication method provided in this application. For example, the network device may further configure one or more of the following for the terminal device: a quantity of OFDM symbols included in each slot, a reference signal resource, a reference signal pattern, and the like.

In step 2704, the terminal device generates a bandpass signal.

The terminal device may obtain the bandpass signal obtained after power amplification based on step 601 to 605 in the method 600 shown in FIG. 6 or step 1502 to 1505 in the method 1500 shown in FIG. 15. For a specific implementation process, refer to the detailed descriptions in the method 600 or the method 1500, and details are not described again. As described above, the bandpass signal is obtained based on the first OFDM baseband signal, the first OFDM baseband signal is generated based on the fourth symbol sequence, the fourth symbol sequence is obtained through modulation based on the third symbol sequence, and the third symbol sequence includes the N to-be-transmitted symbols and the M extension symbols. Therefore, the bandpass signal carries the N to-be-transmitted symbols and the M extension symbols.

In step 2705, the terminal device sends the bandpass signal to the network device, or the network device receives the bandpass signal from the terminal device.

Step 2705 may correspond to step 606 in the method 600 shown in FIG. 6 or step 1506 in the method 1500 shown in FIG. 15. For a specific implementation process, refer to the detailed descriptions in the method 600 or the method 1500, and details are not described again.

As mentioned above, the bandpass signal carries N to-be-transmitted symbols and M extension symbols. In other words, the bandpass signal carries data that the terminal device is to transmit to the network device. That is, step 2705 is an example of the terminal device transmitting data to the network device.

In step 2706, the terminal device sends ninth information to the network device, or the network device receives the ninth information from the terminal device, where the ninth information is used to indicate the value of N.

N is the number of to-be-transmitted symbols included in the first symbol sequence, that is, the ninth information is used to indicate the number of to-be-transmitted symbols in the first symbol sequence. The number of symbols included in the data sent by the terminal device to the network device each time may not necessarily be fixed. Therefore, the terminal device may indicate, to the network device each time when sending data, the number of to-be-transmitted symbols in the data sent this time, for example, the number N of to-be-transmitted symbols in the foregoing embodiment, so that the network device can conveniently obtain, from the received bandpass signal, the data that the terminal device wants to send, for example, N first symbols.

It should be understood that step 2706 may be performed synchronously with step 2705, or may be performed before or after step 2705. This is not limited in this application.

In step 2707, the terminal device sends the fifth information to the network device, or the network device receives the fifth information from the terminal device, where the fifth information is used to indicate the positions of the M extension symbols in the third symbol sequence.

The terminal device may obtain the third symbol sequence by adding the extension symbols to the first symbol sequence. In a process of adding the extension symbols, the terminal device may attempt to add the M extension symbols at different locations in the first symbol sequence, and determine, through calculation, whether a symbol sequence obtained after the M extension symbols are added satisfies a phase self-cycling at an end position after modulation, and when the symbol sequence satisfies the phase self-cycling, determine the positions of the M extension symbols in the third symbol sequence, and indicate, to the network device by using the fifth information, the positions of the M extension symbols in the third symbol sequence, so that the network device obtains the first symbol sequence from the third symbol sequence obtained through demodulation based on the positions of the M extension symbols.

Alternatively, the positions of the M extension symbols in the third symbol sequence may be indicated by the network device. In this case, step 2707 may be replaced with: the network device sends fifth information to the terminal device, or the terminal device receives the fifth information from the network device, and step 2707 may be performed before step 2704, so that the terminal device determines the third symbol sequence based on the fifth information, and then generates the first OFDM baseband signal.

Alternatively, the positions of the M extension symbols in the third symbol sequence may be predefined in the protocol. In this case, step 2707 may be skipped and not performed.

In step 2708, the terminal device sends seventh information to the network device, or the network device receives the seventh information from the terminal device, where the seventh information is used to indicate the value of M.

In other words, the seventh information is used to indicate the quantity of extension symbols. The terminal device may determine the quantity M of extension symbols based on the first symbol sequence. For example, the terminal device may attempt to obtain a value starting from 1, add an extension symbol to the first symbol sequence when M is 1, and determine whether a symbol sequence obtained after adding the extension symbol satisfies the self-cyclic phase between the first and last symbols after modulation. If the symbol sequence satisfies the self-cyclic phase between the first and last symbols, it may be determined that M is 1. If the symbol sequence does not satisfy the self-cyclic phase between the first and last symbols, the terminal device may attempt a case where M is 2, and so on, until a symbol sequence obtained after adding the extension symbol satisfies the self-cyclic phase between the first and last symbols after modulation. In this way, the value of M can be obtained.

It should be understood that when both the fifth information and the seventh information are sent by the terminal device to the network device, step 2707 and step 2708 may be combined into one step.

Alternatively, the value of M may be indicated by the network device. In this case, step 2708 may be replaced with: the network device sends the seventh information to the terminal device, or the terminal device receives the seventh information from the network device, and step 2708 may be performed before step 2704, so that the terminal device determines the third symbol sequence based on the seventh information, and then generates the first OFDM baseband signal. In addition, when both the fifth information and the seventh information are sent by the network device to the terminal device, step 2707 and step 2708 may be combined into one step.

Alternatively, the value of M may be predefined in the protocol. In this case, step 2708 may be skipped.

In step 2709, the terminal device sends the second information to the network device, or the network device receives the second information from the terminal device, where the second information is used to indicate the sampling rate S.

In the process of generating the passband signal, the terminal device may perform sampling after modulation, and the terminal device may indicate the sampling rate S to the network device, so that the network device performs sampling according to the same sampling rate S.

Alternatively, the sampling rate S may be configured by the network device. In this case, step 2709 may be replaced with: the terminal device receives the second information from the network device, or the network device sends the second information to the terminal device.

Alternatively, the sampling rate S may be predefined in a protocol. In this case, step 2709 may be skipped.

In step 2710, the terminal device sends the first information to the network device, or the network device receives the first information from the terminal device, where the first information is used to indicate the subcarrier offset Zₚ.

The subcarrier offset Zₚ may specifically be an offset between every two adjacent subcarriers in subcarriers used to carry the (N+M) ×S frequency domain samples. It may be understood that if the (N+M) ×S subcarriers are consecutive, the subcarrier offset Zₚ is 1; or if the (N+M) ×S subcarriers are non-consecutive, the subcarrier offset Zₚ is greater than 1.

When the first information is used to indicate the subcarrier offset, the first information may specifically include a value of Zₚ, or other information that may be used to identify or determine the value of Zₚ, for example, an index corresponding to the value of Zₚ, or a number of the (N+M)×S subcarriers that may be used to determine the value of Zₚ, or the like. This application includes but is not limited to these.

Alternatively, the subcarrier offset Zₚ may be configured by the network device. In this case, step 2710 may be replaced with: The terminal device receives the first information from the network device, or the network device sends the first information to the terminal device.

Alternatively, the subcarrier offset Zₚ may be predefined in a protocol. In this case, step 2710 may be skipped.

In addition, because the terminal device may use all or a part of the frequency band allocated by the network device to transmit data, optionally, the method further includes: The terminal device sends tenth information to the network device, or the network device receives the tenth information from the terminal device, where the tenth information is used to indicate a location and a size of a frequency band used by the terminal device to transmit data, or a location and a size of the target frequency band.

In step 2711, the network device obtains the first symbol sequence based on the bandpass signal.

The network device may obtain the first symbol sequence based on the bandpass signal based on steps 607 to 610 in the method 600 shown in FIG. 6 or steps 1507 to 1510 in the method 1500 shown in FIG. 15. For a specific implementation process, refer to the detailed descriptions in the method 600 or the method 1500, and details are not described again.

Based on the foregoing technical solution, the terminal device and the network device may align, through interaction, the parameters used in the data generation and transmission processes by both parties, so that the terminal device and the network device can generate and parse data based on the same parameters, thereby providing support for normal reception and demodulation of the data. In addition, during the interaction, the terminal device and the network device may reuse the parameters in the existing signaling, thereby reducing overheads and having good compatibility.

It should be understood that the foregoing embodiments merely use an example in which the terminal device is used as the first communications apparatus and an example in which the network device is used as the second communications apparatus to describe the communication method provided in this application. In actual application, the first communications apparatus may also be a network device, and the second communications apparatus may also be a terminal device. In this case, the signaling interaction procedure shown in FIG. 27 may also be correspondingly changed. For example, step 2704 may be performed by the network device, and step 2711 may be performed by the terminal device. Based on the same concept, a person skilled in the art may make changes to the signaling interaction procedure provided in FIG. 27 to obtain a signaling interaction procedure applicable to a scenario in which the network device sends data to the terminal device. For brevity, details are not described herein again.

It should also be understood that the sequence numbers of the steps in the plurality of embodiments illustrated above with reference to the accompanying drawings do not mean an order of execution, and the order of executing the steps should be determined based on their functions and internal logic.

The foregoing provides a detailed description of the method provided in embodiments of this application with reference to the accompanying drawings. The following provides a description of the apparatus provided in embodiments of this application with reference to the accompanying drawings.

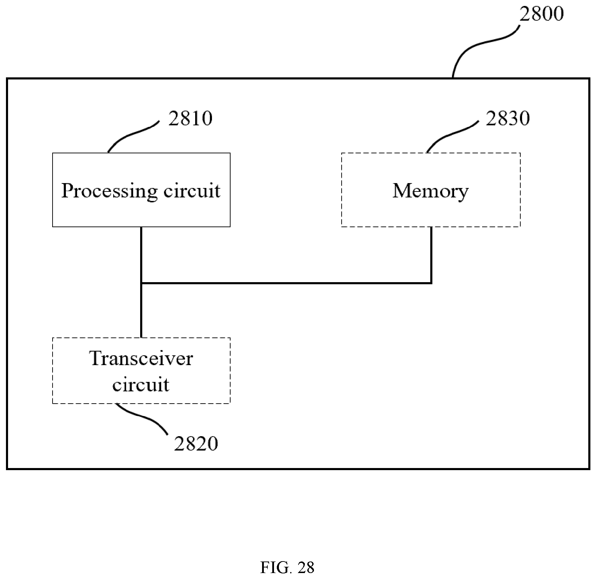

FIG. 28 is a schematic block diagram of a communications apparatus according to an embodiment of this application. The communications apparatus 2800 shown in FIG. 28 may correspond to the terminal device or the network device in the foregoing embodiments, and may be configured to implement functions of the terminal device or the network device. The communications apparatus 2800 may be a terminal device or a network device, or may be a component configured in a terminal device or a network device, for example, a receiver, a chip, or a chip system. This is not limited in this application.

As shown in FIG. 28, the communications apparatus 2800 includes a processing circuit 2810. The processing circuit may be one or more processors, or may be some processing circuits included in one or more processors. The processing circuit may include a program (which may also be referred to as code or instructions sometimes), and the program may be run on the processing circuit 2810, so that the communications apparatus 2800 performs the steps described in the foregoing method embodiments.

Optionally, the communication apparatus 2800 further includes a transceiver circuit 2820, where the processing circuit 2810 and the transceiver circuit 2820 are coupled to each other. It may be understood that the transceiver circuit 2820 may be a transceiver, an input/output circuit, a bus, a module, a pin, or another type of communication interface. An input circuit in the input/output circuit may be configured to receive, and an output interface may be configured to send.

Optionally, the communication apparatus 2800 further includes a memory 2830, where the processing circuit 2810 and the memory 2830 are coupled to each other. The memory 2830 may be configured to store instructions executed by the processing circuit 2810, or store input data required for the processing circuit 2810 to run the instructions, or store data generated after the processing circuit 2810 runs the instructions.

For example, the communication apparatus 2800 corresponds to the terminal device in the foregoing embodiment. The processing circuit 2810 may be configured to obtain a first symbol sequence, where the first symbol sequence includes N to-be-transmitted symbols; the processing circuit 2810 may be further configured to obtain a second symbol sequence based on the first symbol sequence, where a symbol in the second symbol sequence is obtained by mapping (N+M) modulation symbols to REs, the (N+M) modulation symbols are obtained by modulating a third symbol sequence, the third symbol sequence includes the N to-be-transmitted symbols in the first symbol sequence and M extension symbols, the M extension symbols ensure that phases of the (N+M) modulation symbols obtained after the modulation are continuous, and a difference between a phase of a start position and a phase of an end position is an integer multiple of 2π, where M is an integer greater than or equal to zero; the processing circuit 2810 may be further configured to generate a first OFDM baseband signal based on the second symbol sequence, where a time domain resource of the first OFDM baseband signal is an OFDM symbol.

Optionally, the transceiver circuit 2820 may be configured to output the first OFDM baseband signal.

Optionally, the transceiver circuit 2820 is further configured to send or receive information, for example, at least one of the first information to the ninth information in the embodiments shown in FIG. 6, FIG. 15, or FIG. 27. For details, refer to the detailed descriptions in the foregoing method embodiments, and details are not described again.

In another example, the communication apparatus 2800 corresponds to the network device in the foregoing embodiment. The transceiver circuit 2820 may be configured to obtain a first OFDM baseband signal, where a time domain resource of the first OFDM baseband signal is an OFDM symbol; the processing circuit 2810 may be configured to obtain a fourth symbol sequence based on the first OFDM baseband signal, where the fourth symbol sequence includes L modulation symbols, and L is a positive integer; the processing circuit 2810 may be further configured to demodulate the fourth symbol sequence to obtain a third symbol sequence, where the third symbol sequence includes N first symbols and M extension symbols, L=M+N, N is a positive integer less than or equal to L, and M is an integer greater than or equal to zero; the processing circuit 2810 may be further configured to determine positions of M and the M extension symbols in the third symbol sequence; and the processing circuit 2810 may be further configured to obtain the N first symbols from the third symbol sequence.

Optionally, the transceiver circuit 2820 may be configured to send or receive information, such as at least one of the first information to the ninth information in the embodiments illustrated in FIG. 6, FIG. 15, or FIG. 27. For specific details, please refer to the detailed descriptions in the method embodiments mentioned earlier, and no further elaboration will be provided herein.

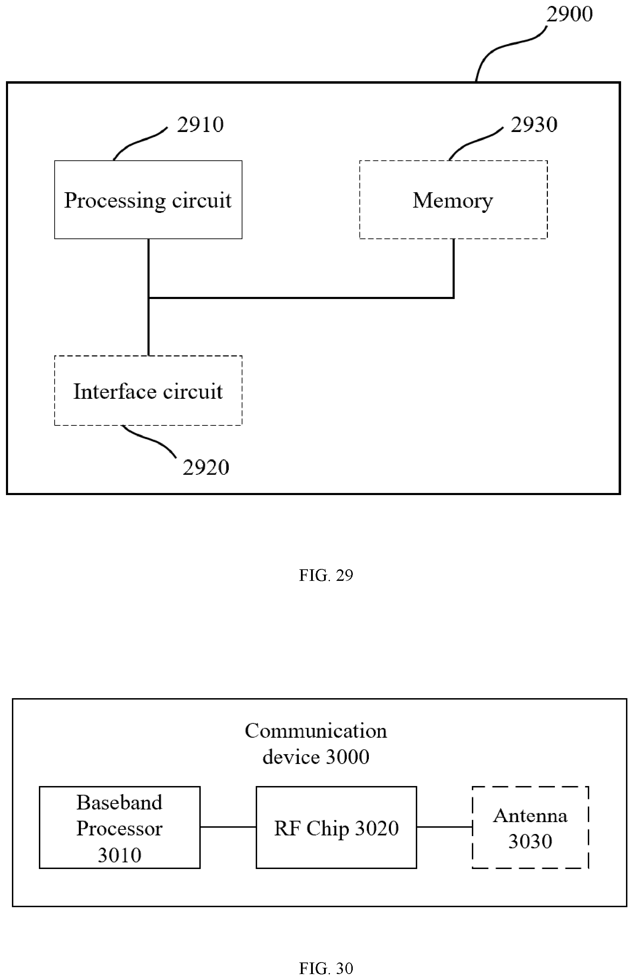

A possible design is that the communication apparatus 2800 is the baseband processor 2900 shown in FIG. 29. As illustrated in FIG. 29, the baseband processor 2900 includes a processing circuit 2910 and an interface circuit 2920. The interface circuit 2920 may be configured to send or receive signals; the processing circuit 2910 may be configured to execute a program, so that the baseband processor 2900 performs the steps executed by the baseband processor in the method embodiments described above.

For example, the processing circuit 2910 may be one or more processors, or may be a partial circuit included in one or more processors, which is not limited in this application. For example, the interface circuit 2920 may be an input/output circuit.

Optionally, the baseband processor 2900 further includes a memory 2930, and the processing circuit 2910 may be configured to execute the program stored in the memory 2930, so that the baseband processor 2900 performs the steps executed by the baseband processor in the method embodiments described above.

For example, the baseband chip 2900 may be applied in a terminal device. The processing circuit 2910 may be configured to obtain a first symbol sequence, where the first symbol sequence includes N symbols to be transmitted. The processing circuit 2910 may also be configured to obtain a second symbol sequence based on the first symbol sequence, where the symbols in the second symbol sequence are obtained by mapping (N+M) modulation symbols to REs, and the (N+M) modulation symbols are obtained by modulating a third symbol sequence. The third symbol sequence includes the N symbols to be transmitted in the first symbol sequence and M extension symbols, where the M extension symbols ensure that the (N+M) modulation symbols obtained through the modulation have continuous phases, and the phase difference between the phase at the start position and the phase at the end position is an integer multiple of 2 π, where M is an integer greater than or equal to zero. The processing circuit 2910 may also be configured to generate a first OFDM baseband signal based on the second symbol sequence, where the time domain resource of the first OFDM baseband signal is an OFDM symbol.

Optionally, the interface circuit 2920 may be configured to output the first OFDM baseband signal.

It should be understood that the baseband processor may be configured to implement the functions performed by the baseband processor of the terminal device in the foregoing method 600, for example, steps 601 to 605 in method 600, or may be configured to implement the functions performed by the baseband processor of the terminal device in the foregoing method 1500, for example, steps 1501 to 1505 in method 1500. For details, refer to the detailed descriptions in the foregoing method embodiments, and details are not described herein again.

Optionally, the interface circuit 2920 is further configured to send or receive information, such as at least one of the first information to the ninth information in the embodiments illustrated in FIG. 6, FIG. 15, or FIG. 27. For specific details, refer to the detailed descriptions in the method embodiments mentioned above, and no further elaboration will be provided herein.

In another example, the baseband chip 2900 may be applied in a network device. The interface circuit 2920 may be configured to obtain a first OFDM baseband signal, where a time domain resource of the first OFDM baseband signal is an OFDM symbol; the processing circuit 2910 may be configured to obtain a fourth symbol sequence based on the first OFDM baseband signal, where the fourth symbol sequence includes L modulation symbols, and L is a positive integer; the processing circuit 2910 may further be configured to demodulate the fourth symbol sequence to obtain a third symbol sequence, where the third symbol sequence includes N first symbols and M extension symbols, where L=M+N, N is a positive integer less than or equal to L, and M is an integer greater than or equal to zero; the processing circuit 2910 may further be configured to determine the positions of M and the M extension symbols in the third symbol sequence; the processing circuit 2910 may further be configured to obtain the N first symbols from the third symbol sequence.

It should be understood that the baseband processor may be configured to implement the functions performed by the baseband processor of the network device in the foregoing method 600, such as steps 607 to 610 in method 600, or may be configured to implement the functions performed by the baseband processor of the network device in the foregoing method 1500, such as steps 1507 to 1510 in method 1500. For details, refer to the detailed descriptions in the method embodiments mentioned above, and no further elaboration will be provided herein.

Optionally, the interface circuit 2920 is further configured to send or receive information, such as at least one of the first information to the ninth information in the embodiments illustrated in FIG. 6, FIG. 15, or FIG. 27. For specific details, refer to the detailed descriptions in the method embodiments mentioned above, and no further elaboration will be provided herein.

Another possible design is that the communication apparatus 2800 is the communication device 3000 shown in FIG. 30. As illustrated in FIG. 30, the communication device 3000 includes a baseband chip 3010 and a radio frequency chip 3020. It can be understood that the communication device may be a chip system, for example, a chip system for a terminal device or a chip system for a network device. Furthermore, the communication device 3000 may further include an antenna 3030. The baseband chip 3010, the radio frequency chip 3020, and the antenna 3030 may communicate with each other through an internal connection path to transmit control and/or data signals.

An example is provided where the communication device 3000 is a terminal device. The functions of the baseband processor 3010 may be understood with reference to the example of the terminal device described above in conjunction with Figure 29, and will not be further elaborated. The radio frequency chip 3020 may be configured to output a bandpass signal based on the first OFDM baseband signal from the baseband processor 3010, and to perform power amplification on the bandpass signal to obtain a power-amplified bandpass signal.

For example, the radio frequency chip 3020 may include an upconversion module and a power amplifier. The upconversion module may be configured to output a bandpass signal based on the first OFDM baseband signal from the baseband chip 3010. The power amplifier may be configured to perform power amplification on the bandpass signal to obtain a power-amplified bandpass signal.

Optionally, the radio frequency chip 3020 further includes an input/output interface, which may be configured to send or receive signals. The input interface may be configured to receive signals, for example, receive signals from the baseband chip 3010. The output interface may be configured to send signals, for example, send signals after being processed by an upconversion module and a power amplifier.

The antenna 3030 may be configured to send out a bandpass signal amplified by power from the radio frequency chip 3020.

Optionally, the antenna 3030 may also be configured to send or receive at least one of the first information to the ninth information mentioned above.

It should be understood that the communication device 3000 may be configured to implement the functions performed by the terminal device in the foregoing method 600, for example, steps 601 to 606 in method 600; or the communication device 3000 may be configured to implement the functions performed by the terminal device in the foregoing method 1500, for example, steps 1501 to 1506 in method 1500.

In another example, the communication device 3000 is a network device. The antenna 3030 may be configured to receive a bandpass signal. The radio frequency chip 3020 may be configured to obtain a first OFDM baseband signal based on the bandpass signal. For functions of the baseband processor 3010, reference may be made to the example of the network device described above with reference to the description of FIG. 29, and details are not repeated herein.

For example, the radio frequency chip 3020 includes a downconversion module, which may be configured to perform downconversion on a bandpass signal received by the antenna 3030 to obtain a first OFDM baseband signal.

Optionally, the radio frequency chip 3020 further includes an input/output interface, which may be configured to receive or transmit signals. The input interface may be configured to receive a signal, for example, receive a bandpass signal from the antenna 3030; the output interface may be configured to transmit a signal, for example, send out the first OFDM baseband signal obtained through downconversion.

It should be understood that the communication device 3000 may be configured to implement the functions performed by the network device in the foregoing method 600, for example, steps 606 to 610 in method 600; or the communication device 3000 may be configured to implement the functions performed by the network device in the foregoing method 1500, for example, steps 1506 to 1510 in method 1500.

For more detailed descriptions of the baseband chip 3010, the radio frequency chip 3020, and the antenna 3030 mentioned above, one may directly refer to the relevant descriptions in any one of the embodiments illustrated in FIG. 6, FIG. 15, and FIG. 27, and no further details will be provided here.

In some embodiments of this application, a computer program product is further provided. When the computer program product runs on a processor, the method implemented by the terminal device in any one of the foregoing embodiments may be implemented, or the method implemented by the network in any one of the foregoing method embodiments may be implemented.

In some embodiments of this application, a computer-readable storage medium is further provided. The computer-readable storage medium includes computer instructions. When the computer instructions are run on a processor, the method implemented by the terminal device in any one of the foregoing embodiments may be implemented, or the method implemented by the network device in any one of the foregoing method embodiments may be implemented.

In some embodiments of this application, a communications system is further provided. The communications system includes the foregoing terminal device and network device, or the communications system may implement the method implemented by the terminal device and the method implemented by the network device in any one of the foregoing method embodiments.

It may be understood that the processor in embodiments of this application may be the following device or all or a part of a circuit for performing a processing function in the following device: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in the embodiments of this application may be implemented through hardware (such as a processing circuit), or may be implemented by a processing circuit executing software instructions. The software instructions may include corresponding software modules, which may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example of a storage medium is coupled to a processor, enabling the processor to read information from the storage medium and write information into the storage medium. Of course, the storage medium may also be a component of the processor. The processor and the storage medium may be located in an ASIC. In addition, the ASIC may be located in a network device or a terminal device. Certainly, the processor and the storage medium may also exist as discrete components in the network device or the terminal device.

In the foregoing embodiments, the embodiments may be implemented entirely or partially by software, hardware, firmware, or any combination thereof. When software is used to implement the embodiments, the embodiments may be implemented entirely or partially in the form of a computer program product. The computer program product includes one or more computer programs or instructions. When the computer program or the instruction is loaded and executed on a computer, the procedures or functions described in the embodiments of this application are performed entirely or partially. The computer may be a general-purpose computer, a dedicated computer, a computer network, a network device, user equipment, or another programmable apparatus. The computer program or the instruction may be stored in a computer-readable storage medium, or may be transmitted from one computer-readable storage medium to another computer-readable storage medium. For example, the computer program or the instruction may be transmitted from a website, computer, server, or data center to another website, computer, server, or data center in a wired or wireless manner. The computer-readable storage medium may be any usable medium accessible to the computer, or a data storage device, such as a server or a data center, integrating one or more usable media. The usable medium may be a magnetic medium, such as a floppy disk, a hard disk drive, or a magnetic tape; an optical medium, such as a digital video disc; or a semiconductor medium, such as a solid state disk.

In embodiments of this application, unless otherwise specified or there is a logical conflict, terms and/or descriptions in different embodiments are consistent and may be mutually referenced, and technical features in different embodiments may be combined based on an internal logical relationship thereof, to form a new embodiment.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be determined based on the protection scope of the claims.

## Claims

1. A communication method, comprising:
obtaining a first symbol sequence, wherein the first symbol sequence comprises N to-be-transmitted symbols, and N is a positive integer;
obtaining a second symbol sequence based on the first symbol sequence, where a symbol in the second symbol sequence is obtained by mapping (N+M) modulation symbols to resource elements REs, the (N+M) modulation symbols are obtained by modulating a third symbol sequence, the third symbol sequence includes the N to-be-transmitted symbols and M extension symbols in the first symbol sequence, the M extension symbols ensure that phases of the (N+M) modulation symbols obtained through the modulation are continuous, and a difference between a phase at a start position and a phase at an end position is an integer multiple of 2π, where M is an integer greater than or equal to zero;
generating a first orthogonal frequency division multiplexing OFDM baseband signal based on the second symbol sequence, wherein a time domain resource of the first OFDM baseband signal is an OFDM symbol.

2. The method according to claim 1, wherein the modulation is phase continuous modulation CPM or linear frequency modulation LFM.

3. The method according to claim 1 or 2, wherein the method further comprises:
sending the first OFDM baseband signal.

4. The method according to any one of claims 1 to 3, wherein a frequency domain resource of the first OFDM baseband signal comprises (N+M)×S subcarriers, each of the (N+M)×S subcarriers is used to transmit one frequency domain sample, the (N+M)×S frequency domain samples transmitted by the (N+M)×S subcarriers are obtained by performing a Fourier transform on (N+M)×S time domain samples, the (N+M)×S time domain samples are obtained by sampling the (N+M) modulation symbols, and S is a positive integer.

5. The method according to claim 4, wherein the (N+M)×S subcarriers are consecutive subcarriers; or the (N+M)×S subcarriers are in a comb shape, and subcarrier offsets between every two adjacent comb teeth are equal.

6. The method according to claim 5, wherein the (N+M)×S subcarriers are in a comb shape, and the method further comprises:
receiving or sending first information, wherein the first information is used to indicate the subcarrier offset.

7. The method according to any one of claims 4 to 6, wherein the method further comprises:
receiving or sending second information, wherein the second information is used to indicate the S.

8. The method according to any one of claims 1 to 7, wherein the method further comprises:
receiving third information, wherein the third information is used to indicate a length of a CP of the first OFDM baseband signal.

9. The method according to any one of claims 1 to 8, wherein the modulation is CPM, and the method further comprises:
receiving or sending fourth information, wherein the fourth information is used to indicate one or more of the following: a frequency pulse shaping function, a phase pulse shaping function, a modulation index, or an initial phase of the CPM.

10. The method according to any one of claims 1 to 8, wherein the modulation is LFM, and the method further comprises:
receiving or sending fourth information, wherein the fourth information is used to indicate a frequency modulation slope of the LFM.

11. The method according to any one of claims 1 to 10, wherein M is a positive integer, and the positions of the M extension symbols in the third symbol sequence are: before the N to-be-transmitted symbols, or after the N to-be-transmitted symbols, or the M extension symbols are continuously or discretely distributed among the N to-be-transmitted symbols.

12. The method according to any one of claims 1 to 11, wherein the method further comprises:
receiving or sending fifth information, wherein the fifth information is used to indicate the positions of the M extension symbols in the third symbol sequence, and/or
receiving or sending sixth information, wherein the sixth information is used to indicate M.

13. The method according to any one of claims 1 to 12, wherein a time domain resource of the first OFDM baseband signal is adjacent to a time domain resource of a second OFDM baseband signal, the time domain resource of the second OFDM baseband signal is located before the time domain resource of the first OFDM baseband signal, and the time domain resource of the second OFDM baseband signal is an OFDM symbol;
the second OFDM baseband signal is generated based on a fifth symbol sequence, the fifth symbol sequence is obtained through modulation based on a sixth symbol sequence, the sixth symbol sequence comprises P to-be-transmitted symbols and Q extension symbols, Q₁ extension symbols in the Q extension symbols are among the first (P+Q-K₂) symbols in the sixth symbol sequence, Q₂ extension symbols in the Q extension symbols are among the last K₂ symbols in the sixth symbol sequence, and the following condition is met: when the first (P+Q-K₂) symbols are modulated, a difference between a phase of an end position of the obtained modulated symbol sequence and a phase of a start position of the obtained modulated symbol sequence is an integer multiple of 2 π ; and when the last K₂ symbols are modulated, a difference between a phase of an end position of the obtained modulated symbol sequence and a phase of a start position of the obtained modulated symbol sequence is an integer multiple of 2 π, wherein P is a positive integer, Q, Q₁, and Q₂ are integers greater than or equal to 0, K₂ represents a length of a cyclic prefix CP of the second OFDM baseband signal, and K₂ is an integer greater than 1; and
M is an integer greater than 1, M₁ extension symbols of the M extension symbols are among the first (N+M-K₁) symbols in the third symbol sequence, M₂ extension symbols of the M extension symbols are among the last K₁ symbols in the third symbol sequence, and the following condition is met: a difference between a phase of an end position and a phase of a start position of a modulated symbol sequence obtained by performing the modulation on the first (N+M-K₁) symbols is an integer multiple of 2 π, so that a difference between an initial phase of the modulation used to obtain the first OFDM baseband signal and an initial phase of the modulation used to obtain the second OFDM baseband signal is an integer multiple of 2 π; where M = M₁ + M₂, M₁ and M₂ are both integers greater than or equal to 0, K₁ represents a length of a CP of the first OFDM baseband signal, and K₁ is an integer greater than 1.

14. The method according to any one of claims 1 to 13, wherein the method further comprises:
transmit a reference signal, wherein a time domain resource of the reference signal is one or more OFDM symbols, the time domain resource of the reference signal is different from the time domain resource of the first OFDM baseband signal, and a frequency domain resource of the reference signal is the same as the frequency domain resource of the second symbol sequence.

15. A baseband chip, comprising modules configured to implement the method according to claims 1 to 14, or the method according to claim 22 or 24 when depending on claims 1 to 14, or the method according to any one of claims 23 or 25 when depending on claims 1 to 14.

16. A communication device, comprising:
the baseband chip as claimed in claim 15;
a radio frequency chip, configured to obtain a passband signal based on a first OFDM baseband signal from the baseband chip, and perform power amplification on the passband signal to obtain a passband signal after power amplification.

17. The communication device according to claim 16, wherein the communication device further comprises:
an antenna, configured to send the band-passed signal amplified by the power, from the radio frequency chip.

18. The communication device according to claim 16 or 17, wherein the radio frequency chip comprises:
an up-conversion module, configured to perform direct frequency modulation on a carrier based on the first OFDM baseband signal to obtain the band-passed signal;
a power amplifier, configured to perform power amplification on the band-passed signal to obtain the band-passed signal amplified by the power.

19. The communication device according to claim 18, wherein the up-conversion module comprises a phase-locked loop, a voltage-controlled oscillator, or a numerically controlled oscillator.

20. The communication device according to claim 18 or 19, wherein the power amplifier is a non-linear power amplifier, and is configured to perform non-linear power amplification on the bandpass signal.

21. A communication method, comprising:
obtaining a first orthogonal frequency division multiplexing OFDM baseband signal, wherein a time domain resource of the first OFDM baseband signal is an OFDM symbol;
obtaining a fourth symbol sequence based on the first OFDM baseband signal, wherein the fourth symbol sequence comprises L modulation symbols, and L is a positive integer;
demodulating the fourth symbol sequence to obtain a third symbol sequence, wherein the third symbol sequence comprises N first symbols and M extension symbols, L=M+N, N is a positive integer less than or equal to L, and M is an integer greater than or equal to zero;
determining the positions of the M and the M extension symbols in the third symbol sequence;
obtaining the N first symbols from the third symbol sequence.

22. The method according to any one of claims 1 to 14 or 21, wherein the modulation is CPM, the M meets 1 ≤M≤max{U+2, U+V-1}, wherein V meets h=W/V, and W/V is a reduced fraction, wherein h is a modulation index of the CPM, U is a predefined value, and W, U, and V are positive integers.

23. The method according to claim 13, wherein the modulation is CPM, the M meets 2≤M≤2×max{U+2, U+V-1}, and Q meets 2≤Q≤2 × max{U+2, U+V-1}, wherein V meets h=W/V, and W/V is a reduced fraction, wherein h is a modulation index of the CPM, U is a predefined value, and W, U, and V are positive integers.

24. The method according to any one of claims 1 to 14, or 21, wherein the modulation is LFM, and M satisfies: 1≤M≤3.

25. The method according to claim 13, wherein the modulation is LFM, and M satisfies: 2≤M≤6; and Q satisfies: 2≤Q≤6.

26. A communication apparatus, comprising a module configured to implement the method according to any one of claim 21, or claim 22 or 24 when depending on claim 21.
